# EUROPEAN PATENT APPLICATION

(11) **EP 4 811 776 A1**
(43) Date of publication of application: **23.09.2026**
(21) Application number: 26165499.0
(22) Date of filing: 17.03.2026
(51) Int. Cl.: H04N 19/11, H04N 19/176, H04N 19/593

(54) **BLOCK VECTOR-BASED INTRA MODE DERIVATION WITH FUSION**

(30) Priority: 17.03.2025 US 202563772934 P
(71) Applicant: Comcast Cable Communications, LLC, Philadelphia, PA 19103 (US)
(72) Inventor: LEE, Jung Kyung, Philadelphia, 19103 (US); RUIZ COLL, Damian, Philadelphia, 19103 (US); BLESTEL, Médéric, Philadelphia, 19103 (US)
(74) Representative: V.O.

(57) **Abstract**

One or more block vectors (BVs) associated with a block of content may be determined. Reference blocks based on the BVs may be used to evaluate candidate prediction modes. A metric value may be determined for each of the candidate prediction modes. A subset of the candidate prediction modes may be selected based on the metric values. The selected prediction modes may be used to generate predicted blocks. A prediction block for the block may be determined by combining the predicted blocks. The block may be coded based on the prediction block.

## Description

### CROSS-REFERENCE TO RELATED APPLICATIONS

This application claims the benefit of U.S. Provisional Application No. 63/772,934 filed on March 17, 2025. The above referenced application is hereby incorporated by reference in its entirety.

### BACKGROUND

A computing device processes video for storage, transmission, reception, and/or display. Processing a video comprises encoding and decoding, for example, to reduce a data size associated with the video.

### SUMMARY

The following summary presents a simplified summary of certain features. The summary is not an extensive overview and is not intended to identify key or critical elements.

A video may comprise a sequence of pictures displayed consecutively. Samples within a picture may be coded (e.g., encoded and/or decoded). Coding (e.g., encoding and/or decoding) may include generating a prediction for a block of samples and coding the block based on the prediction. A prediction generated using a single intra prediction mode may not provide sufficient accuracy. Multiple intra prediction modes may be used to improve prediction accuracy. For example, one or more block vectors associated with a block may be determined. Reference blocks corresponding to the block vectors may be used to evaluate candidate intra prediction modes. A similarity metric (e.g., a cost metric) may be determined between the reference blocks and predicted blocks generated using the candidate intra prediction modes. Based on the similarity metric, a plurality of intra prediction modes may be selected. The selected intra prediction modes may be used to generate predicted blocks. A prediction block for the block may be determined by combining the predicted blocks. The block may be coded based on the prediction block. By selectively combining predictions generated using multiple intra prediction modes, prediction accuracy may be improved.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows an example video coding/decoding system.
FIG. 2 shows an example encoder.
FIG. 3 shows an example decoder.
FIG. 4 shows an example quadtree partitioning of a coding tree block (CTB).
FIG. 5 shows an example quadtree corresponding to the example quadtree partitioning of the CTB in FIG. 4.
FIG. 6 shows example binary tree and ternary tree partitions.
FIG. 7 shows an example of combined quadtree and multi-type tree partitioning of a CTB.
FIG. 8 shows an example tree corresponding to the combined quadtree and multi-type tree partitioning of the CTB shown in FIG. 7.
FIG. 9 shows an example set of reference samples determined for intra prediction of a current block.
FIG. 10A and FIG. 10B show example intra prediction modes.
FIG. 11 shows an example current block and corresponding reference samples.
FIG. 12 shows an example application of an intra prediction mode for prediction of a current block.
FIG. 13A shows an example of inter prediction.
FIG. 13B shows an example motion vector.
FIG. 14 shows an example of bi-prediction.
FIG. 15A shows example spatial candidate neighboring blocks for a current block.
FIG. 15B shows example temporal, co-located blocks for a current block.
FIG. 16 shows an example of intra block copy (IBC).
FIG. 17A shows an example of intra template matching prediction (IntraTMP).
FIG. 17B shows an example method for constructing IntraTMP BVP candidates.
FIG. 18 shows an example of decoder-side intra mode derivation (DIMD).
FIG. 19A shows an example of template-based intra mode derivation (TIMD) for coding a current block.
FIG. 19B shows an example of template-based intra mode derivation (TIMD).
FIG. 20 shows an example of determining the intra coding mode for a block using block vector-based intra mode derivation (BVIMD).
FIG. 21 shows an example of BVIMD.
FIG. 22 shows an example of a BVIMD fusion mode.
FIG. 23 shows an example method for coding a block.
FIG. 24 shows an example computer system in which examples of the present disclosure may be implemented.
FIG. 25 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of video encoding and decoding systems, which may be used in the technical field of video data storage and/or transmission/reception. More particularly, the technology disclosed herein may relate to video compression as used in encoding and/or decoding devices and/or systems.

A video sequence, comprising multiple pictures/frames, may be represented in digital form for storage and/or transmission. Representing a video sequence in digital form may require a large quantity of bits. Large data sizes that may be associated with video sequences may require significant resources for storage and/or transmission. Video encoding may be used to compress a size of a video sequence for more efficient storage and/or transmission. Video decoding may be used to decompress a compressed video sequence for display and/or other forms of consumption.

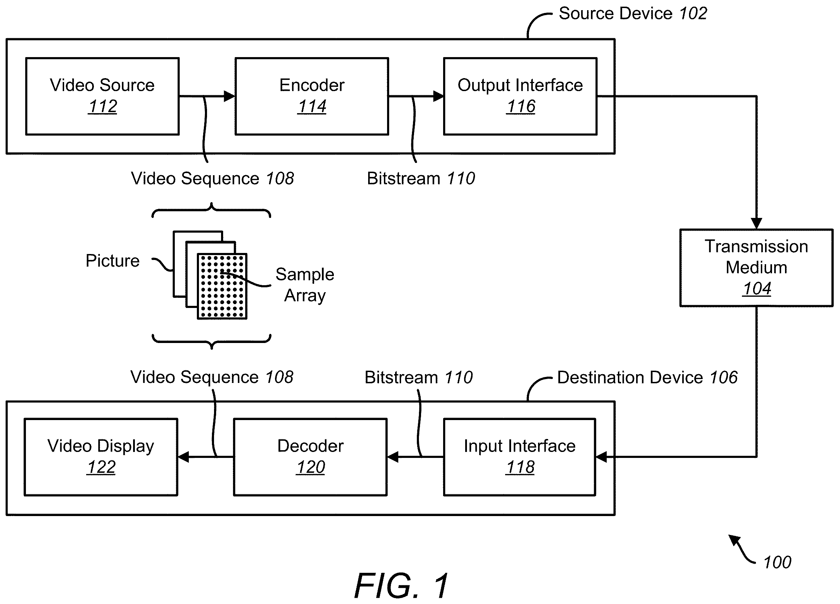

FIG. 1 shows an example video coding/decoding system. Video coding/decoding system 100 may comprise a source device 102, a transmission medium 104, and a destination device 106. The source device 102 may encode a video sequence 108 into a bitstream 110 for more efficient storage and/or transmission. The source device 102 may store and/or send/transmit the bitstream 110 to the destination device 106 via the transmission medium 104. The destination device 106 may decode the bitstream 110 to display the video sequence 108. The destination device 106 may receive the bitstream 110 from the source device 102 via the transmission medium 104. The source device 102 and/or the destination device 106 may be any of a plurality of different devices (e.g., a desktop computer, laptop computer, tablet computer, smart phone, wearable device, television, camera, video gaming console, set-top box, video streaming device, etc.).

The source device 102 may comprise (e.g., for encoding the video sequence 108 into the bitstream 110) one or more of a video source 112, an encoder 114, and/or an output interface 116. The video source 112 may provide and/or generate the video sequence 108 based on a capture of a natural scene and/or a synthetically generated scene. A synthetically generated scene may be a scene comprising computer generated graphics and/or screen content. The video source 112 may comprise a video capture device (e.g., a video camera), a video archive comprising previously captured natural scenes and/or synthetically generated scenes, a video feed interface to receive captured natural scenes and/or synthetically generated scenes from a video content provider, and/or a processor to generate synthetic scenes.

A video sequence, such as video sequence 108, may comprise a series of pictures (also referred to as frames). A video sequence may achieve an impression of motion based on successive presentation of pictures of the video sequence using a constant time interval or variable time intervals between the pictures. A picture may comprise one or more sample arrays of intensity values. The intensity values may be taken (e.g., measured, determined, provided) at a series of regularly spaced locations within a picture. A color picture may comprise (e.g., typically comprises) a luminance sample array and two chrominance sample arrays. The luminance sample array may comprise intensity values representing the brightness (e.g., luma component, Y) of a picture. The chrominance sample arrays may comprise intensity values that respectively represent the blue and red components of a picture (e.g., chroma components, Cb and Cr) separate from the brightness. Other color picture sample arrays may be possible based on different color schemes (e.g., a red, green, blue (RGB) color scheme). A pixel, in a color picture, may refer to/comprise/be associated with all intensity values (e.g., luma component, chroma components), for a given location, in the sample arrays used to represent color pictures. For example, three sample arrays may be used for one luma component and two chroma components, respectively. A monochrome picture may comprise a single, luminance sample array. A pixel, in a monochrome picture, may refer to/comprise/be associated with the intensity value (e.g., luma component) at a given location in the single, luminance sample array used to represent monochrome pictures.

The encoder 114 may encode the video sequence 108 into the bitstream 110. The encoder 114 may apply/use (e.g., to encode the video sequence 108) one or more prediction techniques to reduce redundant information in the video sequence 108. Redundant information may comprise information that may be predicted at a decoder and need not be transmitted to the decoder for accurate decoding of the video sequence 108. For example, the encoder 114 may apply spatial prediction (e.g., intra-frame or intra prediction), temporal prediction (e.g., inter-frame prediction or inter prediction), inter-layer prediction, and/or other prediction techniques to reduce redundant information in the video sequence 108. The encoder 114 may partition pictures comprising the video sequence 108 into rectangular regions referred to as blocks, for example, prior to applying one or more prediction techniques. The encoder 114 may then encode a block using the one or more of the prediction techniques.

The encoder 114 may search for a block similar to the block being encoded in another picture (e.g., a reference picture) of the video sequence 108, for example, for temporal prediction. The block determined during the search (e.g., a prediction block) may then be used to predict the block being encoded. The encoder 114 may form a prediction block based on data from reconstructed neighboring samples of the block to be encoded within the same picture of the video sequence 108, for example, for spatial prediction. A reconstructed sample may be a sample that was encoded and then decoded. The encoder 114 may determine a prediction error (e.g., a residual) based on the difference between a block being encoded and a prediction block. The prediction error may represent non-redundant information that may be sent/transmitted to a decoder for accurate decoding of the video sequence 108.

The encoder 114 may apply a transform to the prediction error (e.g. using a discrete cosine transform (DCT), or any other transform) to generate transform coefficients. The encoder 114 may form the bitstream 110 based on the transform coefficients and other information used to determine prediction blocks using/based on prediction types, motion vectors, and/or prediction modes. The encoder 114 may perform one or more of quantization and entropy coding of the transform coefficients and/or the other information used to determine the prediction blocks, for example, prior to or before forming the bitstream 110. The quantization and/or the entropy coding may further reduce the quantity of bits needed to store and/or transmit the video sequence 108.

The output interface 116 may be configured to write and/or store the bitstream 110 onto the transmission medium 104 for transmission to the destination device 106. Also or alternatively, the output interface 116 may be configured to send/transmit, upload, and/or stream the bitstream 110 to the destination device 106 via the transmission medium 104. The output interface 116 may comprise a wired and/or a wireless transmitter configured to send/transmit, upload, and/or stream the bitstream 110 in accordance with one or more proprietary, open-source, and/or standardized communication protocols (e.g., Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol).

The transmission medium 104 may comprise wireless, wired, and/or computer readable medium. For example, the transmission medium 104 may comprise one or more wires, cables, air interfaces, optical discs, flash memory, and/or magnetic memory. Also or alternatively, the transmission medium 104 may comprise one or more networks (e.g., the internet) or file servers configured to store and/or send/transmit encoded video data.

The destination device 106 may decode the bitstream 110 into the video sequence 108 for display. The destination device 106 may comprise one or more of an input interface 118, a decoder 120, and/or a video display 122. The input interface 118 may be configured to read the bitstream 110 stored on the transmission medium 104 by the source device 102. Also or alternatively, the input interface 118 may be configured to receive, download, and/or stream the bitstream 110 from the source device 102 via the transmission medium 104. The input interface 118 may comprise a wired and/or a wireless receiver configured to receive, download, and/or stream the bitstream 110 in accordance with one or more proprietary, open-source, standardized communication protocols, and/or any other communication protocol (e.g., such as referenced herein).

The decoder 120 may decode the video sequence 108 from the encoded bitstream 110. The decoder 120 may generate prediction blocks for pictures of the video sequence 108 in a similar manner as the encoder 114 and determine the prediction errors for the blocks, for example, to decode the video sequence 108. The decoder 120 may generate the prediction blocks using/based on prediction types, prediction modes, and/or motion vectors received in the bitstream 110. The decoder 120 may determine the prediction errors using the transform coefficients received in the bitstream 110. The decoder 120 may determine the prediction errors by weighting transform basis functions using the transform coefficients. The decoder 120 may combine the prediction blocks and the prediction errors to decode the video sequence 108. The video sequence 108 at the destination device 106 may be, or may not necessarily be, the same video sequence sent, such as the video sequence 108 as sent by the source device 102. The decoder 120 may decode a video sequence that approximates the video sequence 108, for example, because of lossy compression of the video sequence 108 by the encoder 114 and/or errors introduced into the encoded bitstream 110 during transmission to the destination device 106.

The video display 122 may display the video sequence 108 to a user. The video display 122 may comprise a cathode rate tube (CRT) display, a liquid crystal display (LCD), a plasma display, a light emitting diode (LED) display, and/or any other display device suitable for displaying the video sequence 108.

The video encoding/decoding system 100 is merely an example and video encoding/decoding systems different from the video encoding/decoding system 100 and/or modified versions of the video encoding/decoding system 100 may perform the methods and processes as described herein. For example, the video encoding/decoding system 100 may comprise other components and/or arrangements. The video source 112 may be external to the source device 102.The video display device 122 may be external to the destination device 106 or omitted altogether (e.g., if the video sequence 108 is intended for consumption by a machine and/or storage device). The source device 102 may further comprise a video decoder and the destination device 104 may further comprise a video encoder. For example, the source device 102 may be configured to further receive an encoded bit stream from the destination device 106 to support two-way video transmission between the devices.

The encoder 114 and/or the decoder 120 may operate according to one or more proprietary or industry video coding standards. For example, the encoder 114 and/or the decoder 120 may operate in accordance with one or more proprietary, open-source, and/or standardized protocols (e.g., International Telecommunications Union Telecommunication Standardization Sector (ITU-T) H.263, ITU-T H.264 and Moving Picture Expert Group (MPEG)-4 Visual (also known as Advanced Video Coding (AVC)), ITU-T H.265 and MPEG-H Part 2 (also known as High Efficiency Video Coding (HEVC)), ITU-T H.265 and MPEG-I Part 3 (also known as Versatile Video Coding (VVC)), the WebM VP8 and VP9 codecs, and/or AOMedia Video 1 (AV1), and/or any other video coding protocol).

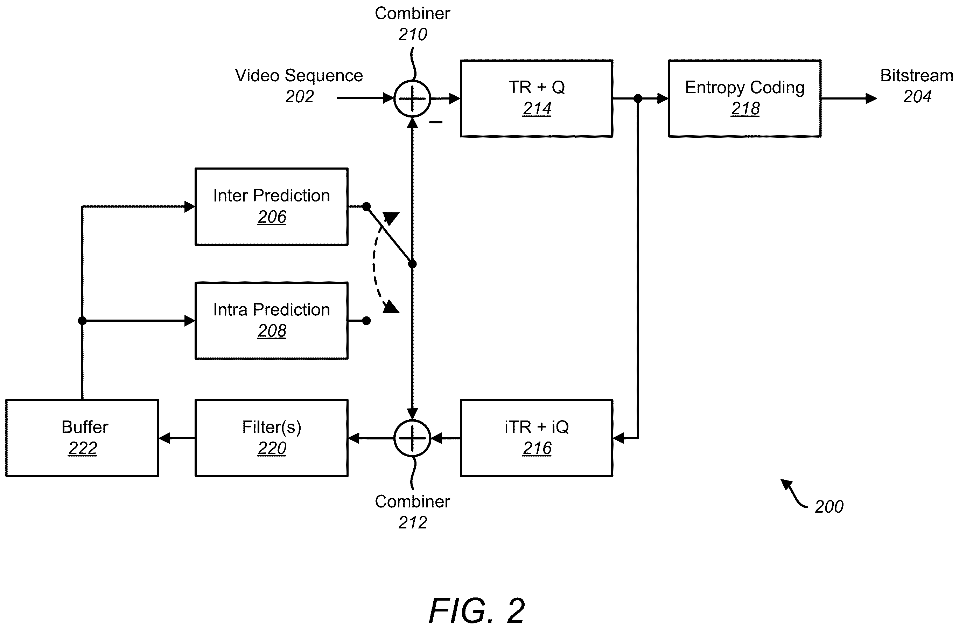

FIG. 2 shows an example encoder. The encoder 200 as shown in FIG. 2 may implement one or more processes described herein. The encoder 200 may encode a video sequence 202 into a bitstream 204 for more efficient storage and/or transmission. The encoder 200 may be implemented in the video coding/decoding system 100 as shown in FIG. 1 (e.g., as the encoder 114) or in any computing, communication, or electronic device (e.g., desktop computer, laptop computer, tablet computer, smart phone, wearable device, television, camera, video gaming console, set-top box, video streaming device, etc.). The encoder 200 may comprise one or more of an inter prediction unit 206, an intra prediction unit 208, combiners 210 and 212, a transform and quantization unit (TR + Q) 214, an inverse transform and quantization unit (iTR + iQ) 216, an entropy coding unit 218, one or more filters 220, and/or a buffer 222.

The encoder 200 may partition pictures (e.g., frames) of (e.g., comprising) the video sequence 202 into blocks and encode the video sequence 202 on a block-by-block basis. The encoder 200 may perform/apply a prediction technique on a block being encoded using either the inter prediction unit 206 or the intra prediction unit 208. The inter prediction unit 206 may perform inter prediction by searching for a block similar to the block being encoded in another, reconstructed picture (e.g., a reference picture) of the video sequence 202. The reconstructed picture may be or refer to a picture that was encoded and then decoded. The block determined during the search (e.g., a prediction block) may then be used to predict the block being encoded to remove redundant information. The inter prediction unit 206 may exploit temporal redundancy or similarities in scene content from picture to picture in the video sequence 202 to determine the prediction block. For example, scene content between pictures of the video sequence 202 may be similar except for differences due to motion and/or affine transformation of the screen content over time.

The intra prediction unit 208 may perform intra prediction by forming a prediction block based on data from reconstructed neighboring samples of the block to be encoded within the same picture of the video sequence 202. The reconstructed sample may be or refer to a sample that was encoded and then decoded. The intra prediction unit 208 may exploit spatial redundancy or similarities in scene content within a picture of the video sequence 202 to determine the prediction block. For example, the texture of a region of scene content in a picture may be similar to the texture in the immediate surrounding area of the region of the scene content in the same picture.

The combiner 210 may determine a prediction error (e.g., a residual) based on the difference between the block being encoded and the prediction block. The prediction error may represent non-redundant information that may be sent/transmitted to a decoder for accurate decoding of the video sequence 202.

The transform and quantization unit (TR + Q) 214 may transform and quantize the prediction error. The transform and quantization unit 214 may transform the prediction error into transform coefficients by applying, for example, a DCT to reduce correlated information in the prediction error. The transform and quantization unit 214 may quantize the coefficients by mapping data of the transform coefficients to a predefined set of representative values. The transform and quantization unit 214 may quantize the coefficients to reduce irrelevant information in the bitstream 204. The Irrelevant information may be information that may be removed from the coefficients without producing visible and/or perceptible distortion in the video sequence 202 after decoding (e.g., at a receiving device).

The entropy coding unit 218 may apply one or more entropy coding methods to the quantized transform coefficients to further reduce the bit rate. For example, the entropy coding unit 218 may apply context adaptive variable length coding (CAVLC), context adaptive binary arithmetic coding (CABAC), and/or syntax-based context-based binary arithmetic coding (SBAC). The entropy coded coefficients may be packed to form the bitstream 204.

The inverse transform and quantization unit (iTR + iQ) 216 may inverse quantize and inverse transform the quantized transform coefficients to determine a reconstructed prediction error. The combiner 212 may combine the reconstructed prediction error with the prediction block to form a reconstructed block. The filter(s) 220 may filter the reconstructed block, for example, using a deblocking filter and/or a sample-adaptive offset (SAO) filter. The buffer 222 may store the reconstructed block for prediction of one or more other blocks in the same and/or different picture of the video sequence 202.

The encoder 200 may further comprise an encoder control unit. The encoder control unit may be configured to control one or more units of the encoder 200 as shown in FIG. 2. The encoder control unit may control the one or more units of the encoder 200 such that the bitstream 204 may be generated in conformance with the requirements of one or more proprietary coding protocols, industry video coding standards, and/or any other video cording protocol. For example, the encoder control unit may control the one or more units of the encoder 200 such that bitstream 204 may be generated in conformance with one or more of ITU-T H.263, AVC, HEVC, VVC, VP8, VP9, AV1, and/or any other video coding standard/format.

The encoder control unit may be configured to attempt to minimize (or reduce) the bitrate of bitstream 204 and/or maximize (or increase) the reconstructed video quality (e.g., within the constraints of a proprietary coding protocol, industry video coding standard, and/or any other video cording protocol). For example, the encoder control unit may be configured to attempt to minimize or reduce the bitrate of bitstream 204 such that the reconstructed video quality does not fall below a certain level/threshold, and/or to maximize or increase the reconstructed video quality such that the bit rate (or bitrate) of bitstream 204 does not exceed a certain level/threshold. The encoder control unit may determine/control one or more of: partitioning of the pictures of the video sequence 202 into blocks, whether a block is inter predicted by the inter prediction unit 206 or intra predicted by the intra prediction unit 208, a motion vector for inter prediction of a block, an intra prediction mode among a plurality of intra prediction modes for intra prediction of a block, filtering performed by the filter(s) 220, and/or one or more transform types and/or quantization parameters applied by the transform and quantization unit 214. The encoder control unit may determine/control one or more of the above based on a rate-distortion measure for a block or picture being encoded. The encoder control unit may determine/control one or more of the above to reduce the rate-distortion measure for a block or picture being encoded.

The prediction type used to encode a block (intra or inter prediction), prediction information of the block (intra prediction mode if intra predicted, motion vector, etc.), and/or transform and/or quantization parameters, may be sent to the entropy coding unit 218 to be further compressed (e.g., to reduce the bit rate). For example, the entropy coding unit 218 may use/apply context adaptive variable length coding (CAVLC), context adaptive binary arithmetic coding (CABAC), and/or syntax-based context-based binary arithmetic coding (SBAC) to achieve further compression. The prediction type, prediction information, and/or transform and/or quantization parameters may be packed with the prediction error to form the bitstream 204.

The encoder 200 is merely an example and encoders different from the encoder 200 and/or modified versions of the encoder 200 may perform the methods and processes as described herein. For example, the encoder 200 may comprise other components and/or arrangements. One or more of the components shown in FIG. 2 may be optionally included in the encoder 200 (e.g., the entropy coding unit 218 and/or the filters(s) 220).

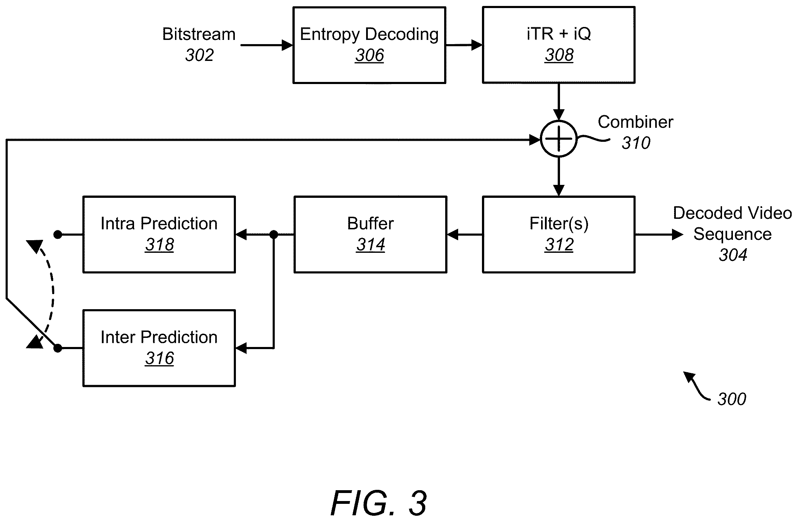

FIG. 3 shows an example decoder. A decoder 300 as shown in FIG. 3 may implement one or more processes described herein. The decoder 300 may decode a bitstream 302 into a decoded video sequence 304 for display and/or some other form of consumption. The decoder 300 may be implemented in the video encoding/decoding system 100 in FIG. 1 and/or in a computing, communication, or electronic device (e.g., desktop computer, laptop computer, tablet computer, smart phone, wearable device, television, camera, video gaming console, set-top box, and/or video streaming device). The decoder 300 may comprise an entropy decoding unit 306, an inverse transform and quantization (iTR + iQ) unit 308, a combiner 310, one or more filters 312, a buffer 314, an inter prediction unit 316, and/or an intra prediction unit 318.

The decoder 300 may comprise a decoder control unit configured to control one or more units of decoder 300. The decoder control unit may control the one or more units of decoder 300 such that the bitstream 302 is decoded in conformance with the requirements of one or more proprietary coding protocols, industry video coding standards, and/or any other communication protocol. For example, the decoder control unit may control the one or more units of decoder 300 such that the bitstream 302 is decoded in conformance with one or more of ITU-T H.263, AVC, HEVC, VVC, VP8, VP9, AV1, and/or any other video coding standard/format.

The decoder control unit may determine/control one or more of: whether a block is inter predicted by the inter prediction unit 316 or intra predicted by the intra prediction unit 318, a motion vector for inter prediction of a block, an intra prediction mode among a plurality of intra prediction modes for intra prediction of a block, filtering performed by the filter(s) 312, and/or one or more inverse transform types and/or inverse quantization parameters to be applied by the inverse transform and quantization unit 308. One or more of the control parameters used by the decoder control unit may be packed in bitstream 302.

The Entropy decoding unit 306 may entropy decode the bitstream 302. For example, the entropy decoding unit 306 may use/apply CAVLC, CABAC, and SBAC to decompress the prediction type used to encode a block (intra or inter prediction), prediction information of the block (intra prediction mode if intra predicted, motion vector, etc.), and transform and quantization parameters. The inverse transform and quantization unit 308 may inverse quantize and/or inverse transform the quantized transform coefficients to determine a decoded prediction error. The combiner 310 may combine the decoded prediction error with a prediction block to form a decoded block. The prediction block may be generated by the intra prediction unit 318 or the inter prediction unit 316 (e.g., as described above with respect to encoder 200 in FIG 2). The filter(s) 312 may filter the decoded block, for example, using a deblocking filter and/or a sample-adaptive offset (SAO) filter. The buffer 314 may store the decoded block for prediction of one or more other blocks in the same and/or different picture of the video sequence in the bitstream 302. The decoded video sequence 304 may be output from the filter(s) 312 as shown in FIG. 3.

The decoder 300 is merely an example and decoders different from the decoder 300 and/or modified versions of the decoder 300 may perform the methods and processes as described herein. For example, the decoder 300 may have other components and/or arrangements. One or more of the components shown in FIG. 3 may be optionally included in the decoder 300 (e.g., the entropy decoding unit 306 and/or the filters(s) 312).

Although not shown in FIGS. 2 and 3, each of the encoder 200 and the decoder 300 may further comprise an intra block copy unit in addition to inter prediction and intra prediction units. The intra block copy unit may perform/operate similar to an inter prediction unit but may predict blocks within the same picture. For example, the intra block copy unit may exploit repeated patterns that appear in screen content. The screen content may include computer generated text, graphics, animation, etc.

Video encoding and/or decoding may be performed on a block-by-block basis. The process of partitioning a picture into blocks may be adaptive based on the content of the picture. For example, larger block partitions may be used in areas of a picture with higher levels of homogeneity to improve coding efficiency.

A picture (e.g., in HEVC, or any other coding standard/format) may be partitioned into non-overlapping square blocks, which may be referred to as coding tree blocks (CTBs). The CTBs may comprise samples of a sample array. A CTB may have a size of 2nx2n samples, where n may be specified by a parameter of the encoding system. For example, n may be 4, 5, 6, or any other value. A CTB may have any other size. A CTB may be further partitioned by a recursive quadtree partitioning into coding blocks (CBs) of half vertical and half horizontal size. The CTB may form the root of the quadtree. A CB that is not split further as part of the recursive quadtree partitioning may be referred to as a leaf CB of the quadtree, and otherwise may be referred to as a non-leaf CB of the quadtree. A CB may have a minimum size specified by a parameter of the encoding system. For example, a CB may have a minimum size of 4x4, 8x8, 16x16, 32x32, 64x64 samples, or any other minimum size. A CB may be further partitioned into one or more prediction blocks (PBs) for performing inter and/or intra prediction. A PB may be a rectangular block of samples on which the same prediction type/mode may be applied. A CB may be further partitioned into intra sub-partitions (ISP) where the reconstructed samples of each sub-partition may be available to generate the prediction of the next sub-partition. For example, a CB may be split into 2 to 4 sub-partitions. For transformations, a CB may be partitioned into one or more transform blocks (TBs). A TB may be a rectangular block of samples that may determine/indicate an applied transform size.

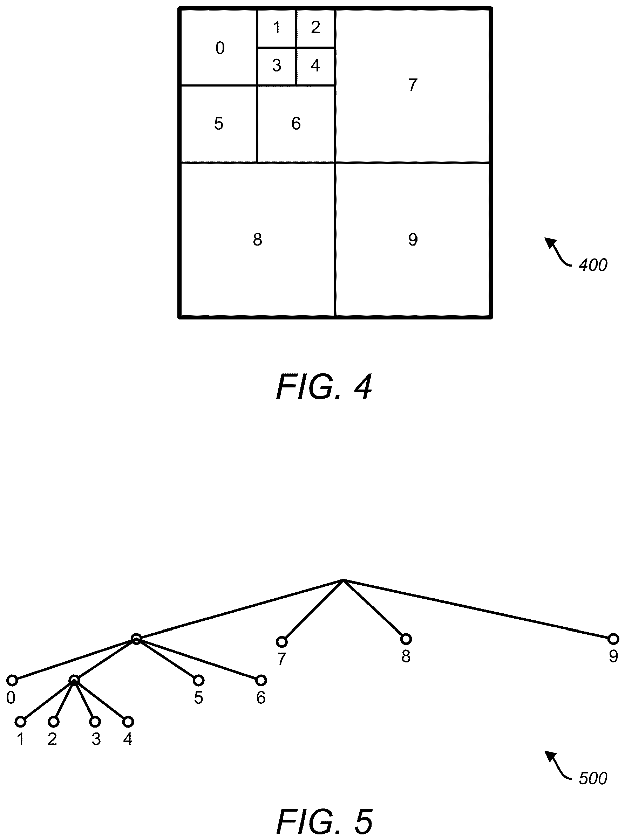

FIG. 4 shows an example quadtree partitioning of a CTB. FIG. 5 shows an example quadtree corresponding to the example quadtree partitioning of the CTB 400 in FIG. 4. As shown in the examples of FIGS. 4 and 5, the CTB 400 may first be partitioned into four CBs of half vertical and half horizontal size. Three of the resulting CBs of the first level partitioning of CTB 400 may be leaf CBs. The three leaf CBs of the first level partitioning of CTB 400 are respectively labeled 7, 8, and 9 in FIGS. 4 and 5. The non-leaf CB of the first level partitioning of CTB 400 may be partitioned into four sub-CBs of half vertical and half horizontal size. Three of the resulting sub-CBs of the second level partitioning of CTB 400 may be leaf CBs. The three leaf CBs of the second level partitioning of CTB 400 are respectively labeled 0, 5, and 6 in FIGS. 4 and 5. The non-leaf CB of the second level partitioning of CTB 400 may be partitioned into four leaf CBs of half vertical and half horizontal size. The four leaf CBs may be respectively labeled 1, 2, 3, and 4 in FIGS. 4 and 5.

The CTB 400 of FIG. 4 may be partitioned into 10 leaf CBs respectively labeled 0-9, and/or any other quantity of leaf CBs. The 10 leaf CBs may correspond to 10 CB leaf nodes (e.g., 10 CB leaf nodes of the quadtree 500 as shown in FIG. 5). In other examples, a CTB may be partitioned into a different number of leaf CBs. The resulting quadtree partitioning of the CTB 400 may be scanned using a z-scan (e.g., left-to-right, top-to-bottom) to form the sequence order for encoding/decoding the CB leaf nodes. A numeric label (e.g., indicator, index) of each CB leaf node in FIGS. 4 and 5 may correspond to the sequence order for encoding/decoding. For example, CB leaf node 0 may be encoded/decoded first and CB leaf node 9 may be encoded/decoded last. Although not shown in FIGS. 4 and 5, each CB leaf node may comprise one or more PBs and/or TBs.

A picture, in VVC (or in any other coding standard/format), may be partitioned in a similar manner (such as in HEVC). A picture may be first partitioned into non-overlapping square CTBs. The CTBs may then be partitioned, using a recursive quadtree partitioning, into CBs of half vertical and half horizontal size. A quadtree leaf node (e.g., in VVC) may be further partitioned by a binary tree or ternary tree partitioning (or any other partitioning) into CBs of unequal sizes.

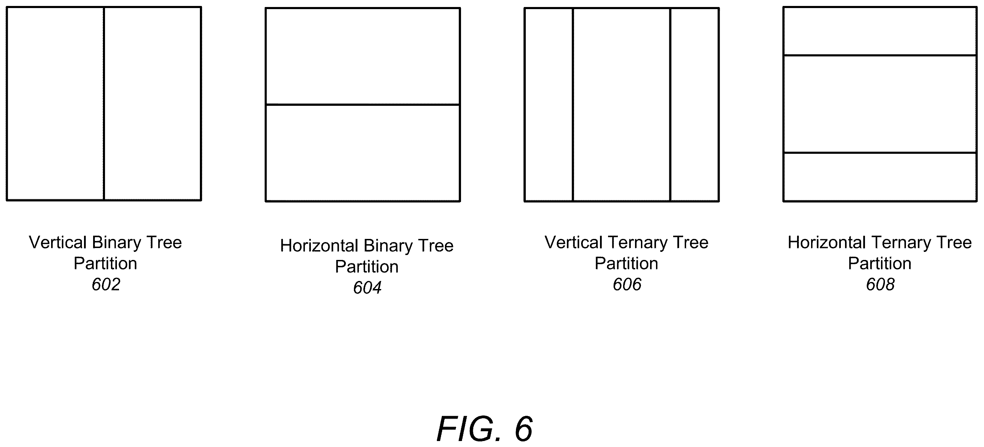

FIG. 6 shows example binary tree and ternary tree partitions. A binary tree partition may divide a parent block in half in either a vertical direction 602 or a horizontal direction 604. The resulting partitions may be half in size as compared to the parent block. The resulting partitions may correspond to sizes that are less than and/or greater than half of the parent block size. A ternary tree partition may divide a parent block into three parts in either a vertical direction 606 or a horizontal direction 608. FIG. 6 shows an example in which the middle partition may be twice as large as the other two end partitions in the ternary tree partitions. In other examples, partitions may be of other sizes relative to each other and to the parent block. Binary and ternary tree partitions are examples of multi-type tree partitioning. Multi-type tree partitions may comprise partitioning a parent block into other quantities of smaller blocks. The block partitioning strategy (e.g., in VVC) may be referred to as a combination of quadtree and multi-type tree partitioning (quadtree + multi-type tree partitioning) because of the addition of binary and/or ternary tree partitioning to quadtree partitioning.

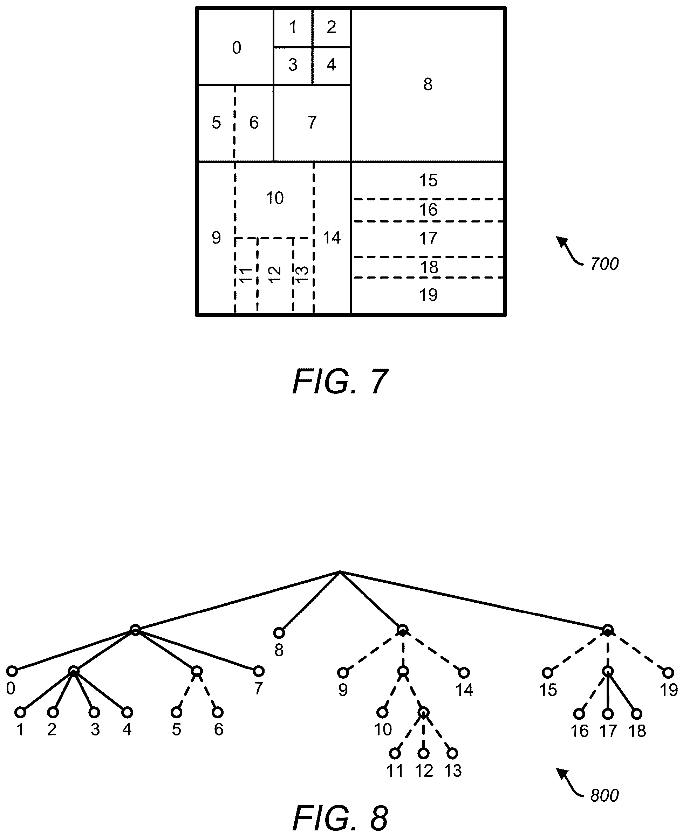

FIG. 7 shows an example of combined quadtree and multi-type tree partitioning of a CTB. FIG. 8 shows an example tree corresponding to the combined quadtree and multi-type tree partitioning of the CTB 700 shown in FIG. 7. In both FIGS. 7 and 8, quadtree splits are shown in solid lines and multi-type tree splits are shown in dashed lines. For ease of explanation, the CTB 700 is shown with the same quadtree partitioning as the CTB 400 described in FIG. 4, and a description of the quadtree partitioning of the CTB 700 (similar to that for CTB 400) is omitted. The quadtree partitioning of the CTB 700 is merely an example and a CTB may be quadtree partitioned in a manner different from the CTB 700. Additional multi-type tree partitions of the CTB 700 may be made relative to three leaf CBs shown in FIG. 4. The three leaf CBs in FIG. 4 that are shown in FIG. 7 as being further partitioned may be leaf CBs 5, 8, and 9. The three leaf CBs may be further partitioned using one or more binary and/or ternary tree partitions.

The leaf CB 5 of FIG. 4 may be partitioned into two CBs based on a vertical binary tree partitioning. The two resulting CBs may be leaf CBs respectively labeled 5 and 6 in FIGS. 7 and 8. The leaf CB 8 of FIG. 4 may be partitioned into three CBs based on a vertical ternary tree partition. Two of the three resulting CBs may be leaf CBs respectively labeled 9 and 14 in FIGS. 7 and 8. The remaining, non-leaf CB may be partitioned first into two CBs based on a horizontal binary tree partition. One of the two CBs may be a leaf CB labeled 10. The other of the two CBs may be further partitioned into three CBs based on a vertical ternary tree partition. The resulting three CBs may be leaf CBs respectively labeled 11, 12, and 13 in FIGS. 7 and 8. The leaf CB 9 of FIG. 4 may be partitioned into three CBs based on a horizontal ternary tree partition. Two of the three CBs may be leaf CBs respectively labeled 15 and 19 in FIGS. 7 and 8. The remaining, non-leaf CB may be partitioned into three CBs based on another horizontal ternary tree partition. The resulting three CBs may all be leaf CBs respectively labeled 16, 17, and 18 in FIGS. 7 and 8.

Altogether, the CTB 700 may be partitioned into 20 leaf CBs respectively labeled 0-19. The 20 leaf CBs may correspond to 20 leaf nodes (e.g., 20 leaf nodes of the tree 800 shown in FIG. 8). The resulting combination of quadtree and multi-type tree partitioning of the CTB 700 may be scanned using a z-scan (left-to-right, top-to-bottom) to form the sequence order for encoding/decoding the CB leaf nodes. A numeric label of each CB leaf node in FIGS. 7 and 8 may correspond to the sequence order for encoding/decoding, with CB leaf node 0 encoded/decoded first and CB leaf node 19 encoded/decoded last. Although not shown in FIGS. 7 and 8, it should be noted that each CB leaf node may comprise one or more PBs and/or TBs.

A coding standard/format (e.g., HEVC, VVC, or any other coding standard/format) may define various units (e.g., in addition to specifying various blocks (e.g., CTBs, CBs, PBs, TBs)). Blocks may comprise a rectangular area of samples in a sample array. Units may comprise the collocated blocks of samples from the different sample arrays (e.g., luma and chroma sample arrays) that form a picture as well as syntax elements and prediction data of the blocks. A coding tree unit (CTU) may comprise the collocated CTBs of the different sample arrays and may form a complete entity in an encoded bit stream (or bitstream). A coding unit (CU) may comprise the collocated CBs of the different sample arrays and syntax structures used to code the samples of the CBs. A prediction unit (PU) may comprise the collocated PBs of the different sample arrays and syntax elements used to predict the PBs. A transform unit (TU) may comprise TBs of the different samples arrays and syntax elements used to transform the TBs.

A block may refer to any of a CTB, CB, PB, TB, CTU, CU, PU, and/or TU (e.g., in the context of HEVC, VVC, or any other coding format/standard). A block may be used to refer to similar data structures in the context of any video coding format/standard/protocol. For example, a block may refer to a macroblock in the AVC standard, a macroblock or a sub-block in the VP8 coding format, a superblock or a sub-block in the VP9 coding format, and/or a superblock or a sub-block in the AV1 coding format.

Samples of a block to be encoded (e.g., a current block) may be predicted from samples in a line of samples immediately adjacent to the current block, for example, in intra prediction. For example, the line of samples may include samples of the column immediately adjacent to the left-most column of the current block and samples of the row immediately adjacent to the top-most row of the current block. The samples from the immediately adjacent column and row may be jointly referred to as reference samples. Each sample of the current block may be predicted (e.g., in an intra prediction mode) by projecting the position of the sample in the current block in a given direction to a point along the reference samples. The sample may be predicted by interpolating between the two closest reference samples of the projection point if the projection does not fall directly on a reference sample. A prediction error (e.g., a residual) may be determined for the current block based on differences between the predicted sample values and the original sample values of the current block.

Predicting samples and determining a prediction error based on a difference between the predicted samples and original samples may be performed (e.g., at an encoder) for a plurality of different intra prediction modes (e.g., including non-directional intra prediction modes). The encoder may select one of the plurality of intra prediction modes and its corresponding prediction error to encode the current block. The encoder may send an indication of the selected prediction mode and its corresponding prediction error to a decoder for decoding of the current block. The decoder may decode the current block by predicting the samples of the current block, using the intra prediction mode indicated by the encoder, and/or combining the predicted samples with the prediction error.

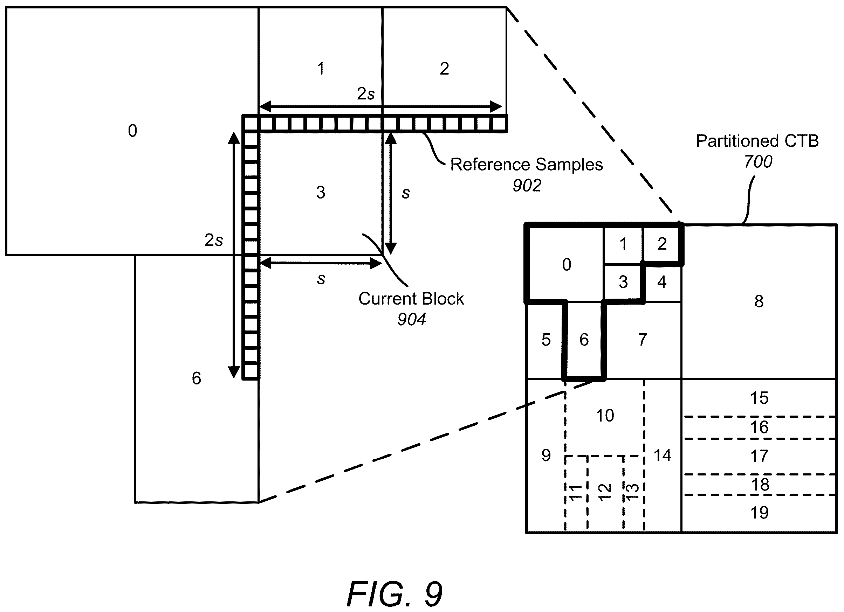

FIG. 9 shows an example set of reference samples determined for intra prediction of a current block. The current block 904 may correspond to a block being encoded and/or decoded. The current block 904 may correspond to block 3 of the partitioned CTB 700 as shown in FIG. 7. As described herein, the numeric labels 0-19 of the blocks of partitioned CTB 700 may correspond to the sequence order for encoding/decoding the blocks and may be used as such in the example of FIG. 9.

Reference samples 902 may include a line of samples immediately adjacent to current block 904. The reference samples 902 may include samples from a column and a row immediately adjacent to current block 904. For example, the line of samples may include reference samples to the left and/or above the current block 904. Reference samples 902 may be obtained (or selected) from a reference line of multiple reference lines (MRL). The MRL may include a line of samples adjacent to current block 904 and a line of samples not adjacent to the current block 904. The MRL may include reference lines identified by corresponding reference line indices that may indicate an i-th line of samples adjacent to current block 904 such that the 0-th line indicates the reference line immediately adjacent (or closest) to the current block 904 and a higher numbered i-th line indicates a line of samples further away from the current block 904. An encoder may select a reference line from a set of MRL and/or may signal an MRL index in the bitstream to indicate the selected reference line. For example, the encoder may signal a codeword encoding the MRL index. The decoder may decode the codeword to determine the MRL index that identifies a specific reference line used in intra prediction of the current block 904.

The current block 904 may be w x h samples in size. The reference samples 902 may comprise: 2w samples (or any other quantity of samples) of an i-th row (e.g., indicated by an MRL index) adjacent to the top-most row of current block 904, 2h samples (or any other quantity of samples) of the i-th column adjacent to the left-most column of current block 904, and the top left neighboring corner sample(s) extending from the i-th column and i-th row with respect to current block 904, for example, for the current block 904 that is w x h samples in size. The current block 904 may be square, such that w = h = s. In other examples, a current block need not be square, such that w # h. Available samples from neighboring blocks of the current block 904 may be used for constructing the set of reference samples 902. Samples may not be available for constructing the set of reference samples 902, for example, if the samples lie outside the picture of the current block, the samples are part of a different slice of the current block (e.g., if the concept of slices is used), and/or the samples belong to blocks that have been inter coded and constrained intra prediction is indicated. Intra prediction may not be dependent on inter predicted blocks, for example, if constrained intra prediction is indicated.

Samples that may not be available for constructing the set of reference samples 902 may comprise samples in blocks that have not already been encoded and reconstructed at an encoder and/or decoded at a decoder based on the sequence order for encoding/decoding. Restriction of such samples from inclusion in the set of reference samples 902 may allow identical prediction results to be determined at both the encoder and decoder. Samples from neighboring blocks 0, 1, 2, and 6 may be available to construct the reference samples 902 given that these blocks are encoded and reconstructed at an encoder and decoded at a decoder prior to coding of the current block 904. The samples from neighboring blocks 0, 1, and 2 may be available to construct reference samples 902, for example, if there are no other issues (e.g., as mentioned above) preventing the availability of the samples from the neighboring blocks 0, 1, and 2. The portion of reference samples 902 from neighboring block 6 may not be available due to the sequence order for encoding/decoding (e.g., because the block 6 may not have already been encoded and reconstructed at the encoder and/or decoded at the decoder based on the sequence order for encoding/decoding).

Unavailable samples from the reference samples 902 may be filled with one or more of the available reference samples 902. For example, an unavailable reference sample may be filled with a nearest available reference sample. The nearest available reference sample may be determined by moving in a clock-wise direction through the reference samples 902 from the position of the unavailable reference. The reference samples 902 may be filled with the mid-value of the dynamic range of the picture being coded, for example, if no reference samples are available.

Samples of the current block 904 may be intra predicted based on reference samples 902, for example, based on (e.g., after) determination and (optionally) filtering of the reference samples 902. A filtering scheme (e.g., a filtering algorithm) may be used/applied for/to the reference samples 902, for example, to improve prediction accuracy. The filtering scheme may be one of a plurality of filter types including at least a smoothing filter (or reference sample smoothing filter) or an interpolation filter. Only one of the plurality of filter types may be selected (e.g., activated) to be used/applied for/to reference samples of a given block, for example, if the reference samples are to be filtered. For example, the interpolation filter may not be selected (e.g., may be disabled), for example, if the smoothing filter is selected (e.g., activated), or vice versa.

A plurality of (e.g., many) encoders/decoders may support a plurality of intra prediction modes in accordance with one or more video coding standards. For example, HEVC supports 35 intra prediction modes, including a planar mode, a direct current (DC) mode, and 33 angular modes. VVC supports 67 intra prediction modes, including a planar mode, a DC mode, and 65 angular modes. Planar and DC modes may be used to predict smooth and gradually changing regions of a picture. Angular modes may be used to predict directional structures in regions of a picture. Any quantity of intra prediction modes may be supported.

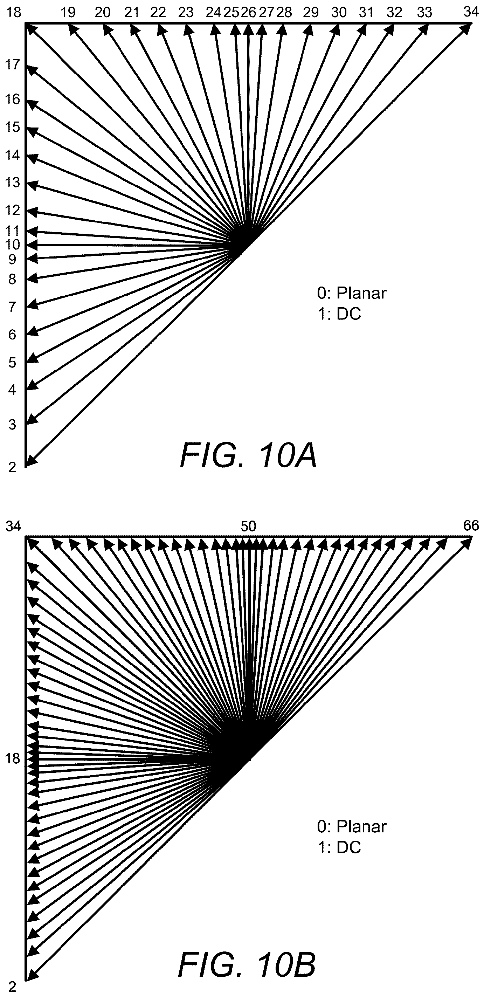

FIGS. 10A and 10B show example intra prediction modes. FIG. 10A shows 35 intra prediction modes, such as supported by HEVC. The 35 intra prediction modes may be indicated/identified by indices 0 to 34. Prediction mode 0 may correspond to planar mode. Prediction mode 1 may correspond to DC mode.

Prediction modes 2-34 may correspond to angular modes. Prediction modes 2-18 may be referred to as horizontal prediction modes because the principal source of prediction is in the horizontal direction. Prediction modes 19-34 may be referred to as vertical prediction modes because the principal source of prediction is in the vertical direction.

FIG. 10B shows 67 intra prediction modes, such as supported by VVC. The 67 intra prediction modes may be indicated/identified by indices 0 to 66. Prediction mode 0 may correspond to planar mode. Prediction mode 1 corresponds to DC mode. Prediction modes 2-66 may correspond to angular modes. Prediction modes 2-34 may be referred to as horizontal prediction modes because the principal source of prediction is in the horizontal direction. Prediction modes 35-66 may be referred to as vertical prediction modes because the principal source of prediction is in the vertical direction. Some of the intra prediction modes illustrated in FIG. 10B may be adaptively replaced by wide-angle directions because blocks in VVC need not be squares.

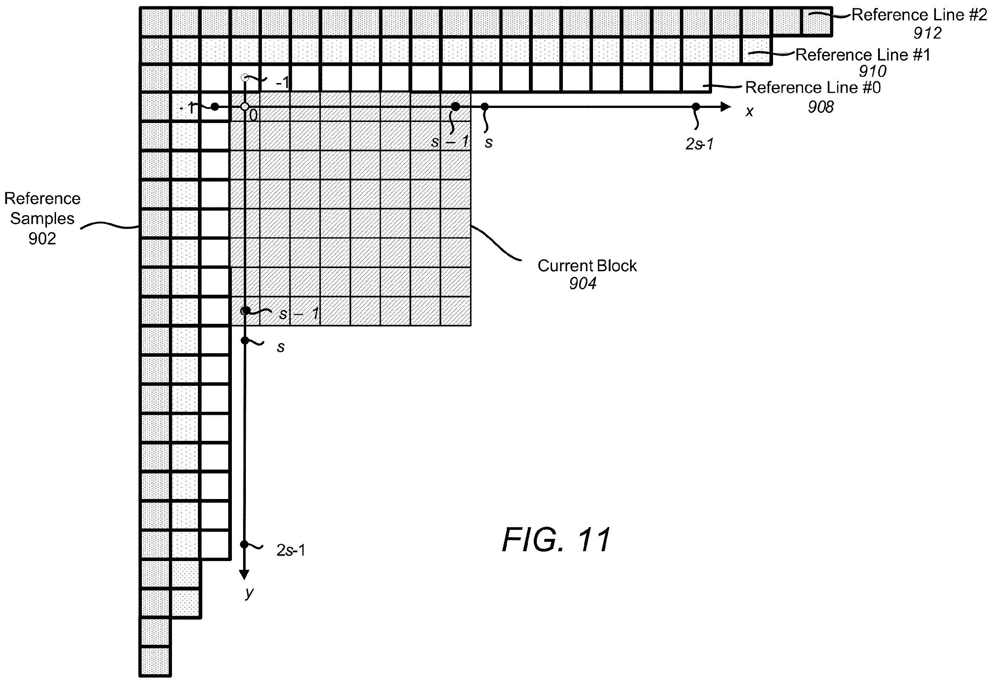

FIG. 11 shows an example current block 904 and corresponding reference samples 902 from FIG. 9. FIG. 11 shows current block 904 and reference samples 902 in a two-dimensional x, y plane, where a sample may be referenced as *p*[*x*][*y*], for example, to further describe how intra prediction modes are used/applied for/to determine a prediction (e.g., a prediction block) of current block 904. The reference samples 902 may be from a reference line among a set of multiple reference lines (MRL) 908-910. To simplify the prediction process, reference samples 902 may be placed in two, one-dimensional arrays. The reference samples 902 belonging to a reference line *l* from the set of MRL 908-912, above the current block 904, may be placed in the one-dimensional array *ref*₁*[x]:* ${ref}_{1} \left[x\right] = p \left[-l+x\right] \left[-l\right] , \left(x\geq 0\right) .$

The reference samples 902 belonging to reference line *l*, to the left of current block 904, may be placed in the one-dimensional array *ref*₂*[y]:* ${ref}_{2} \left[y\right] = p \left[-l\right] \left[-l+y\right] , \left(y\geq 0\right) .$

The variable *l* represents how many lines away the selected reference line is from current block. For example, if reference line #0 908 is selected, then *l* is set to 1 to indicate the reference line adjacent to current block 904. For example, if reference line #1 910 is selected, then *l* is set to 2. For example, if reference line #2 912 is selected, then *l* is set to 3.

Reference samples 902 may be from reference line 908 that is immediately adjacent to current block 904, for example, if MRL is not activated or selected. In this example, the variable *l* in Equations (1) and (2) is set to 1.

The prediction process may comprise determination of a predicted sample p[x][y] (e.g., a predicted value) at a location [x][y] in current block 904. For planar mode, a sample at the location [x][y] in current block 904 may be predicted by determining/calculating the mean of two interpolated values. The first of the two interpolated values may be based on a horizontal linear interpolation at the location [x][y] in the current block 904. The second of the two interpolated values may be based on a vertical linear interpolation at the location [x][y] in the current block 904. The predicted sample p[x][y] in the current block 904 may be determined/calculated as: $p \left[x\right] \left[y\right] = \frac{1}{2 ⋅ s} \left(h\left[x\right]\left[y\right]+v\left[x\right]\left[y\right]+s\right) ,$ where $h \left[x\right] \left[y\right] = \left(s-x-1\right) ⋅ {ref}_{2} \left[y\right] + \left(x+1\right) ⋅ {ref}_{1} \left[s\right]$ may be the horizonal linear interpolation at the location [*x*][*y*] in current block 904 and $v \left[x\right] \left[y\right] = \left(s-y-1\right) ⋅ {ref}_{1} \left[x\right] + \left(y+1\right) ⋅ {ref}_{2} \left[s\right]$ may be the vertical linear interpolation at the location [*x*][*y*] in current block 904. s may be equal to a length of a side (e.g., a number of samples on a side) of the current block 904.

A sample at a location [*x*][*y*] in current block 904 may be predicted by the mean of the reference samples 902, for example, for a DC mode. The predicted sample *p*[*x*][*y*] in current block 904 may be determined/calculated as: $p \left[x\right] \left[y\right] = \frac{1}{2 ⋅ s} \left({\sum }_{x = 0}^{s - 1} {ref}_{1} \left[x\right] + {\sum }_{y = 0}^{s - 1} {ref}_{2} \left[y\right]\right) .$

A sample at a location [*x*][*y*] in current block 904 may be predicted by projecting the location [*x*][*y*] in a direction specified by a given angular mode to a point on the horizontal or vertical line of samples comprising reference samples 902, for example, for an angular mode. The sample at the location [*x*][*y*] may be predicted by interpolating between the two closest reference samples of the projection point, for example, if the projection does not fall directly on a reference sample. The direction specified by the angular mode may be given by an angle φ defined relative to the y-axis for vertical prediction modes (e.g., modes 19-34 in HEVC and modes 35-66 in VVC). The direction specified by the angular mode may be given by an angle φ defined relative to the x-axis for horizontal prediction modes (e.g., modes 2-18 in HEVC and modes 2-34 in VVC).

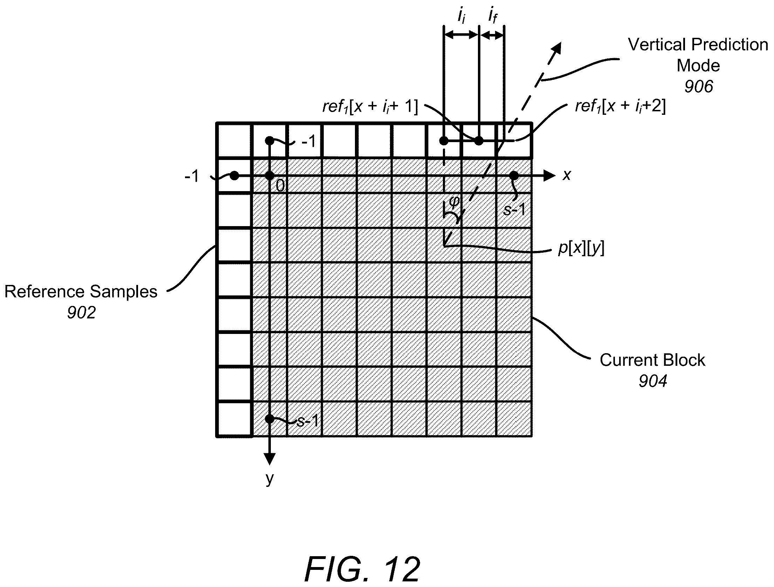

FIG. 12 shows an example application of an intra prediction mode (e.g., an angular mode such as vertical prediction mode 906) for prediction of a current block 904. FIG. 12 specifically shows prediction of a sample at a location [*x*][*y*] in current block 904 for a vertical prediction mode 906. Vertical prediction mode 906 may be given by an angle φ with respect to the vertical axis. The location [*x*][*y*] in current block 904, in vertical prediction modes, may be projected to a point (e.g., referred to as a projection point) on the horizontal line of reference samples *ref*₁[*x*]*.* The reference samples 902 are only partially shown in FIG. 12 and shown as being from a reference line with reference line index of 0 for ease of illustration. Reference samples 902 may be from another reference line of the set of MRL, as explained in FIG. 9. As shown in FIG. 12, the projection point on the horizontal line of reference samples *ref*₁[*x*] may not be exactly on a reference sample. A predicted sample *p*[*x*][*y*] in current block 904 may be determined/calculated by linearly interpolating between the two reference samples, for example, if the projection point falls at a fractional sample position between two reference samples. The predicted sample *p*[*x*][*y*] may be determined/calculated as: $p \left[x\right] \left[y\right] = \left(1-{i}_{f}\right) ⋅ {ref}_{1} \left[x+{i}_{i}+1\right] + {i}_{f} ⋅ {ref}_{1} \left[x+{i}_{i}+2\right] .$ *iᵢ* may be the integer part of the horizontal displacement of the projection point relative to the location [*x*][*y*]*. iᵢ* may be determined/calculated as a function of the tangent of the angle φ of the vertical prediction mode 906 as: ${i}_{i} = \left⌊\left(y+1\right)⋅tanφ\right⌋ .$ *i*_{f} may be the fractional part of the horizontal displacement of the projection point relative to the location [*x*][*y*] and may be determined/calculated as: ${i}_{f} = \left(\left(y+1\right)⋅tanφ\right) - \left⌊\left(y+1\right)⋅tanφ\right⌋ ,$ where $\left⌊⋅\right⌋$ is the integer floor function.

A location [x][y] of a sample in current block 904 may be projected onto the vertical line of reference samples *ref*₂[*y*], for example, for horizontal prediction modes. A predicted sample *p*[*x*][*y*]for horizontal prediction modes may be determined/calculated as: $p \left[x\right] \left[y\right] = \left(1-{i}_{f}\right) ⋅ {ref}_{2} \left[y+{i}_{i}+1\right] + {i}_{f} ⋅ {ref}_{2} \left[y+{i}_{i}+2\right] .$ *iᵢ* may be the integer part of the vertical displacement of the projection point relative to the location [*x*][*y*]. *iᵢ* may be determined/calculated as a function of the tangent of the angle φ of the horizontal prediction mode as: ${i}_{i} = \left⌊\left(x+1\right)⋅tanφ\right⌋ .$ *i*_{f} may be the fractional part of the vertical displacement of the projection point relative to the location [*x*][*y*]. *i_{f}* may be determined/calculated as: ${i}_{f} = \left(\left(x+1\right)⋅tanφ\right) - \left⌊\left(x+1\right)⋅tanφ\right⌋ ,$ where $\left⌊⋅\right⌋$ is the integer floor function.

The interpolation functions given by Equations (7) and (10) may be implemented by an encoder and/or a decoder (e.g., encoder 200 in FIG. 2 and/or decoder 300 in FIG. 3). The interpolation functions may be implemented by finite impulse response (FIR) filters. For example, the interpolation functions may be implemented as a set of two-tap FIR filters. The coefficients of the two-tap FIR filters may be respectively given by (1-*i*_{f}) and *i*_{f}. The predicted sample *p*[*x*][*y*], in angular intra prediction, may be calculated with some predefined level of sample accuracy (e.g., 1/32 sample accuracy, or accuracy defined by any other metric). For 1/32 sample accuracy, the set of two-tap FIR interpolation filters may comprise up to 32 different two-tap FIR interpolation filters - one for each of the 32 possible values of the fractional part of the projected displacement *i*_{f}. In other examples, different levels of sample accuracy may be used.

The FIR filters may be used for predicting chroma samples and/or luma samples. For example, the two-tap interpolation FIR filter may be used for predicting chroma samples and a same and/or a different interpolation technique/filter may be used for luma samples. For example, a four-tap FIR filter may be used to determine a predicted value of a luma sample. Coefficients of the four tap FIR filter may be determined based on *i*_{f} (e.g., similar to the two-tap FIR filter). For 1/32 sample accuracy, a set of 32 different four-tap FIR filters may comprise up to 32 different four-tap FIR filters - one for each of the 32 possible values of the fractional part of the projected displacement *i*_{f}. In other examples, different levels of sample accuracy may be used. The set of four-tap FIR filters may be stored in a look-up table (LUT) and referenced based on *i*_{f}. A predicted sample *p*[*x*][*y*], for vertical prediction modes, may be determined based on the four-tap FIR filter as: $p \left[x\right] \left[y\right] = {\sum }_{i = 0}^{3} fT \left[i\right] ⋅ {ref}_{1} \left[x+iIdx+i\right] ,$ where *fT*[*i*], i *=* 0...3, may be the filter coefficients, and *Idx* is integer displacement. A predicted sample *p*[*x*][*y*], for horizontal prediction modes, may be determined based on the four-tap FIR filter as: $p \left[x\right] \left[y\right] = {\sum }_{i = 0}^{3} fT \left[i\right] ⋅ {ref}_{2} \left[y+iIdx+i\right] .$

Supplementary reference samples may be determined/constructed if the location [*x*][*y*] of a sample in current block 904 to be predicted is projected to a negative x coordinate. The location [*x*][*y*] of a sample may be projected to a negative x coordinate, for example, if negative vertical prediction angles φ are used. The supplementary reference samples may be determined/constructed by projecting the reference samples in *ref*₂[*y*] in the vertical line of reference samples 902 to the horizontal line of reference samples 902 using the negative vertical prediction angle φ. Supplementary reference samples may be similarly determined/constructed, for example, if the location [*x*][*y*] of a sample in current block 904 to be predicted is projected to a negative y coordinate. The location [*x*][*y*] of a sample may be projected to a negative y coordinate, for example, if negative horizontal prediction angles φ are used. The supplementary reference samples may be determined/constructed by projecting the reference samples in *ref*₁[*x*] on the horizontal line of reference samples 902 to the vertical line of reference samples 902 using the negative horizontal prediction angle φ.

An encoder may determine/predict samples of a current block being encoded (e.g., current block 904) for a plurality of intra prediction modes (e.g., using one or more of the functions described herein). For example, an encoder may determine/predict samples of a current block for each of 35 intra prediction modes in HEVC and/or 67 intra prediction modes in VVC and/or including extended intra prediction modes from WAIP for rectangular blocks. The encoder may determine, for each intra prediction mode applied, a corresponding prediction error for the current block based on a difference (e.g., sum of squared differences (SSD), sum of absolute differences (SAD), or sum of absolute transformed differences (SATD)) between the prediction samples, generated from reference samples 902 of a reference line (e.g., from a set of MRL), determined for the intra prediction mode and the original samples of the current block. The encoder may determine/select one of the intra prediction modes to encode the current block based on the determined prediction errors. For example, the encoder may determine/select one of the intra prediction modes that results in the smallest prediction error for the current block. The encoder may determine/select the intra prediction mode and the associated reference line to encode the current block based on a rate-distortion measure (e.g., Lagrangian rate-distortion cost) determined using the prediction errors. The encoder may signal an indication of the determined/selected intra prediction mode and an indication of the associated MRL index (which may indicate a reference line index). The encoder may signal an indication of the determined/selected intra prediction mode and an indication of the associated MRL index (which may indicate a reference line index), for example, in the bitstream to a decoder for decoding of the current block. The encoder may also signal in the bitstream to the decoder a corresponding prediction error (e.g., residual) of the intra prediction mode.

A decoder may determine/predict samples of a current block being decoded (e.g., current block 904) for an intra prediction mode. For example, a decoder may receive an indication of a reference line (e.g., a reference line index or an MRL index associated with the reference line index) and an intra prediction mode (e.g., an angular intra prediction mode) from an encoder for a current block. The decoder may retrieve a set of reference samples and perform intra prediction, for example, based on the MRL index and the intra prediction mode indicated by the encoder for the current block in a similar manner (e.g., as described above for the encoder). The decoder may obtain the reference samples from a reference line indicated/identified by the decoded MRL index. The reference line may have reference line index 0 and may be immediately adjacent to the current block, for example, if/when MRL is not enabled/activated/selected. In these examples, no indication of MRL index is signaled.

The decoder may add predicted values of the samples (e.g., determined based on the intra prediction mode) of the current block to a residual of the current block to reconstruct the current block. A decoder need not receive an indication of an angular intra prediction mode from an encoder for a current block. A decoder may determine an intra prediction mode, for example, through other decoder-side means (e.g., by applying template-based intra mode derivation (TIMD) tool/technique). While various examples herein correspond to intra prediction modes in HEVC and VVC, the methods, devices, and systems as described herein may be applied to/used for other intra prediction modes (e.g., as used in other video coding standards/formats, such as VP8, VP9, AV1, etc.).

Intra prediction may exploit correlations between spatially neighboring samples in the same picture of a video sequence to perform video compression. Inter prediction is another coding tool that may be used to perform video compression. Inter prediction may exploit correlations in the time domain between blocks of samples in different pictures of a video sequence. For example, an object may be seen across multiple pictures of a video sequence. The object may move (e.g., by some translation and/or affine motion) or remain stationary across the multiple pictures. A current block of samples in a current picture being encoded may have/be associated with a corresponding block of samples in a previously decoded picture. The corresponding block of samples may accurately predict the current block of samples. The corresponding block of samples may be displaced from the current block of samples, for example, due to movement of the object, represented in both blocks, across the respective pictures of the blocks. The previously decoded picture may be a reference picture. The corresponding block of samples in the reference picture may be a reference block for motion compensated prediction. An encoder may use a block matching technique to estimate the displacement (or motion) of the object and/or to determine the reference block in the reference picture.

An encoder may determine a difference between a current block and a prediction for a current block (e.g., similar to intra prediction). An encoder may determine a difference, for example, based on/after determining/generating a prediction for a current block (e.g., using inter prediction). The difference may be a prediction error (e.g., a residual). The encoder may store and/or send (e.g., signal), in/via a bitstream, the prediction error and/or other related prediction information. The prediction error and/or other related prediction information may be used for decoding and/or other forms of consumption. A decoder may decode the current block by predicting the samples of the current block (e.g., by using the related prediction information) and combining the predicted samples with the prediction error.

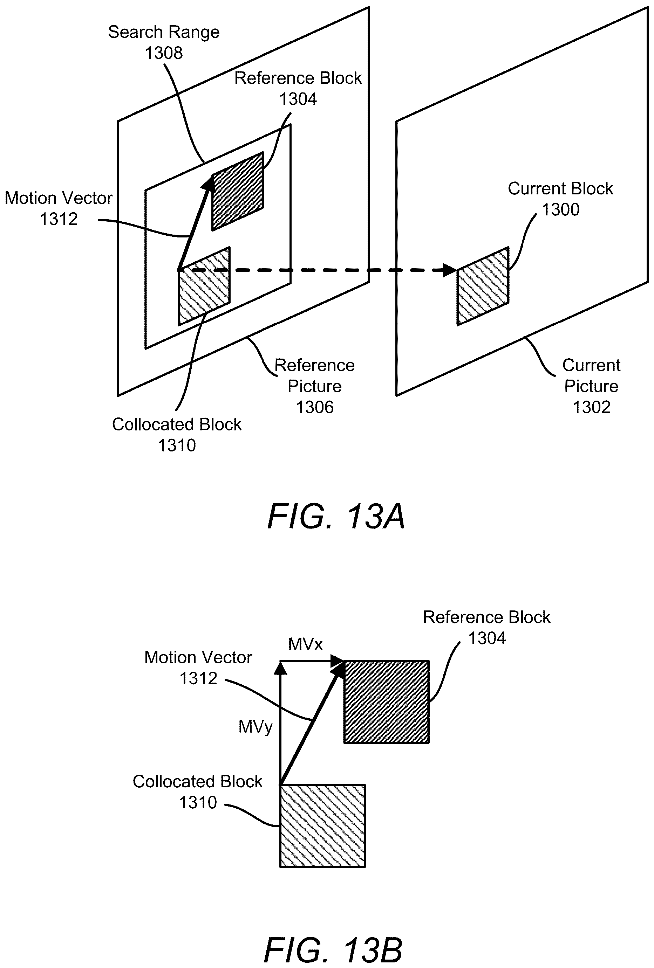

FIG. 13A shows an example of inter prediction. The inter prediction may be performed for a current block 1300 in a current picture 1302 being encoded. An encoder (e.g., encoder 200 as shown in FIG. 2) may perform inter prediction to determine and/or generate a reference block 1304 in a reference picture 1306. Reference block 1304 may be used to predict the current block 1300. Reference pictures (e.g., reference picture 1306) may be prior decoded pictures available at the encoder and/or a decoder. Availability of a prior decoded picture may depend/be based on whether the prior decoded picture is available in a decoded picture buffer, at the time, current block 1300 is being encoded and/or decoded. The encoder may search the one or more reference pictures 1306 for a block (e.g., a candidate reference block) that is similar (or substantially similar) to current block 1300. The encoder may determine the best matching block from the blocks (e.g., candidate reference blocks) tested during the searching process. The best matching block may be a reference block 1304. The encoder may determine that reference block 1304 is the best matching reference block based on one or more cost criteria. The one or more cost criteria may comprise a rate-distortion criterion (e.g., Lagrangian rate-distortion cost). The one or more cost criteria may be based on a difference (e.g., SSD, SAD, and/or SATD) between prediction samples of reference block 1304 and original samples of current block 1300.

The encoder may search for reference block 1304 within a reference region (e.g., a search range 1308). The reference region (e.g., a search range 1308) may be positioned around a collocated block (or position) 1310, of current block 1300, in reference picture 1306. Collocated block 1310 may have a same position in the reference picture 1306 as the current block 1300 in the current picture 1302. The reference region (e.g., search range 1308) may at least partially extend outside of reference picture 1306. Constant boundary extension may be used, for example, if the reference region (e.g., search range 1308) extends outside of reference picture 1306. The constant boundary extension may be used such that values of the samples in a row or a column of reference picture 1306, immediately adjacent to a portion of the reference region (e.g., search range 1308) extending outside of reference picture 1306, may be used for sample locations outside of reference picture 1306. A subset of potential positions, or all potential positions, within the reference region (e.g., search range 1308) may be searched for reference block 1304. The encoder may utilize one or more search implementations to determine and/or generate the reference block 1304. For example, the encoder may determine a set of candidate search positions based on motion information of neighboring blocks (e.g., a motion vector 1312) to the current block 1300.

One or more reference pictures may be searched by the encoder during inter prediction to determine and/or generate the best matching reference block. The reference pictures searched by the encoder may be included in (e.g., added to) one or more reference picture lists. For example, in HEVC and VVC (and/or in one or more other communication protocols), two reference picture lists may be used (e.g., a reference picture list 0 and a reference picture list 1). A reference picture list may include one or more pictures. The reference picture 1306 of reference block 1304 may be indicated by a reference index pointing into a reference picture list comprising reference picture 1306.

FIG. 13B shows an example motion vector. A displacement between reference block 1304 and current block 1300 may be interpreted as an estimate of the motion between reference block 1304 and current block 1300 across their respective pictures. The displacement may be represented by a motion vector 1312. For example, motion vector 1312 may be indicated by a horizontal component (MVx) and a vertical component (MVy) relative to the position of current block 1300. A motion vector (e.g., motion vector 1312) may have fractional or integer resolution. A motion vector with fractional resolution may point between two samples in a reference picture to provide a better estimation of the motion of current block 1300. For example, a motion vector may have 1/2, 1/4, 1/8, 1/16, 1/32, or any other fractional sample resolution. Interpolation between the two samples at integer positions may be used to generate a reference block and its corresponding samples at fractional positions, for example, if a motion vector points to a non-integer sample value in the reference picture. The interpolation may be performed by a filter with two or more taps.

The encoder may determine a difference (e.g., a corresponding sample-by-sample difference) between reference block 1304 and current block 1300. The encoder may determine the difference between reference block 1304 and current block 1300, for example, based on/after reference block 1304 is determined and/or generated, using inter prediction, for current block 1300. The difference may be a prediction error (e.g., a residual). The encoder may store and/or send (e.g., signal), in/via a bitstream, the prediction error and/or related motion information. The prediction error and/or the related motion information may be used for decoding (e.g., decoding current block 1300) and/or other forms of consumption. The motion information may comprise the motion vector 1312 and a reference indicator/index. The reference indicator may indicate the reference picture 1306 in a reference picture list. The motion information may comprise an indication of motion vector 1312 and/or an indication of the reference indicator/index. The reference indicator may indicate reference picture 1306 in the reference picture list comprising reference picture 1306. A decoder may decode current block 1300 by determining and/or generating the reference block 1304. The reference block 1304 may correspond to/form (e.g., be considered as) a prediction of the current block 1300. The decoder may determine and/or generate the reference block 1304, for example, based on the related motion information. The decoder may decode current block 1300 based on combining the prediction (e.g., a reference block) with the prediction error (e.g., a residual block).

Inter prediction, as shown in FIG. 13A, may be performed using one reference picture 1306 as a source of a prediction for current block 1300. Inter prediction based on a prediction of a current block using a single picture may be referred to as uni-prediction.

Inter prediction of a current block, using bi-prediction, may be based on two pictures (e.g., the source of prediction may be from the two pictures). Bi-prediction may be useful, for example, if a video sequence comprises fast motion, camera panning, zooming, and/or scene changes. Bi-prediction may be useful to capture fade outs of one scene or fade outs from one scene to another, where two pictures may effectively be displayed simultaneously with different levels of intensity.

One or both of uni-prediction and bi-prediction may be available/used for performing inter prediction (e.g., at an encoder and/or at a decoder). Performing a specific type of inter prediction (e.g., uni-prediction and/or bi-prediction) may depend on a slice type of current block. For example, for P slices, only uni-prediction may be available/used for performing inter prediction. For B slices, either uni-prediction or bi-prediction may be available/used for performing inter prediction. An encoder may determine and/or generate a reference block, for predicting a current block, from a reference picture list 0, for example, if the encoder is using uni-prediction. An encoder may determine and/or generate a first reference block, for predicting a current block, from a reference picture list 0 and determine and/or generate a second reference block, for predicting the current block, from a reference picture list 1, for example, if the encoder is using bi-prediction.

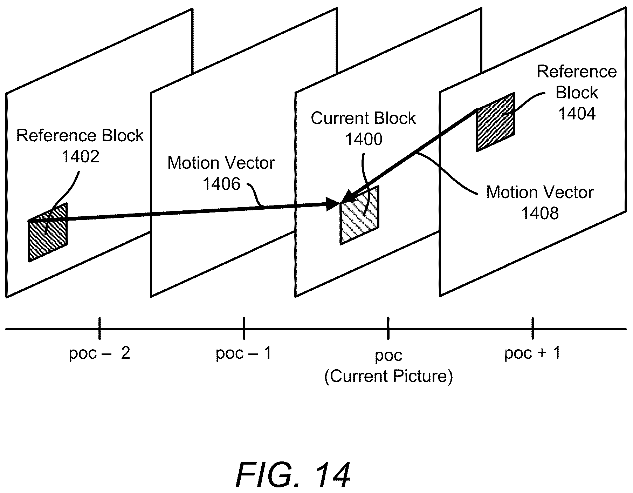

FIG. 14 shows an example of bi-prediction. More specifically, FIG. 14 shows an example of bi-prediction performed for a current block. Two reference blocks 1402 and 1404 may be used to predict a current block 1400. Reference block 1402 may be in a reference picture of one of reference picture list 0 or reference picture list 1. Reference block 1404 may be in a reference picture of another one of reference picture list 0 or reference picture list 1. As shown in FIG. 14, reference block 1402 may be in a first picture that precedes (e.g., in time) a current picture of current block 1400, and the reference block 1404 may be in a second picture that succeeds (e.g., in time) the current picture of current block 1400. The first picture may precede the current picture in terms of a picture order count (POC). The second picture may succeed the current picture in terms of the POC. The reference pictures may both precede or both succeed the current picture in terms of POC. A POC may be/indicate an order in which pictures are output (e.g., from a decoded picture buffer). A POC may be/indicate an order in which pictures are generally intended to be displayed. Pictures that are output may not necessarily be displayed but may undergo different processing and/or consumption (e.g., transcoding). The two reference blocks determined and/or generated using/for bi-prediction may correspond to (e.g., be comprised in) a same reference picture. The reference picture may be included in both the reference picture list 0 and the reference picture list 1, for example, if the two reference blocks correspond to the same reference picture.

A configurable weight and/or offset value may be applied to one or more inter prediction reference blocks. An encoder may enable the use of weighted prediction using a flag in a picture parameter set (PPS). The encoder may send/signal the weight and/or offset parameters in a slice segment header for current block 1400. Different weight and/or offset parameters may be sent/signaled for luma and/or chroma components.

The encoder may determine and/or generate the reference blocks 1402 and 1404 for the current block 1400 using inter prediction. The encoder may determine a difference between current block 1400 and each of reference blocks 1402 and 1404. The differences may be prediction errors or residuals. The encoder may store and/or send/signal, in/via a bitstream, the prediction errors and/or their respective related motion information. The prediction errors and their respective related motion information may be used for decoding and/or other forms of consumption.

The motion information for reference block 1402 may comprise a motion vector 1406 and/or a reference indicator/index. The reference indicator may indicate a reference picture, of the reference block 1402, in a reference picture list. The motion information for reference block 1402 may comprise an indication of motion vector 1406 and/or an indication of the reference index. The reference index may indicate the reference picture, of reference block 1402, in the reference picture list.

The motion information for reference block 1404 may comprise a motion vector 1408 and/or a reference index/indicator. The reference indicator may indicate a reference picture, of the reference block 1404, in a reference picture list. The motion information for reference block 1404 may comprise an indication of motion vector 1408 and/or an indication of the reference index. The reference index may indicate the reference picture, of the reference block 1404, in the reference picture list.

A decoder may decode current block 1400 by determining and/or generating the reference blocks 1402 and 1404. The decoder may determine and/or generate the reference blocks 1402 and 1404, for example, based on the respective related motion information for the reference blocks 1402 and 1404. The reference blocks 1402 and 1404 may correspond to/form (e.g., be considered as) the prediction (e.g., used to generate a prediction block) of the current block 1400. The decoder may decode the current block 1400 based on combining the prediction with the prediction errors.

Motion information may be predictively coded, for example, before being stored and/or sent/signaled in/via a bit stream (e.g., in HEVC, VVC, and/or other video coding standards/formats/protocols). The motion information for a current block may be predictively coded based on motion information of one or more blocks neighboring the current block. The motion information of the neighboring block(s) may often correlate with the motion information of the current block because the motion of an object represented in the current block is often the same as (or similar to) the motion of objects in the neighboring block(s). Motion information prediction techniques (such as those in HEVC and VVC) may comprise advanced motion vector prediction (AMVP) and/or inter prediction block merging (e.g., merge mode).

An encoder (e.g., encoder 200 as shown in FIG. 2), may code a motion vector. The encoder may code the motion vector (e.g., using AMVP) as a difference between a motion vector of a current block being coded and a motion vector predictor (MVP). An encoder may determine/select the MVP from a list of candidate MVPs. The candidate MVPs may be/correspond to previously decoded motion vectors of neighboring blocks in the current picture of the current block, and/or blocks at or near the collocated position of the current block in other reference pictures. The encoder and/or a decoder may reciprocally generate and/or determine the list of candidate MVPs.

The encoder may determine/select an MVP from the list of candidate MVPs. The encoder may send/signal, in/via a bitstream, an indication of the selected MVP and/or a motion vector difference (MVD). The encoder may indicate the selected MVP in the bitstream using an index/indicator. The index may indicate the selected MVP in the list of candidate MVPs. The MVD may be determined/calculated based on a difference between the motion vector of the current block and the selected MVP. For example, for a motion vector (e.g., comprising a horizontal component (MVx) and a vertical component (MVy)) that indicates a position relative to a position of the current block being coded, the MVD may be represented by two components MVD*ₓ* and MVD*_{y}*. MVD*ₓ* and MVD*_{y}* may be determined/calculated as: ${MVD}_{x} = {MV}_{x} - {MVP}_{x} ,$ ${MVD}_{y} = {MV}_{y} - {MVP}_{y} .$

MVDx and MVDy may respectively represent horizontal and vertical components of the MVD. MVPx and MVPy may respectively represent horizontal and vertical components of the MVP.

A decoder (e.g., decoder 300 as shown in FIG. 3) may decode the motion vector by adding the MVD to the MVP indicated in/via the bitstream. The decoder may decode the current block by determining and/or generating the reference block. The decoder may determine and/or generate the reference block, for example, based on the decoded motion vector. The reference block may correspond to/form (e.g., be considered as) the prediction of the current block (e.g., a prediction block). The decoder may decode the current block by combining the prediction with the prediction error.

The list of candidate MVPs (e.g., in HEVC, VVC, and/or one or more other communication protocols), for AMVP, may comprise two or more candidates (e.g., candidates A and B). Candidates A and B may comprise: up to two (or any other quantity of) spatial candidate MVPs determined/derived from five (or any other quantity of) spatial neighboring blocks of a current block being coded; one (or any other quantity of) temporal candidate MVP determined/derived from two (or any other quantity of) temporal, co-located blocks (e.g., if both of the two spatial candidate MVPs are not available or are identical); and/or zero motion vector candidate MVPs (e.g., if one or both of the spatial candidate MVPs or temporal candidate MVPs are not available). Other quantities of spatial candidate MVPs, spatial neighboring blocks, temporal candidate MVPs, and/or temporal, co-located blocks may be used for the list of candidate MVPs.

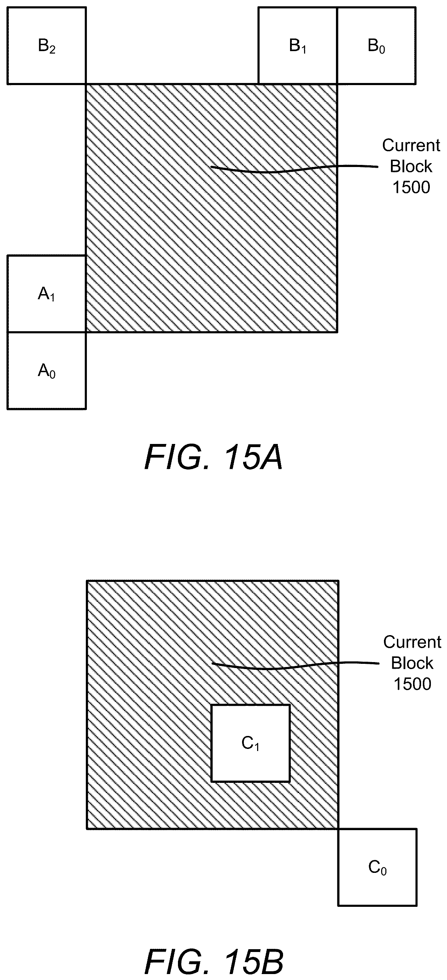

FIG. 15A shows example spatial candidate neighboring blocks for a current block. For example, five (or any other quantity of) spatial candidate neighboring blocks may be located relative to a current block 1500 being encoded. The five spatial candidate neighboring blocks may be A0, A1, B0, B1, and B2. FIG. 15B shows temporal, co-located blocks for the current block. For example, two (or any other quantity of) temporal, co-located blocks may be located relative to current block 1500 being coded. The two temporal, co-located blocks may be C0 and C1. The two temporal, co-located blocks may be in one or more reference pictures that may be different from the current picture of current block 1500.

An encoder (e.g., encoder 200 as shown in FIG. 2) may code a motion vector using inter prediction block merging (e.g., a merge mode). For example, the encoder (e.g., using merge mode) may reuse the same motion information of a neighboring block (e.g., one of neighboring blocks A0, A1, B0, B1, and B2) for inter prediction of a current block. For example, the encoder (e.g., using merge mode) may reuse the same motion information of a temporal, co-located block (e.g., one of temporal, co-located blocks C0 and C1) for inter prediction of a current block. An MVD need not be sent (e.g., indicated, signaled) for the current block because the same motion information as that of a neighboring block or a temporal, co-located block may be used for the current block (e.g., at the encoder and/or a decoder). A signaling overhead for sending/signaling the motion information of the current block may be reduced because the MVD need not be indicated for the current block. The encoder and/or the decoder may reciprocally generate a candidate list of motion information from neighboring blocks or temporal, co-located blocks of the current block (e.g., in a manner similar to AMVP). The encoder may determine to use (e.g., inherit) motion information, of one neighboring block or one temporal, co-located block in the candidate list, for predicting motion information of the current block being coded. The encoder may signal/send, in/via a bitstream, an indication of the determined motion information from the candidate list. For example, the encoder may signal/send an indicator/index. The index may indicate the determined motion information in the list of candidate motion information. The encoder may signal/send the index to indicate the determined motion information.

A list of candidate motion information for merge mode (e.g., in HEVC, VVC, or any other coding formats/standards/protocols) may comprise: up to four (or any other quantity of) spatial merge candidates derived/determined from five (or any other quantity of) spatial neighboring blocks (e.g., as shown in FIG. 15A); one (or any other quantity of) temporal merge candidate derived from two (or any other quantity of) temporal, co-located blocks (e.g., as shown in FIG. 15B); and/or additional merge candidates comprising bi-predictive candidates and zero motion vector candidates. The spatial neighboring blocks and the temporal, co-located blocks used for merge mode may be the same as the spatial neighboring blocks and the temporal, co-located blocks used for AMVP.

Inter prediction may be performed in other ways and variants than those described herein. For example, motion information prediction techniques other than AMVP and merge mode may be used. While various examples herein correspond to inter prediction modes, such as used in HEVC and VVC, the methods, devices, and systems as described herein may be applied to/used for other inter prediction modes (e.g., as used for other video coding standards/formats such as VP8, VP9, AV1, etc.). History-based motion vector prediction (HMVP), combined intra/inter prediction mode (CIIP), and/or merge mode with motion vector difference (MMVD) (e.g., as described in VVC) may be performed/used and are within the scope of the present disclosure.

A block matching operation (or technique) may be applied/used (e.g., in inter prediction) to determine a reference block in a different picture than that of a current block being coded (e.g., encoded and/or decoded). A block matching operation also may be applied/used to determine a reference block in a same picture as that of a current block being coded. The reference block, in a same picture as that of the current block, as determined using block matching may often not accurately predict the current block (e.g., for camera captured videos). Prediction accuracy for screen content videos may not be similarly impacted, for example, if a reference block in the same picture as that of the current block is used for encoding. Screen content videos may comprise, for example, computer generated text, graphics, animation, etc. Screen content videos may comprise (e.g., may often comprise) repeated patterns (e.g., repeated patterns of text and/or graphics) within the same picture. Using a reference block (e.g., as determined using block matching), in a same picture as that of a current block being encoded, may provide efficient compression for screen content videos.

A prediction technique may be used (e.g., in HEVC, VVC, and/or any other coding standards/formats/protocols) to exploit correlation between blocks of samples within a same picture (e.g., of screen content videos). The prediction technique may be intra block copy (IBC) or current picture referencing (CPR). An encoder may apply/use a block matching technique (e.g., similar to inter prediction) to determine a displacement vector (e.g., a block vector (BV)). The BV may indicate a relative position of a reference block (e.g., in accordance with intra block compensated prediction), that best matches the current block, from a position of the current block. For example, the relative position of the reference block may be a relative position of a top-left corner (or any other point/sample) of the reference block. The BV may indicate a relative displacement from the current block to the reference block that best matches the current block. The encoder may determine the best matching reference block from blocks tested during a searching process (e.g., in a manner similar to that used for inter prediction). The encoder may determine that a reference block is the best matching reference block based on one or more cost criteria. The one or more cost criteria may comprise a rate-distortion criterion (e.g., Lagrangian rate-distortion cost). The one or more cost criteria may be based on, for example, one or more differences (e.g., an SSD, an SAD, an SATD, and/or a difference determined based on a hash function) between the prediction samples of the reference block and the original samples of the current block. A reference block may correspond to/comprise prior decoded blocks of samples (e.g., reconstructed samples) of the current picture. The reference block may comprise decoded blocks of samples of the current picture prior to being processed by in-loop filtering operations (e.g., deblocking and/or SAO filtering).

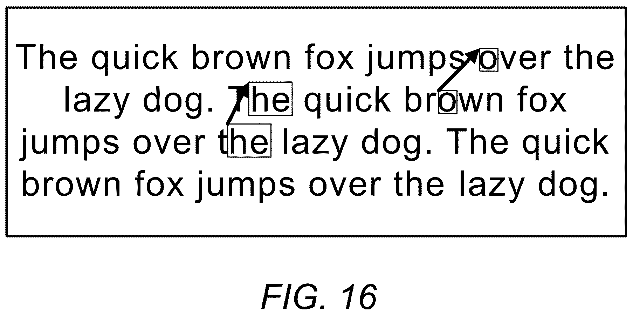

FIG. 16 shows an example of IBC (e.g., an IBC mode). The example shown in FIG. 16 may correspond to screen content. The rectangular portions/sections with arrows beginning at their boundaries may be the current blocks being encoded. The rectangular portions/sections that the arrows point to may be the reference blocks for predicting the respective current blocks.

A reference block may be determined and/or generated, for a current block, using IBC. The encoder may determine a difference (e.g., a corresponding sample-by-sample difference) between the reference block and the current block. The difference may be a prediction error or residual. The encoder may store and/or send/signal, in/via a bitstream the prediction error and/or related prediction information. The prediction error and/or the related prediction information may be used for decoding and/or other forms of consumption. The prediction information may comprise a BV. The prediction information may comprise an indication of the BV. A decoder (e.g., decoder 300 as shown in FIG. 3), may decode the current block by determining and/or generating the reference block. The decoder may determine and/or generate the current block, for example, based on the prediction information (e.g., the BV). The reference block may correspond to/form (e.g., be considered as) the prediction (e.g., a prediction block) of the current block. The decoder may decode the current block by combining the prediction (e.g., a prediction block) with the prediction error (e.g., residual or residual block).

A BV may be predictively coded (e.g., in HEVC, VVC, and/or any other coding standards/formats/protocols) before being stored and/or sent/signaled in/via a bitstream. For example, the BV for a current block may be predictively coded based on a BV of one or more blocks neighboring the current block. For example, an encoder may predictively code a BV using the merge mode (e.g., in a manner similar to as described herein for inter prediction), AMVP (e.g., as described herein for inter prediction), or a technique similar to AMVP. The technique similar to AMVP may be BV prediction and difference coding (or AMVP for IBC).

An encoder (e.g., encoder 200 as shown in FIG. 2) performing BV prediction and coding may code a BV as a difference between the BV of a current block being coded and a block vector predictor (BVP). An encoder may select/determine the BVP from a list of candidate BVPs. The candidate BVPs may comprise/correspond to previously decoded BVs of neighboring blocks in the current picture of the current block. The encoder and/or a decoder may reciprocally generate or determine the list of candidate BVPs.

The encoder may send/signal, in/via a bitstream, an indication of the selected BVP and a block vector difference (BVD). The encoder may indicate the selected BVP in the bitstream using an index/indicator. The index may indicate (e.g., point to) the selected BVP in the list of candidate BVPs. The BVD may be determined/calculated based on a difference between a BV of the current block and the selected BVP. For example, for a BV (e.g., represented by a horizontal component (BVx) and a vertical component (BVy)) that indicates a position relative to a position of the current block being coded, the BVD may be represented by two components BVD*ₓ* and BVD*_{y}*. BVD*ₓ* and BVD*_{y}* may be determined/calculated as: ${BVD}_{x} = {BV}_{x} - {BVP}_{x} ,$ ${BVD}_{y} = {BV}_{y} - {BVP}_{y} .$

BVDx and BVDy may respectively represent horizontal and vertical components of the BVD. BVPx and BVPy may respectively represent horizontal and vertical components of the BVP. A decoder (e.g., decoder 300 as shown in FIG. 3), may decode the BV by adding the BVD to the BVP indicated in/via the bitstream. The decoder may decode the current block by determining and/or generating the reference block. The decoder may determine and/or generate the reference block, for example, based on the decoded BV. The reference block may correspond to/form (e.g., be considered as) the prediction (e.g., a prediction block) of the current block. The decoder may decode the current block by combining the prediction (e.g., the prediction block) with the prediction error (e.g., residual or residual block).

A same BV as that of a neighboring block may be used for the current block and a BVD need not be separately signaled/sent for the current block, such as in the merge mode. A BVP (in the candidate BVPs), which may correspond to a decoded BV of the neighboring block, may itself be used as a BV for the current block. Not sending the BVD may reduce the signaling overhead.

A list of candidate BVPs (e.g., in HEVC, VVC, and/or any other coding standard/format/protocol) may comprise two (or more) candidates. The candidates may comprise candidates A and B. Candidates A and B may comprise: up to two (or any other quantity of) spatial candidate BVPs determined/derived from five (or any other quantity of) spatial neighboring blocks of a current block being encoded; and/or one or more of last two (or any other quantity of) coded BVs (e.g., if spatial neighboring candidates are not available). Spatial neighboring candidates may not be available, for example, if neighboring blocks are encoded using intra prediction or inter prediction. Locations of the spatial candidate neighboring blocks, relative to a current block, being encoded using IBC may be illustrated in a manner similar to spatial candidate neighboring blocks used for coding motion vectors in inter prediction (e.g., as shown in FIG. 15A). For example, five spatial candidate neighboring blocks of a current block being coded using IBC may be respectively denoted A0, A1, B0, B1, and B2 as shown in FIG. 15A.

The most probable mode (MPM) may refer to a best mode for a current block being coded (e.g., encoded and/or decoded). For example, the MPM may refer to the intra prediction mode (IPM) that is (e.g., most likely to be) the best mode for the current block being encoded or decoded. The MPM may be determined by analyzing the intra prediction modes of the neighboring CUs (e.g., blocks) of a current block (or CU) to be coded (e.g., encoded or decoded), for example, in at least some intra prediction techniques. Video coding may use an MPM list for luma intra prediction. For example, VVC uses an MPM list (e.g., a list of 6 MPMs) for luma intra prediction. The MPM list may be derived from the intra prediction modes of the neighboring CUs, and/or may be updated as the encoder progresses through the video frame. When/If encoding a block, the encoder may determine if the current block is a candidate for any of the MPMs in the MPM list. The encoder may compare prediction errors of respective MPMs to determine which MPM from the MPM list is the best mode for the current block, for example, if the current block is a candidate for any of the MPMs in the MPM list. The encoder may evaluate all intra prediction modes (e.g., 67 in VVC) to determine the best mode for the current block, for example, if the current block is not a candidate for any of the MPMs in the MPM list.

The use of MPMs may improve (e.g., significantly improve) the coding efficiency. The use of MPMs may improve (e.g., significantly improve) the coding efficiency because the encoder does not need to signal the intra prediction mode for the current block if such mode is one of the MPMs (e.g., in the MPM list). The encoder does not need to signal the mode number which may require a significant number/quantity of bits. Instead, for example, the encoder may signal an index to the MPM list. The decoder may infer the intra prediction mode for the current block from the corresponding MPM list generated (e.g., reciprocally and identically generated) at the decoder. Advantages such as reduced signaling overhead in the bitstream and increased efficiency may be achieved.

Various types of intra modes may be considered to construct the MPM list. For example, three types of intra modes may be considered to construct the MPM list: default intra modes; neighboring intra modes; and derived intra modes. A unified MPM (e.g., 6-MPM) list may be used for intra blocks, for example, irrespective of whether Multiple Reference Lines (MRL) and Intra Sub-Partitions (ISP) coding tools are applied/used. The MPM list for the current block may be constructed, for example, based on intra modes of neighbor (or neighboring) blocks of the current block. The MPM list for the current block may be constructed, for example, based on intra modes of a left neighbor block (e.g., block corresponding to A1 in FIG. 15A) and an above neighbor block (e.g., block corresponding to B1 in FIG. 15A) of the current block. The intra mode of the left neighbor block may be denoted as Left. The intra mode of the above neighbor block may be denoted as Above. The unified MPM list may be constructed as follows: when/if a neighboring block is not available, its intra mode may be set to planar mode by default; if both modes Left and Above are non-angular modes, then the MPM list may be set to include {planar, DC, V, H, V - 4, V + 4}, where "V" and "H" may refer to vertical mode and horizontal mode, respectively; if one of modes Left and Above is an angular mode, and the other is non-angular, set a mode Max as the larger mode in Left and Above, and set the MPM list to include {planar, Max, Max - 1, Max + 1, Max - 2, Max + 2}; if Left and Above are both angular and are different, set a mode Max as the larger mode in Left and Above and a mode Min as the smaller mode in Left and Above, and if Max - Min is equal to 1, then set the MPM list to include {planar, Left, Above, Min - 1, Max + 1, Min - 2}, if Max - Min is greater than or equal to 62, then set the MPM list to include {planar, Left, Above, Min + 1, Max - 1, Min + 2}, if Max - Min is equal to 2, set the MPM list to include {planar, Left, Above, Min + 1, Min - 1, Max + 1}, or otherwise, set the MPM list to include {planar, Left, Above, Min - 1, -Min + 1, Max - 1}; and if Left and Above are both angular and are the same, set the MPM list to include {planar, Left, Left - 1, Left + 1, Left - 2, Left + 2}.

An encoder may encode an MPM index in a bitstream to indicate the position of a selected intra prediction mode in a MPM list to a decoder. The encoder may represent the MPM index as a codeword and may encode (e.g., entropy encode) the codeword into the bitstream. The decoder may derive the MPM list (e.g., in a manner identical to the encoder), and use the MPM index obtained from the codeword decoded from bitstream to obtain the intra prediction mode from the MPM list derived at the decoder. The first bin of codeword, representing the MPM index, may be context coded using an arithmetic coder (e.g., CABAC) so as to achieve additional coding efficiencies. For example, three contexts may be used, corresponding to whether the current intra block is MRL enabled, ISP enabled, or a normal intra block.

Pruning may be used to remove duplicated intra modes. Pruning may be used to remove duplicated intra modes so that the MPM list includes only unique intra modes, for example, during the 6 MPM list generation process. For entropy coding of the 61 non-MPM modes (that is, the 67 modes in VVC minus the 6 MPM), a truncated binary code (TBC) may be used.

The MPM list may be extended to include additional candidates (e.g., 16 additional candidates), and may be divided into two parts: the primary MPM (PMPM) (e.g., including 6 entries) and the secondary MPM (SMPM) (e.g., including 16 entries). The first entry in a general MPM list may be a planar mode. The remaining entries may include the intra modes of the adjacent neighboring blocks corresponding to positions left (L), above (A), below-left (BL), above-right (AR), and above-left (AL) (e.g., shown in FIG.15A as A1, B1, A0, B0, and B2), and decoder-side intra mode derivation (DIMD) modes which may be sorted in ascending order of a cost such as, for example, SAD, SSD, SATD, etc. Up to a preconfigured/predetermined number/quantity of modes (e.g., 5) with the smallest costs may be added to the MPM list. The cost for a respective MPM (e.g., an IPM corresponding to an entry in the MPM list) may be determined (e.g., computed) between the prediction of the reconstructed samples of the template of the current block and the reconstructed samples. For example, the prediction may be generated by applying/using the respective MPM for the template. Sorted directional modes may be added into the general MPM list, and then into the default modes, until a general MPM list with a predetermined quantity (e.g., 22) entries is constructed. The order of neighboring blocks may correspond to A, L, BL, AR, AL, for example, if a CU block is vertically oriented. The order of neighboring blocks may correspond to L, A, AL, AR, BL, for example, if a CU block is not vertically oriented.

As described with respect to FIG. 16, in IBC mode used/applied for screen content, a reference block (RB) may be determined as a "best matching" reference block to a current block. For example, the arrows correspond to block vectors (BVs) that indicate respective displacements from respective current blocks (CBs) to respective reference blocks that best match the respective current blocks. As described with respect to FIG. 16, the reference blocks match the respective current blocks and/or the calculated residuals may be small, for example, if not zero. Video content may be more efficiently encoded by considering symmetry properties. For example, symmetry may be present in video content, for example, in text character regions and/or computer generated graphics in screen content video.

A Reconstruction-Reordered intra block copy IBC (RRIBC) mode (e.g., referred to as IBC-Mirror Mode) may be used for screen content video coding to take advantage of symmetry within video content to further improve the coding efficiency of IBC. For example, the RRIBC mode may be signaled based on IBC mode with an indication (or flag) indicating whether flipping is applied and if flipping is used/applied, further signaling an indication (or flag) indication a direction of flipping.

A residual for the current block may be calculated based on samples of a reference block (e.g., corresponding to an original reference block being encoded and decoded to form a reconstructed block) being flipped relative to the current block based on a flip direction indicated for the current block. A residual for the current block may be calculated based on samples of a reference block being flipped relative to the current block, for example, if the RRIBC mode is indicated for encoding a current block. For example, at the encoder side, the current block (to be predicted) may be flipped before matching and residual calculation, while the reference block (used to predict the current block) may be derived without flipping. For example, at the decoder side, the current block (that was flipped at the encoder) may be determined based on the reference block and residual information, and/or flipped back to restore the original orientation of the current block before being flipped at the encoder side. For example, instead of the current block being flipped, the reference block may be flipped instead such that the reference block is flipped to encode the current block (at the encoder) and/or flipped back (at the decoder) to restore the original orientation of the reference block at the encoder. As described herein, reference to flipping the current block may alternatively refer to flipping the reference block and not the current block such that the reference block and/or the current block may be flipped in the direction with respect to each other.

In the RRIBC mode, the flip direction may include one of a horizontal direction (e.g., along an x-axis) or a vertical direction (e.g., along a y-axis) for RRIBC coded blocks. For example, for a current block coded in the RRIBC mode (e.g., an IBC advanced motion vector prediction (AMVP) coded block), a first indication (e.g., a first syntax flag) may indicate/signal whether to use flipping (e.g., also referred to as mirror flipping) to encode/decode the current block. Additionally or alternatively, for the current block, a second indication (e.g., a second syntax flag) may indicate/signal the direction for flipping (e.g., vertical or horizontal). For IBC merge, the flip direction may be inherited from neighboring blocks, without syntax signaling. For RRIBC, flipping of a current block (or a reference block) in a horizontal and a vertical direction can be represented in equations (19) and (20), respectively: $Reference \left(x, y\right) = Sample \left(w-1-x,y\right)$ $Reference \left(x, y\right) = Sample \left(x,h-1-y\right)$ where w and *h* are the width and height of a current block, respectively. Sample(x,y) may indicate a sample value located in (x,y). Reference(x,y) may indicate a corresponding reference sample value after flipping. For horizontal flipping, equation (19) may show that the current block may be flipped in the horizontal direction by sampling from right to left. For example, for vertical flipping, (20) may show that the current block may be flipped in the vertical direction by sampling the current block from down to up.

Considering the horizontal or vertical symmetry, the current block and/or the reference block may be normally aligned horizontally or vertically, respectively. The reference block may be determined from a reference region (including candidate reference blocks) aligned in the same flipping direction, as described herein. The reference block may be determined from a reference region (including candidate reference blocks) aligned in the same flipping direction, for example, based on the RRIBC mode and a flipping direction. The vertical component (BVy) of the BV (indicating a displacement from the current block to the reference block) may not need to be signaled because it may be inferred to be equal to 0, for example, if flipping in a horizontal direction is used/applied/indicated. The horizontal component (BVx) of the BV may not need to be signaled because it may be inferred to be equal to 0, for example, if flipping in a vertical direction is used/applied/indicated. For example, only one component, aligned with the direction for flipping, of the BV may be encoded and signaled for the current block.

For a current block coded in IBC mode, a BV for the current block may be constrained to indicate a relative displacement from the current block to a reference block within an IBC reference region. A BVP used to predicatively code a BV may be similarly constrained, for example, because a BVP may be derived from a BV of a spatially neighboring block of the current block or a prior coded BV as described herein. A BVD may be determined as a difference between the BV and the BVP, for example, based on the BVP. This BVD may be encoded and/or sent (e.g., transmitted) along with an indication of the selected BVP in a bitstream to enable decoding of the current block, as described herein.

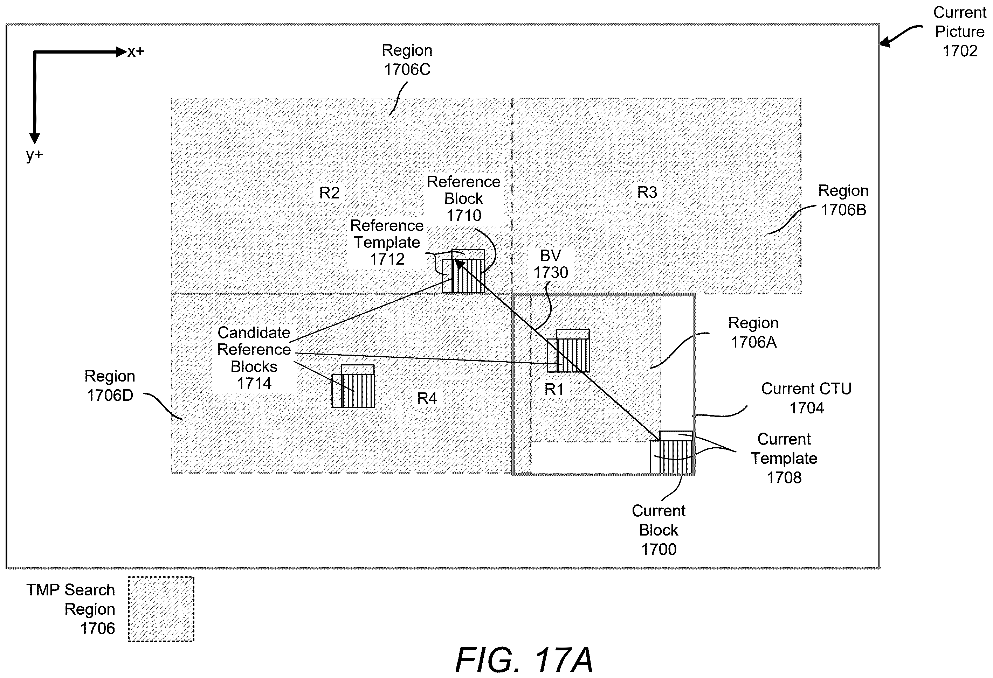

FIG. 17A shows an example of intra template matching prediction (IntraTMP). More specifically, FIG. 17A shows an example of IntraTMP for predicting and/or determining a current block 1700. IntraTMP may be an intra prediction mode that may copy a reference block, from a reconstructed part of a current picture 1702 (e.g., current frame, current frame of content), whose template (e.g., an L-shaped template, above-only template, or left-only template) may be determined to best match current template 1708 (e.g., the L-shaped template, above only template, or left-only template) of current block 1700 to predict current block 1700. Current block 1700 may comprise a rectangular block of samples, in a picture or video frame of current picture 1702, to be encoded by the encoder and/or decoded by the decoder. Current template 1708 may be determined, for example, based on samples in a reconstructed region neighboring current block 1700. Current template 1708 may comprise samples that are adjacent to the current block 1700 such as including one or more rows of samples above the current block 1700 and/or and one or more columns of samples to the left of the current block 1700. In some instances, the current template 1708 may be an L-shaped template, a top-only template, or a left-only template of the current block 1700. The L-shaped template may include the top-only template and/or the left-only template. The L-shaped template may further include an above-left template.

In IntraTMP, a plurality of reference templates of respective candidate reference blocks 1714 from a predefined TMP search region 1706 may be matched with the current template 1708 to determine and/or select a reference template 1712 that may best match (or may be most similar to) the current template 1708. A reference block (RB) 1710, selected from the candidate reference blocks 1714 and/or indicated by the selected reference template 1712, may be used as a prediction block to determine and/or predict the current block 1700. Block vector (BV) 1730 may indicate a displacement from the current block 1700 (e.g., the top left sample of current block 1700) to reference block 1710 (e.g., the top left sample of the reference block 1710).

TMP search region 1706 may comprise a portion of a reconstructed region of current picture 1702. TMP search region 1706 may indicate the regions in which the encoder and/or decoder may search for candidate templates (e.g., candidate templates of candidate reference blocks 1714), for example, to determine a reference template 1712 and/or a corresponding reference block 1710. For example, as described herein with respect to FIG. 17A, TMP search region 1706 may include region 1706A (R1) from a current CTU 1704, region 1706B (R3) including a portion of the above CTU, region 1706C (R2) including a portion of the above-left CTU, and/or region 1706D (R4) including a portion of the left CTU. The CTUs may result from picture partitioning operations as described herein. For example, the TMP search region 1706 may further include other regions of reconstructed samples of the current picture 1702.

The dimensions of TMP search region 1706 (e.g., SearchRange_w, SearchRange_h) may be set to be proportional to the dimensions of current block 1700 (e.g., BlkW, BlkH) to have a fixed number/quantity of cost comparisons (e.g., SAD) per pixel. For example, the dimensions of TMP search region 1706 may be calculated as follows: $SearchRange_w = min \left(64,α∗BlkW\right)$ $SearchRange_h = min \left(64,α∗BlkH\right)$ *α* (or alpha) is a constant that may control a gain/complexity trade-off for the encoder and/or decoder. For example, *α* may be equal to 5. The dimensions of TMP search region 1706 in FIG. 17A are shown by example and not by limitation.

The candidate templates of candidate reference blocks 1714 may have the same shape and/or size as current template 1708. For example, the candidate templates may have the same orientation as current template 1708. Matching templates may include calculating a template matching (TM) cost between samples of a candidate reference template of a candidate RB (e.g., indicated by a respective candidate block vector) and/or corresponding samples of current template 1708. The difference may be based on a sum of squared differences (SSD), a sum of absolute differences (SAD), a sum of absolute transformed differences (SATD), and/or a difference determined based on a hash function. The template matching cost may represent a similarity between the templates with a smaller cost representing more similar templates.

A position of each sample in TMP search region 1706 may be selected as a location of a candidate reference block whose respective reference template may be compared with current template 1708 to determine a TM cost. The position may be indicated by a candidate block vector that represents a displacement from current block 1700 (e.g., a top-left sample of current block 1700) to the position. One or more of TMP search region 1706 may be subsampled by a subsampling interval (e.g., 3) such that not every position is considered as a location of a candidate reference block, for example, to speed up the template matching process. A refinement process may be performed to select additional candidate block vectors, for example, after (or if) finding a set of candidates (e.g., to generate the list of candidates). The refinement process may be performed via a second template matching search in a search region around one or more of the set of candidates. The search region may be a reduced search range associated with the subsampling interval.

Based on selection of the IntraTMP by the encoder for coding the current block, the encoder may signal such selection to the decoder. The decoder may perform the same prediction and/or matching operations.

The decoder and/or the encoder may construct a candidate list of up to a predetermined maximum number/quantity (e.g., 19) of candidate block vectors (or candidate block vector predictors), for example, by performing template matching operations on candidate reference templates in TMP search regions 1706A-D. These candidate block vectors may be in ascending order based on the template matching costs of respective reference templates of candidate reference blocks indicated by the candidate block vectors.

A prediction block (e.g., a predictor) of current block 1700 may be generated using one or more of the reference blocks (e.g., reference block 1710) determined using IntraTMP as well as using/applying one or more optional filters. For example, the following modes may be supported: single predictor, fusion of multiple predictors, sub-pel precision, and/or linear filter model. A single predictor may be selected from the candidate list such as selecting reference block 1710, for example, in the single predictor mode. Multiple predictors may be blended to derive the final prediction block such as selecting two or more candidate reference blocks 1714, for example, in the fusion of multiple predictors mode. The blending weights may be computed from the template matching cost of each predictor or by using a Wiener filter-based weight derivation method. In the sub-pel precision mode, if a single predictor is used, the sub-pel precision may be used with 1/2-pel precision, 1/4-pel precision, or 3/4-pel precision, each with 8 possible directions. A linear filter may be learned (e.g., generated or derived) between the reference template and current template and be used/applied to the reference block, for example, in the linear filter model mode. This mode may be used for the single predictor, for example, if the sub-pel precision is not used.

As described with respect to FIG. 17A, reference template 1712 of reference block 1710 may be determined to best match current template 1708, for example, based on the template matching cost between reference template 1712 and current template 1708 being a minimum TM cost. The encoder may select reference block 1710 as a prediction of current block 1700 and/or signal an index of a candidate block vector, indicating reference block 1710, in the candidate list. The decoder may generate the same candidate list and determine reference block 1710, for example, based on decoding the index from the bitstream. A block vector (BV) may indicate the displacement of a reference block (e.g., reference block 1710) relative to the current block 1700.

The IntraTMP mode may be enabled for blocks (e.g., CUs) with a size (e.g., width times height) less than or equal to a threshold size (e.g., 64). The threshold size for IntraTMP may be configurable. The IntraTMP prediction mode may be signaled at a block (e.g., per CU) level through a dedicated flag.

An encoder may determine a difference (e.g., a corresponding sample-by-sample difference) between current block 1700 and reference block 1710 used to predict current block 1700. The difference may be referred to as a prediction error or residual. The encoder may store and/or signal, in a bitstream, the prediction error or residual for decoding by a decoder.

A decoder may perform the same operations as the encoder as described herein, for example, to perform TMP to code current block 1700. For example, based on receiving an indication from the encoder that IntraTMP is used to predict current block 1700 (e.g., via a flag), the decoder may similarly determine and/or construct current template 1708 of current block 1700. The decoder may further similarly search TMP search region 1706 to generate a list of candidates from which reference block 1710 may be determined, for example, after/if determining or constructing current template 1708. The decoder may obtain the block vector candidate by decoding, from the bitstream, the index of the block vector candidate in the list of candidates, for example, because the reference block may be indicated by a block vector candidate with the lowest cost in the list of candidates. The decoder may combine the residual, decoded from the bitstream, with reference block 1710 to reconstruct current block 1700. The encoder may not need to encode BV 1730 that may indicate reference block 1710 in the bitstream.

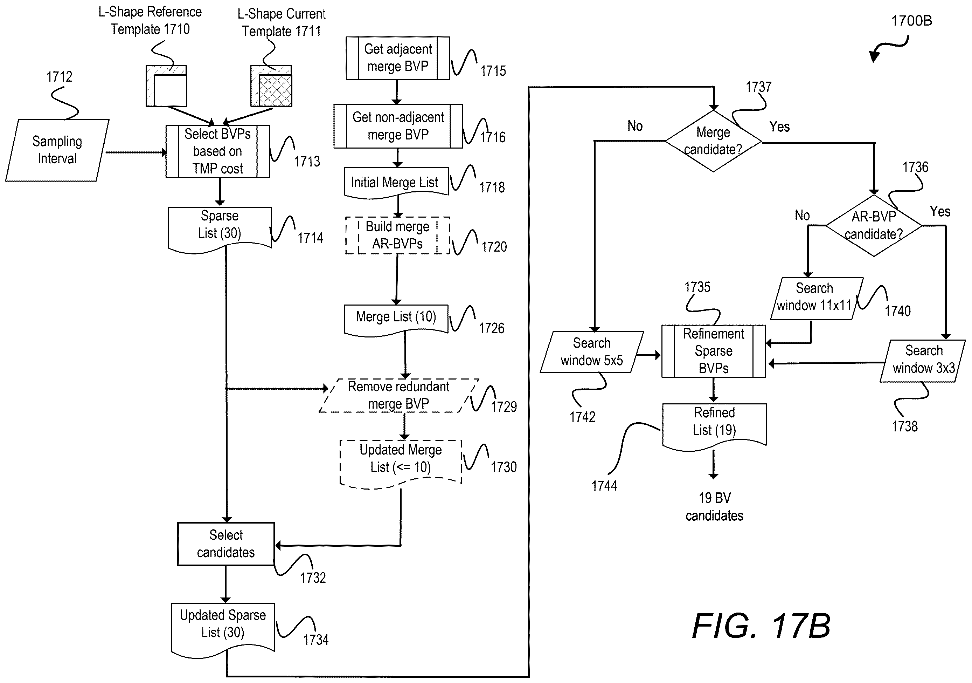

FIG. 17B shows an example method for constructing IntraTMP BVP candidates. Specifically, FIG. 17B shows an example of a method for constructing IntraTMP BVP candidates for coding a current block. As shown in FIG. 17B, an initial merge list of BVP candidates 1718 corresponding to adjacent and non-adjacent merge BVP candidates may be determined as shown at steps 1715 and 1716 in FIG. 17B. The initial merge list of BVP candidates 1718 may have a pre-determined number of BVP candidates (e.g., 10 or any other value). The initial merge list of BVP candidates 1718 may be updated, for example, based on merge AR-BVP candidates built at step 1720. The merge AR-BVPs may be generated by using/applying Auto-relocated block vector prediction (AR BVP) to BVP candidates in the initial merge list of BVP candidates 1718. The resulting list of candidates may become the merge list 1726. The initial sparse list 1714 may be used to further update the merge list 1726. The BVP candidates in the merge list of BVP candidates 1718 may be evaluated against the initial sparse list 1714 to remove (e.g., at step 1729) any redundant merge BVP candidates in the updated merge list. The updated merge list 1730 may have the same or fewer number/quantity of BVP candidates than the initial merge list of BVP candidates 1718.

The updated merge list 1730 may be used in conjunction with the initial sparse list 1714 to generate, at step 1732, the updated sparse list of BVP candidates 1734. The sparse list of BVP candidates may be selected from the initial sparse list and the updated merge list by selecting those BVP candidates having lower template matching costs than remaining candidates. The number/quantity of candidates in the sparse list may be kept the same as the number/quantity of candidates in the initial sparse list.

Generating BVP candidates for IntraTMP may include using/applying a refinement process (e.g., step 1735) to the BVP candidates in the updated sparse list 1734. The refinement process may involve a refinement window within which additional BVP candidates may be evaluated and generated. The coder (e.g., encoder or decoder) may determine a refinement search window associated with a BVP candidate to be refined. The refinement search window may be determined to be located at the position pointed by the BVP candidate from the left top sample of the current block. The size of the refinement search window may be determined, for example, based on the type of the BVP candidate. The search window 1738 for an AR-BVP candidate ("yes" branch at step 1737 and "yes" branch at step 1736) may have a first size (e.g., 3x3). The search window 1742 for a BVP candidate from the initial sparse list ("no" branch at step 1737) may have a second size (e.g., 5x5). The search window 1740 for a BVP candidate from the initial merge list ("yes" branch at step 1737 and "no" branch at step 1736) may have a third size (e.g., 11x11). The first size, the second size, and the third size may be different. The first size may be smaller than the second size which may be smaller than the third size. Additional BVP candidates may be generated, for example, based on a sampling interval in each search window. The BVP candidates having the lowest template matching costs may be included in the refined list of BVP candidates 1744.

Various decoder-side methods such as decoder-side intra mode derivation (DIMD) have been described herein. These methods may allow intra prediction of a current block to be performed without explicitly signaling any specific intra prediction modes (IPMs) in the bitstream. Such methods may be possible, for example, based on the encoder and decoder using previously encoded/decoded samples (e.g., reconstructed samples) and independently and/or identically deriving one or more of the same IPMs for coding the current block. Signaling of the IPMs may be omitted, for example, if the encoder and decoder identically determine/derive the same IPMs.

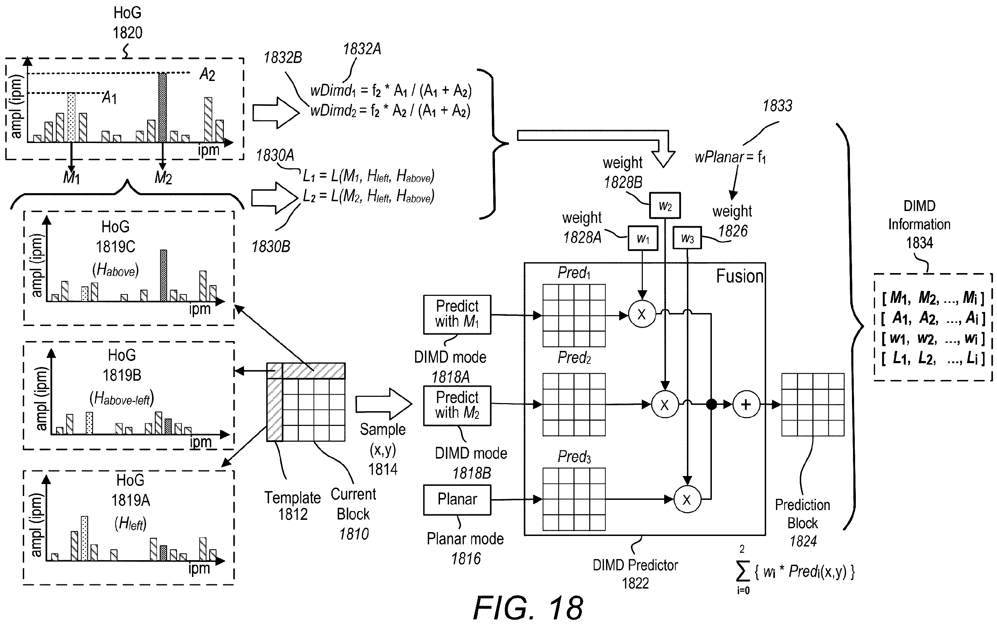

FIG. 18 shows an example of decoder-side intra mode derivation (DIMD). Specifically, FIG. 18 shows an example of decoder-side intra mode derivation (DIMD) for coding a current block 1810. DIMD is an intra coding mode in which one or more IPMs used to generate a prediction block 1824 of the current block 1810 may not be sent (e.g., transmitted) in the bitstream. The one or more IPMs may be derived by the decoder using a gradient analysis of neighboring reconstructed pixels (or reference samples) of the current block 1810. The one or more IPMs may be determined by the encoder, for example, by a rate distortion optimization (RDO) algorithm.

In DIMD, texture gradient analysis may be performed on samples in template 1812 (e.g., reference template) associated with the current block 1810 to generate a histogram of gradient (HoG) 1820. From the HoG 1820, a number/quantity (e.g., 2 or any other value) of DIMD modes such as one or more of DIMD modes 1818A-B may be derived. Each entry in HoG 1820 may correspond to a respective angular intra prediction mode (IPM) with amplitudes (or magnitudes) of the entries determined, for example, based on the gradient analysis.

Template 1812 including a set of reference samples (e.g., neighboring pixels) may be selected and/or used to perform a gradient analysis. Template 1812 including a set of reference samples (e.g., neighboring pixels) may be selected and/or used to perform a gradient analysis, for example, to derive the DIMD modes 1818A-B (and/or DIMD predictor 1822) for current block 1810. These reference samples may be part of the reconstructed portion of the picture containing current block 1810. Template 1812 may be a 3-sample-wide (e.g., in width or height) template area (e.g., composed of left, above, and/or above-left areas) defined relative to a position of the current block 1810.

The gradient analysis may be performed using edge detection filters applied to 3×3 window positions centered on the reference samples/pixels selected from template 1812. The edge detection filters may determine the amplitude and/or the angle of luminance direction (e.g., orientation) for each reference sample. The set of reference samples selected from template 1812 may include the samples in the middle line of template 1812. The edge detection filters may include a horizontal Sobel gradient filter (*Mₕₒᵣ*) and/or a vertical Sobel gradient filter (*Mᵥₑᵣ*), represented by the following 3x3 matrices that may be convoluted with selected reference samples of template 1812: ${M}_{hor} = \left[\begin{matrix}- 1 & 0 & 1 \\ - 2 & 0 & 2 \\ - 1 & 0 & 1\end{matrix}\right] and {M}_{ver} = \left[\begin{matrix}- 1 & - 2 & - 1 \\ 0 & 0 & 0 \\ 1 & 2 & 1\end{matrix}\right]$

For each of selected reference samples (e.g., pixels) of template 1812, point-by-point multiply of each of these two matrices with a 3x3 Sobel filter window may be performed and/or the results may be summed. The 3x3 Sobel filter window may be centered around the current reference sample and/or may comprise its eight direct neighbors. Two values *Gₕₒᵣ* (e.g., from the multiplication with *Mₕₒᵣ*) and *Gᵥₑᵣ* (e.g., from the multiplication with *Mᵥₑᵣ*) may be obtained, based on (e.g., corresponding to) the gradient intensities at the current sample in the horizontal and vertical direction, respectively. An angle may be calculated/determined for the window as *angle* = arctan (*Gₕₒᵣ*/*Gᵥₑᵣ*)*.* The calculated angle may correspond to (e.g., be converted into) one of the angular IPMs (e.g., one of the 65 angular IPMs), and an associated amplitude (e.g., the amplitude for the window position), defined as *amplitude =* |*Gᵥₑᵣ*| + |*Gₕₒᵣ*|, may be added to the HoG indexed by the respective IPM. Each entry in the resulting HoG 1820 may represent the cumulated amplitudes for a respective IPM, for example, after an amplitude and angle for each window position in template 1812 are processed.

As shown in FIG. 18, a number/quantity of DIMD modes 1818A-B may be determined. The number/quantity of DIMD modes 1818A-B may be determined, for example, by selecting the IPMs from HoG 1820 based on amplitudes of the IPMs. For example, IPMs M₁ and M₂ with the highest respective amplitudes A₁ and A₂ in HoG 1820 may be selected and/or used to determine DIMD modes 1818A and 1818B, respectively. For example, up to a predetermined number/quantity (e.g., 4 or any other value) of angular intra modes with the highest amplitudes may be selected from HoG 1820. The number/quantity of DIMD modes 1818A-B may be combined in a fusion/blending scheme to generate a DIMD predictor 1822.

A plurality of IPMs such as DIMD modes 1818A-B may be determined and/or combined with a planar mode 1816 in the blending/fusion process, for example, based on (e.g., corresponding to) DIMD predictor 1822. DIMD predictor 1822 may comprise a linear combination (e.g., a weighted average) of DIMD modes 1818A-B and planar mode 1816 with weights 1828A-B and 1826, respectively. Weights 1828A-B for DIMD modes 1818A-B may be determined, for example, based on amplitudes (e.g., magnitudes) associated with DIMD modes 1818A-B, respectively. For example, weight 1828A for DIMD mode 1818A may correspond to DIMD weight 1832A (e.g., *wDIMD₁*), which may be based on an amplitude A₁, from HoG 1820, associated with DIMD mode 1818A (e.g., IPM M₁), divided by a sum of amplitudes of DIMD modes 1818A-B. For example, weight 1828B for DIMD mode 1818B may correspond to DIMD weight 1832B (e.g., *wDIMD₂*), which may be based on an amplitude A₂, from HoG 1820, associated with DIMD mode 1818B (e.g., IPM M₂), divided by the sum.

Planar mode 1816 may have a weight 1826 corresponding to planar weight 1833 that may be a fixed weight *f₁* (e.g., 1/4 or 16/64 in 6-bit integer precision). The remaining DIMD weights 1832A-B may include a fixed weight portion *f*₂ (e.g., 3/4) that may be based on the fixed weight of planar weight 1833. For example, the sum of fixed weights *f*₁ and *f*₂ may be equal to 1.

DIMD predictor 1822 may be used/applied to template 1812 (e.g., current template) to determine a prediction block 1824 for current block 1810. For example, each sample (x,y) 1814 of prediction block 1824, denoted as *fusionPred,* may be determined, for example, based on using/applying DIMD predictor 1822 comprising a weighted average (e.g., a linear combination) of using/applying DIMD modes 1818A-B and planar mode 1816 with corresponding weights (*wᵢ*) as follows: $fusionPred \left(x, y\right) = {\sum }_{i = 0}^{2} \left\{{w}_{i}∗{Pred}_{i}\left(x, y\right)\right\}$ The weights (*wᵢ*) may be the DIMD weights 1832A-B (*wDimdᵢ* for mode *i*) for DIMD modes 1818A-B. The planar weight 1833 (*wPlanar*) for planar mode 1816. The weights (*wᵢ*) may be constant and/or uniformly used/applied to determine each sample (x, y) 1814 of prediction block 1824. The predictor *Predᵢ* for mode *i* may be a DIMD mode predictor (*dimdPredᵢ*) for DIMD modes 1818A-B or a planar mode predictor (*dimdPlanar*) for planar mode 1816. DIMD predictor 1822 may be represented and/or computed equivalently as follows:$\begin{matrix}fusionPred \left(x, y\right) = \left({\sum }_{i = 0}^{1} \left\{{wDimd}_{i}∗{dimdPred}_{i}\left(x, y\right)\right\} + wPlanar ∗ dimdPlanar \left(x, y\right)\right) ≫ \\ 6 .\end{matrix}$ The shifting operation may be performed, for example, due to the use of 6-bits integer precision.

The selection of DIMD may be signaled in the bitstream for intra coded blocks using a flag. At the decoder, the intra prediction mode may be derived in the reconstruction process using the same previously encoded neighboring pixels, for example, if the DIMD flag is true. The intra prediction mode may be parsed from the bitstream as in classical intra coding mode, for example, if the DIMD flag is not true.

A location-dependent DIMD mode may be used (or introduced) to adjust weights 1828A-B of angular IPMs (e.g., DIMD modes 1818A-B) in DIMD. A location-dependency process may be used/applied to determine the impact that different template regions of template 1812 have on selecting each of the IPMs, for example, if DIMD IPM derivation is performed. Template 1812 may be divided into three separate regions-including a region above current block 1810, a region to the left of current block 1810, and an above-left region of current block 1810, for example, to determine how specific samples in template 1812 contribute to inferring specific DIMD modes. The gradient analysis computation may be performed separately for samples in each region, resulting in three histograms, HoG 1819C (*H_{above}*), HoG 1819A (*H_{left}*), and HoG 1819B (*H_{aboveLeft}*), respectively. For a directional IPM *m*, *Hᵢ*[*m*] for region *i* (e.g., above, left, or above-left) represents the cumulative magnitude of all samples in region *i* at direction (or IPM) *m.*

HoG 1820, corresponding to the full histogram of gradients for the whole template 1812, may be computed as the sum of the three separate HoGs 1819A-C. The two directional IPMs with largest and second-largest cumulative amplitude (e.g., magnitude) in HoG 1820 may be selected as main and secondary DIMD modes, for example, *dimdMode*₀ and *dimdMode*₁, respectively.

HoGs 1819C and 1819A corresponding to histograms *H_{above}* and *H_{left}* may be used to determine whether *dimdMode*₀ and/or *dimdMode*₁ depend on a specific template region ABOVE or LEFT. In a first example, the location-dependency of *dimdModeᵢ,* denoted as *locDepᵢ* (e.g., shown in FIG. 18 as *Lᵢ = L*(*Mᵢ, H_{left}, H_{above}*) for DIMD mode *i*), can be defined as:

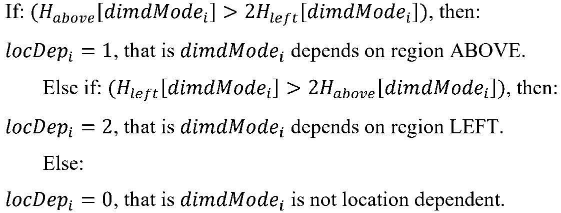

In a second example, the location-dependency of *dimdModeᵢ,* denoted as *locDepᵢ* (e.g., shown in FIG. 18 as *Lᵢ = L*(*Mᵢ, H_{left}*, *H_{above}*) for DIMD mode *i*), can be defined as: 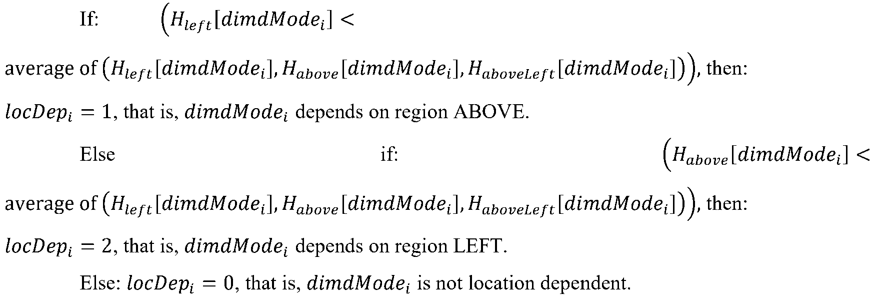 The indication of location-dependency may be determined, for example, based on comparing an amplitude of a HoG corresponding to a specific template portion with an average amplitude of the HoGs of all the template portions of the template.

Location-dependency in DIMD may be determined, for example, based on the analysis of HoG peaks amplitudes of the selected angular IPM. For example, location-dependency indications 1830A-B may be determined for DIMD modes 1818A-B, respectively. Location-dependency indication for DIMD mode 1816, which may be a planar mode, may be determined as a value representing that the mode is not location dependent or that the mode is diagonally dependent.

The fusion/blending scheme by which DIMD predictor 1822 is determined may be adjusted, for example, based on the location-dependent DIMD modes. For example, blending may be performed to fuse the main and secondary DIMD predictors, *dimdPred*₀ and *dimdPred*₁ , with the Planar predictor *dimdPlanar.* Blending/fusion with uniform weights *wDimd*₀*, wDimd*₁ and *wPlanar* may be applied as explained above, for example, if no DIMD mode is determined to be location-dependent (e.g., *locDep*₀ *== locDep*₁ *==* 0).

Sample-based blending may be used to determine DIMD predictor 1822, for example, if at least one of the DIMD modes 1818A-B is inferred to be location-dependent. A location varying/dependent weight may be used to blend the predictors at each location of sample (*x*, *y*).

The sample-based weights *wLocDepDimdᵢ*(*x, y*) for predictor *dimdPredᵢ* may be computed/determined so that the average weight used within the block is approximately equal to the uniform weight *wDimdᵢ,* with higher weights being used in the portion of the block closer to the region (e.g., ABOVE or LEFT) corresponding to *locDepᵢ* (e.g., indication *Lᵢ*), for example, if *locDepᵢ* ≠ 0. A fixed range Δ*ᵢ* may be determined and/or may be predefined, (e.g., Δ*ᵢ*= 10 or any other value) corresponding to the largest deviation of *wLocDepDimdᵢ*(*x, y*) from *wDimdᵢ.* Higher values of Δ*ᵢ* result in a higher variation of the weights within the block. For a block of size *H* × *W:* 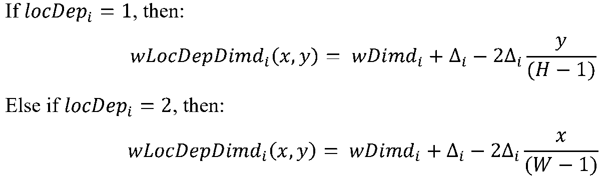 The weights *wLocDepDimdᵢ*(*x, y*) may be computed for both predictors depending on the value of *locDepᵢ,* as described herein, for example, if both DIMD modes 1818A-B (*i*=*0* and *i=1*) are associated with location-dependency indications *Lᵢ* that indicate location dependency (i.e., *locDepᵢ* ≠ 0 for modes *i =* 0,1). If only one of DIMD modes 1818A-B is associated with a location dependency indication *Lᵢ* indicating that it is location dependent, e.g., *locDepᵢ* = 0 and *locDep*_{(1-*i*)} ≠ 0, then the weights for *wLocDepDimdᵢ*(*x, y*) may be computed as: ${wLocDepDimd}_{i} \left(x, y\right) = {wDimd}_{i} - \frac{{wLocDepDimd}_{\left(1-i\right)} \left(x, y\right) - {wDimd}_{\left(1-i\right)}}{2}$

Weight 1826 for the planar predictor *wLocDepPlanar*(*x, y*) may be computed as: $wLocDepPlanar \left(x, y\right) = 64 - {\sum }_{i = 0}^{1} \left\{{wLocDepDimd}_{i}\left(x, y\right)\right\}$ The final location-dependent DIMD predictor 1822 may be used/applied to generate each sample (x,y) of prediction block 1824 as follows: $fusionPred \left(x, y\right) = \left(\begin{matrix}{\sum }_{i = 0}^{1} \left\{{wLocDepDimd}_{i}\left(x, y\right)∗{dimdPred}_{i}\left(x, y\right)\right\} \\ + wLocDepPlanar \left(x, y\right) ∗ dimdPlanar \left(x, y\right) + 32\end{matrix}\right) ≫ 6$ As described herein, planar mode 1816 may be systematically used/applied in the blending process with a fixed weight *f₁* (e.g., ¼ or 21/64). The shifting operation may be performed, for example, due to the use of 6-bits integer precision.

DIMD information 1834 may include DIMD parameters that are generated and/or stored in association with current block 1810, for example, based on current block 1810 being coded using DIMD. The DIMD parameters may include indications of the selected DIMD modes 1818A-B (*M₁, M₂, ..., Mᵢ*), amplitudes from HoG 1820 (*A₁, A₂, ..., Aᵢ*) of the selected DIMD modes 1818A-B, and/or weights 1828A-B (*w₁*, *w₂*, ..., *wᵢ*) of the selected DIMD modes 1818A-B. Weights 1828A-B may be the DIMD weights 1832A-B corresponding to selected DIMD modes 1818A-B. The DIMD parameters may include location-dependency indications (*L₁, L₂, ..., Lᵢ*) of the selected DIMD modes 1818A-B. DIMD information 1834 may include a plurality of lists (e.g., arrays) of DIMD parameters with each list corresponding to a different DIMD parameter type. The plurality of lists may include a list of IPMs, a list of amplitudes, a list of weights, and/or a list of indications of location-dependency. Parameters at the same index across the plurality of lists may correspond to the same DIMD mode or IPM indicated by the index to the list of IPMs.

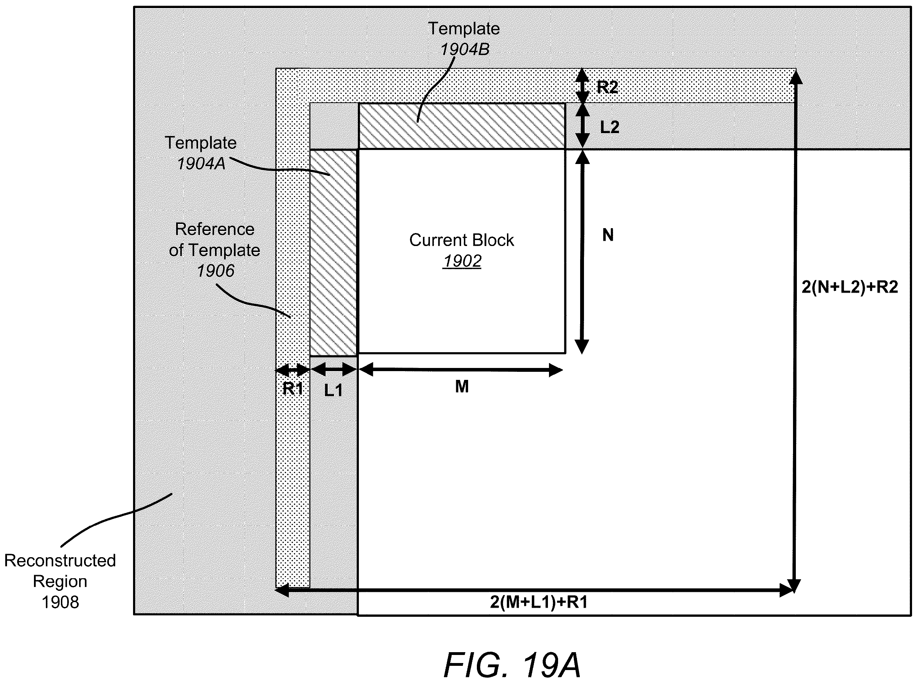

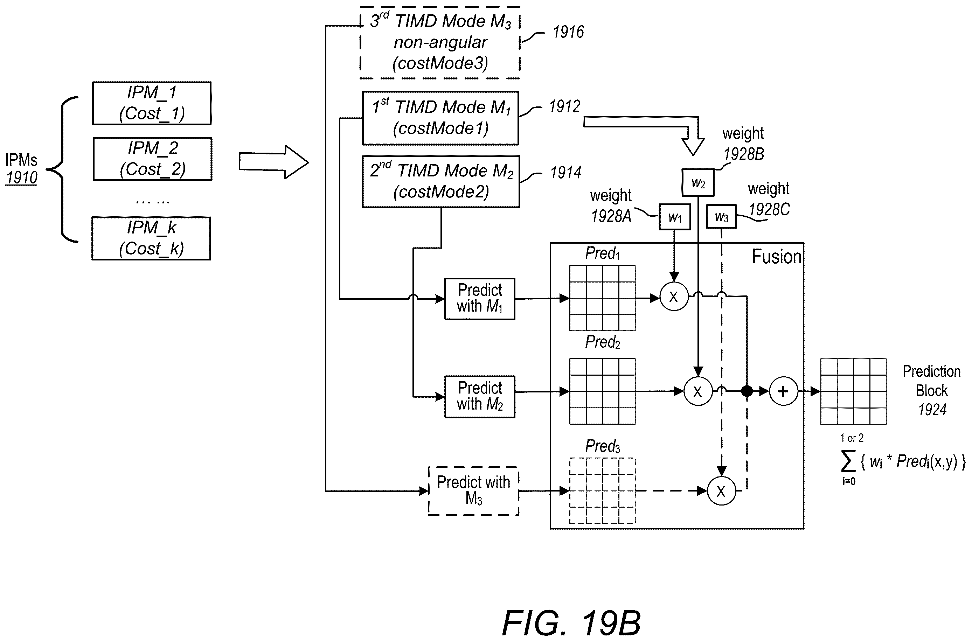

FIG. 19A shows an example of template-based intra mode derivation (TIMD). Specifically, FIG. 19B shows an example of template-based intra mode derivation (TIMD) for coding a current block. The TIMD mode may be a type of intra prediction in which an intra prediction mode (IPM) may be identically determined (e.g., independently derived) by an encoder (e.g., encoder 114 of FIG. 1, encoder 200 of FIG. 2) and/or a decoder (e.g., decoder 120 of FIG. 1, decoder 300 of FIG. 3). The IPM(s) determined (e.g., selected) by the encoder may not need to be signaled to the decoder. Hence, signaling bandwidth may be reduced, and TIMD may be considered as a type of decoder-side intra mode derivation process.

As shown in FIG. 19A, in the TIMD mode, a video coder (e.g., encoder 114 of FIG. 1, encoder 200 of FIG. 2, decoder 120 of FIG. 1, or decoder 300 of FIG. 3) may determine a template 1904 (e.g., 1904A and/or 1904B of FIG. 19A) for current block 1902. Template 1904 may comprise one or more regions of samples in a reconstructed region 1908 of a current picture (or frame) of current block 1902. The one or more regions may include reconstructed samples neighboring (e.g., adjacent to) the current block 1902. The one or more regions of the template 1904 may comprise a template region 1904A to the left of the current block 1902 (e.g., a left template) and/or a template region 1904B above the current block 1902 (e.g., an above template). The template 1904 may include a region that is above and/or to the left of the current block 1902 (e.g., the region enclosed by reference of template 1906 and template regions 1904A-B). Template regions 1904A and 1904B may have a thickness (e.g., width and height, respectively) of L1 and L2 samples, respectively. For example, L1 and/or L2 may be 2 samples, 4 samples, 8 samples, etc. Template region 1904A may have a height of N samples, which may be a height of current block 1902. Template region 1904B may have a width of M samples, which may be a width of current block 1902.

In the TIMD mode, reference of template 1906 may be used to derive a template predictor for template 1904. The video coder may determine (e.g., select and/or obtain) reference of template 1906 as a region of samples (e.g., in reconstructed region 1908) neighboring (e.g., adjacent to) template 1904. Reference of template 1906 may comprise reconstructed samples left and/or above template 1904. Reference of template 1906 may have a thickness to the left of template region 1904A of R1 samples and/or a thickness above template region 1904B of R2 samples. For example, R1 and/or R2 may be 1 sample, 2 samples, 4 samples, etc. Reference of template 1906 may include an upper region having a width greater than template region 1904B (e.g., a width that is greater or equal to twice the width of template region 1904B, 2(M+L1) samples, 2(M+L1)+R1 samples, etc.). Reference of template 1906 may include a left region having a height greater than template region 1904A (e.g., a height that is greater or equal to twice the height of template region 1904A, 2(N+L1) samples, 2(N+L1)+R2 samples, etc.).

A TIMD mode predictor may be determined using a list of candidate intra prediction modes (IPMs), such as the list of IPMs 1910 shown in FIG. 19B. The list may include IPMs from a most probable mode (MPM) list. One or more of a DC mode, a planar mode, a horizontal and/or vertical DC mode, or a horizontal and/or vertical planar, may be added to the list of candidate IPMs. A cost (e.g., SAD or SATD) for each candidate IPM in the list may be determined, for example, based on differences between reconstructed samples in template 1904 and predicted samples of template 1904 generated based on reference of template 1906 and using the candidate IPM. The video coder may determine the predicted samples by using/applying the candidate IPM to samples of reference of template 1906. Using/applying the candidate IPM may include interpolating the predicted samples of template 1904 from samples in the reference of template 1906 based on the candidate IPM (e.g., a direction or angle corresponding to the candidate IPM), similar to the intra prediction process described herein with respect to FIG. 10, FIG. 11, and/or FIG. 12.

A first IPM and a second IPM, from the list, with the lowest costs of costs determined for candidate IPMs in the list may be selected to determine (e.g., derive) a first TIMD mode 1912 and a second TIMD mode 1914.Tthe first and second TIMD modes may be determined as the first and second IPMs, respectively.

The first and second TIMD modes may be determined by refining the first and second IPMs. An angular mode range may be extended from a first range of the list (e.g., 67 modes or any other value) to a second range (e.g., 131 modes or any other value) and costs of the two adjacent modes (e.g., +/-1 mode or any other value) of each selected IPM may be determined. The first TIMD mode may be determined as an IPM having the smallest cost among costs of the first IPM and its two adjacent modes in the second range. The second TIMD mode may be determined as an IPM having the smallest cost among costs of the second IPM and its two adjacent modes in the second range.

A TIMD mode predictor 1922 may be determined, for example, based on combining (e.g., blending or fusing) the first TIMD mode 1912 and the second TIMD mode 1914. For example, the TIMD mode predictor may be a linear combination of the predictors generated by the first TIMD mode 1912 and the second TIMD mode 1914. Each weight (1928A or 1928B in FIG. 19B) of the first and second TIMD modes, in the linear combination, may be determined, for example, based on costs, costMode1 and costMode2, of the first and second TIMD modes, respectively. For example, a weight, for a TIMD mode, may be determined as being inversely proportional to a cost of the TIMD mode. The TIMD mode predictor may be used/applied to template 1904 to determine a prediction block 1924 for current block 1902.

A third TIMD mode 1916 may be selected for the current block 1902. The third TIMD mode 1916 may be a non-angular intra prediction mode (e.g., DC or Planar) with the lowest cost among the non-angular IPMs. This non-angular mode 1916 and the first two TIMD modes 1912 and 1914 may be fused to generate the prediction block 1924.

Not all three TIMD modes may be used to generate the TIMD mode predictor. For example, the third TIMD mode (e.g., the non-angular intra prediction mode) may be used in the fusion, for example, if certain conditions are satisfied. The conditions may include, for example, one or more of (1) the non-angular intra prediction mode being different from each of the first two TIMD modes, and (2) the cost of the third TIMD mode being smaller than a threshold. The threshold may be determined as a scaled value of the lowest cost value of the first two TIMD modes (e.g., costMode3 < *α* * costMode1). For example, costMode3 may be the cost of third TIMD mode 1916 (the non-angular IPM) and costMode1 may be the cost of the first TIMD mode 1912 (e.g., the TIMD mode having a lower cost among the first and second TIMD modes). The scaling factor *α* may be 1.5 or any other value. If both conditions are satisfied, three TIMD modes 1912, 1914, and 1916 may be used to generate the prediction block 1924. The weight 1928 of the *i*-th intra prediction mode (*i*=1, 2, 3) may be computed from the costs of these three modes as follows: ${weight}_{i} = \frac{sumCost - {costMode}_{i}}{2 \times sumCost} , sumCost = {\sum }_{j = 1}^{3} {costMode}_{j} .$ If the above two conditions are not both satisfied, the third TIMD mode 1916 (e.g., the non-angular intra prediction mode) may not be used in the prediction.

The costs of the first two selected TIMD modes 1912 and 1914 may be compared to determine whether the fusion is to be used/applied. For example, a ratio of the costs of the two TIMD modes may be compared with a threshold as follows: $\frac{costMode 2}{costMode 1} < β$ (e.g., *β* = 2 or any other value). If this condition is satisfied, the two TIMD modes 1912 and 1914 may be fused to generate the prediction block 1924 as described herein. Otherwise, only the first TIMD mode 1912 (e.g., the mode having the lower cost) may be used to generate the prediction block 1924.

With the generated TIMD prediction block 1924, an encoder may generate a residual (e.g., prediction error), for example, based on a difference between the prediction block 1924 and current block 1902. A decoder may reconstruct the current block 1902, for example, based on the reciprocally generated prediction block and the residual received from the encoder in a bitstream.

The TIMD modes may be stored as corresponding (or refined) IPMs in DIMD information used in coding current block 1902. Additionally, the DIMD information may include parameters such as the costs and/or derived weights for the IPMs corresponding to the TIMD modes. Unlike the DIMD information stored for intra coding modes such as DIMD, MIMD, OBIC, DIMD Merge List, the DIMD information stored for the TIMD mode does not include amplitudes of histograms. The DIMD information may include parameters such as indications of location-dependency, referred to as directionalities, determined for the IPMs corresponding to the TIMD modes.

Directionalities (e.g., first and second directionality) of the TIMD modes (e.g., first and second TIMD modes) may be determined, for example, based on costs of the TIMD modes. A directionality or location-dependency indication may include: horizontal, indicating that prediction samples closer to the left boundary of the current block may be likely to be more spatially correlated with the parameters (e.g., weight) for the determined TIMD mode; vertical, indicating that prediction samples closer to the above (or upper) boundary of the current block may be likely to be more spatially correlated with the parameters (e.g., weight) for the determined TIMD mode; no direction; and/or diagonal, indicating a combination of horizontal and vertical. No direction may correspond to and/or indicate the diagonal direction.

For a selected TIMD mode (e.g., a candidate minimizing SATD cost computed in the template area), the directionality (e.g., indicating location-dependency) may be determined, for example, based on which portion(s) of the current template contributes the most to the selection of the TIMD mode. There may be as many location-dependency directionalities as regions of the current template. For example, a current template may comprise a first region (e.g., template region 1904B) and/or a second region (e.g., template region 1904A). The location-dependency state associated to the TIMD mode may be set to "vertical", for example, if it is determined that the above template is the most impactful template for the selection of the TIMD mode. Sample-wise vertical fusion may be operated for blending this TIMD mode. The location-dependency state associated to the selected predictor may be set to "horizontal", for example, if it is determined that left template is the most impactful template for the selection of the TIMD mode. Sample-wise horizontal fusion may be operated for blending this TIMD mode. The associated location-dependency state may be set to "non-location-dependent," and neither sample-wise process may be operated (e.g., regular block-wise weight blending may be achieved or applied), or a sample-wise diagonal fusion may be operated for blending the TIMD mode, for example, if templates participation in the selection of the TIMD mode is balanced. Location-dependency state associated to selected TIMD mode may impact directionality of the sample-wise TIMD fusion process. The first region and the second region may overlap or may not overlap.

The directionality may be determined, for example, based on availability of template samples and/or template regions. For example, only one template region may be available at the picture border. For example, if only the first region (e.g., left template) is present or available, a first directionality may be determined (e.g., location-dependency being set to 2 indicating horizontal) corresponding to that first region. A second directionality may be determined (e.g., location-dependency being set to 1 indicating vertical) corresponding to that second region. A second directionality may be determined (e.g., location-dependency being set to 1 indicating vertical) corresponding to that second region, for example, if only the second region (e.g., above template) is present or available. The value may be set to, for example, 0, which may indicate a diagonal direction. The value may be set to, e.g., 0, for example, if the location dependency is determined to be not enabled (e.g., disabled).

The impact may be determined, for example, based on comparing a first cost of the first region with a second cost of the second region. The cost may be calculated in a manner similar to how TIMD costs are calculated, e.g., using SATD, sum of squared error (SSE), or SAD. A lower cost may indicate higher impact. A ratio may be calculated between the first cost and the second cost to determine which region has greater impact and/or determine the directionality of the TIMD mode.

For the first cost for the first region (e.g., a left template region/area) and the second cost for the second region (e.g., an above template region/area), determination of the directionality of the TIMD mode may be determined as follows:

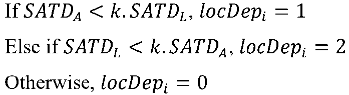

The costs may be represented as SATD costs or any other costs. *SATD_{A}* is the SATD cost associated with a selected TIMD mode and computed in the second region (e.g., above template). *SATD_{A}* is the SATD cost associated with a selected TIMD mode and computed in the first region (e.g., left template). *locDepᵢ* is the location-dependent parameter value associated with the *i*-th selected TIMD mode (e.g., *i* belongs to [0;2]). A value of 0 may indicate no location-dependency. A value of 1 may indicate vertical location-dependency of the *i*-th selected TIMD mode. A value of 2 may indicate horizontal location-dependency of the *i*-th selected TIMD mode. *k* is a scaling factor. For example, *k* may be a value less than 1. For example, *k* may be a value comprised in the range [1/10; 1/6] such as, for example, 1/8.

If a candidate TIMD mode is non-angular (e.g. DC or Planar mode), the associated location-dependency state (e.g., directionality) may be set to 0 (e.g., indicating no-location-dependency), as it is expected that these "flat" modes, if selected, may not exhibit large differences in terms of relative template SATD. A location-dependency state may be determined (e.g., derived) for the candidate non-angular TIMD mode similar to how the location-dependency state is determined for an angular TIMD mode, as described herein.

A directionality of a non-angular mode may be derived/determined, for example, based on a plurality of directional non-angular modes (e.g., directional DC, directional planar) corresponding to that non-angular mode. For example, the directionality may be determined as being corresponding to direction of the lowest cost (e.g., SATD cost) of the directional non-angular modes (e.g., among vertical, horizontal and original modes). Template SATD cost may be computed for original, horizontal, and vertical Planar modes. Location-dependency or the directionality for the planar mode may be set to horizontal, for example, if horizontal planar mode has the minimum SATD among the three planar modes. Location-dependency or the directionality for the planar mode may be set to vertical, for example, if vertical planar mode has the minimum SATD among the three planar modes. The directionality may be set to diagonal (or possibly sample-wise fusion is deactivated), for example, if the original planar mode has the minimum SATD. The regular original non-angular mode may be used during the fusion process, for example, although a directional non-angular mode has a lowest SATD.

Another intra mode prediction technique may propose to combine the benefits of TIMD and inter-prediction merge modes to obtain a new efficient intra-prediction mode referred to herein as the "TIMD merge mode." For each CU predicted, TIMD merge mode may include building a list of TIMD information and/or selecting one to be used to reconstruct the current block. This list, referred to as "list of TIMD merge candidates," may be built from the TIMD information from various spatial neighbors (e.g., neighboring blocks in the current frame). The TIMD information may already be available for several of the intra neighboring CUs (e.g., spatial neighboring blocks) coded in TIMD mode or non-TIMD mode as many intra coding modes require TIMD information to increase the coding speed. The TIMD information may include prediction modes, fusion flag, fusion weights, and/or wide-angle conditions of TIMD modes.

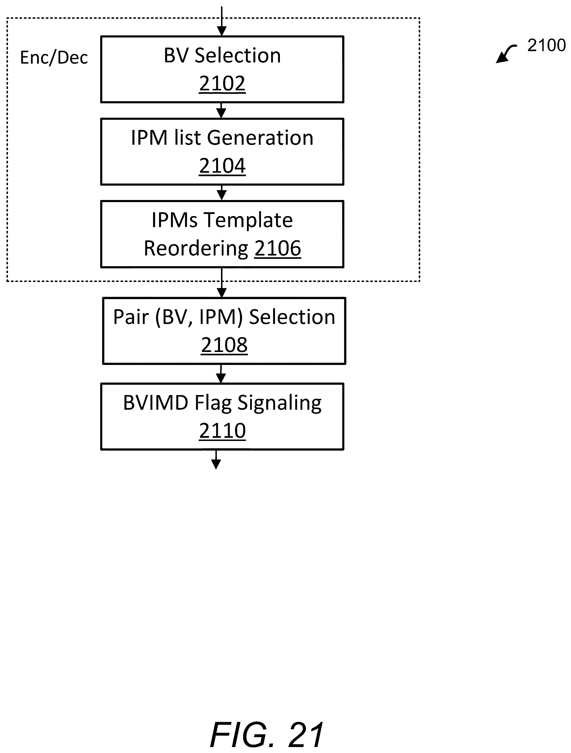

An initial list of TIMD merge candidates may be constructed, for example, based on a given checking order of respective TIMD merge candidate families, such as TIMD information of spatial adjacent candidates, TIMD information of spatial non-adjacent candidates as shown in FIG. 21. The list of TIMD merge candidates may have a predetermined maximal number/quantity of TIMD merge candidates (e.g., 10 or any other value). The generation process may be stopped, for example, if the maximal number/quantity is reached (e.g., if the list is full). The generation of the list may ensure that no TIMD merge candidates with duplicate TIMD information may be added to the list.

The merge candidates may be sorted based on the SATD cost over the template of the current block, for example, after forming the TIMD merge list. For the weight calculation, the SATD costs of the pair TIMD modes may be normalized using their respective fusion weights. For example, if a merge candidate has two intra modes (e.g., IPM1, IPM2) with fusion weights (e.g., W1, W2), the candidate's cost may be calculated as: $Cost = \left(SATD\left({IPM}_{1}\right)*{W}_{1}+SATD\left({IPM}_{2}\right)*{W}_{2}\right) ≫ shift .$

The template size and the template cost calculation aspects may be the same as those in the TIMD mode. The two best candidates from the list may be selected to be used in encoder RDO algorithm, for example, after sorting the TIMD merge candidates.

Usage of the mode may be signaled with a CABAC-coded CU-level flag. The TIMD merge mode may be used as a sub-mode of the TIMD tool. A CABAC-coded index may be signaled to indicate whether the first or the second candidate is used from the merge, for example, if the TIMD merge mode is enabled.

The TIMD merge list may be extended to consider TIMD information of history-based spatial candidates, TIMD information of combined candidates, and/or default TIMD information candidates. The maximal number of candidates per family may be bounded.

The TIMD mode, the TIMD merge mode, and any other mode derived from TIMD mode may be collectively referred to as "TIMD-based modes or sub-modes." The process involved in a TIMD-based mode or a DIMD-based mode may be referred to as the "intra coding sub-mode derivation process."

TIMD may be modified to support the use of block vectors to derive one of the intra modes. The IBC block vector candidates or IntraTMP block vector candidates of neighboring blocks (e.g., in the merge list) may be evaluated and/or considered to replace one of the TIMD intra modes such as one of TIMD modes 1916, 1912, and 1914 described herein with respect to FIG. 19A and/or FIG. 19B. The IBC block vector candidates or IntraTMP block vector candidates of neighboring blocks (e.g., in the merge list) may be evaluated and/or considered to replace one of the TIMD intra modes, for example, if deriving the TIMD intra modes (up to three IPMs). A BV candidate may be used to replace any one of the TIMD modes, for example, if the cost associated with the block vector candidate is lower than the cost of that TIMD mode. The reference block indicated by the BV candidate may be used to replace the prediction generated by the TIMD intra mode for fusion with the predictions of remaining TIMD intra modes, for example, if there are any. Only the third non-angular TIMD intra mode may be replaced by the BV candidate, for example, if the cost associated with the block vector candidate is lower than the cost of the non-angular TIMD intra mode. The BV candidate used to replace one of the TIMD intra modes may be referred to as a "TIMD BV."

As described herein, some intra coding modes, such as the DIMD-based mode (e.g., DIMD, MIMD, DIMD Merge, OBIC) or the TIMD-based mode (e.g., TIMD or TIMD merge), may generate a prediction of the block by combining a first prediction based on an intra prediction mode (IPM) and a second prediction based on the coding BV. These types of intra coding modes may be collectively referred to as an "IPM-based intra coding mode."

In at least some intra-based prediction modes, such as in directional/angular intra prediction mode and/or in non-directional/non-angular intra prediction mode, an index of a utilized intra coding mode is explicitly signaled. The index of the selected intra prediction mode (IPM) must be explicitly signaled in the bitstream, for example, if the Most Probable Mode (MPM), Secondary MPM, or non-MPM lists are utilized for coding. Such additional bits used to signal the index (or indices) of selected IPM(s) may increase the bitrate of the coded bitstream, thereby decreasing the coding efficiency.

As described herein, block vector-based intra mode derivation (BVIMD) may be used, for example, to increase coding efficiency. In BVIMD, an intra coding mode for a block may be derived at an encoder and/or a decoder rather than being signaled in a bitstream. For example, an intra coding mode for a block may be derived using one or more reference blocks (RBs) pointed to by one or more block vectors (BVs) associated with the block, rather than using the block, which may be available only at an encoder.

Such derivation of the intra coding mode may eliminate the need for explicit signaling of an intra prediction mode of the block and/or may reduce signaling overhead. The BVIMD may use reconstructed reference block pixels for intra mode derivation. The reconstructed reference block pixels may have a more direct correlation with the current block and/or may provide more accurate predictions as compared with other intra mode derivation methods, such as DIMD and/or TIMD, which may rely on gradient analysis of neighboring reconstructed pixels. The BVIMD may be more accurate and/or may need fewer bits to represent the prediction residual, further reducing the bitrate.

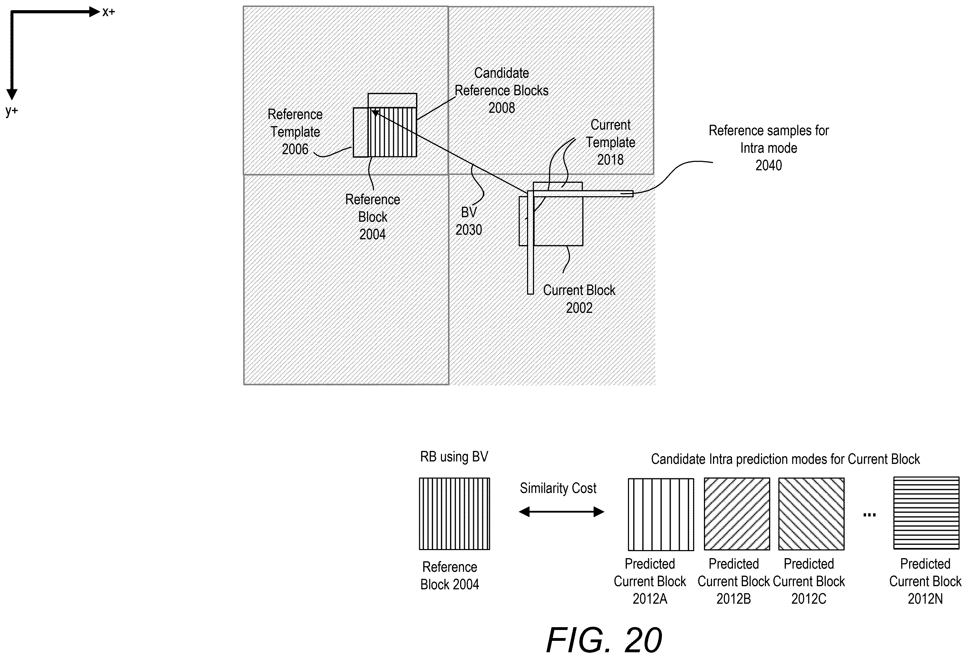

FIG. 20 shows an example of determining an intra coding mode for a block using a BVIMD. Reference samples 2040 for determining an intra coding mode of the current block 2002 may be determined. Reference samples 2040 for determining an intra coding mode of the current block 2002 may be determined, for example, for a current block 2002. The reference samples 2040 may include reconstructed samples from neighboring blocks of the current block, such as the samples of neighboring block(s) above the current block and/or samples of neighboring block(s) to the left of the current block. An intra prediction mode (IPM) may be used/applied to the reference samples 2040 to determine a predicted current block. A set of predicted current blocks 2012A, 2012B, 2012C, ..., 2012N may be generated. A set of predicted current blocks 2012A, 2012B, 2012C, ..., 2012N may be generated, for example, by using/applying each IPM in a list of candidate IPMs to the reference samples 2040. The reference samples 2040 may include multiple reference lines, for example, if the current block is coded using the multiple reference line (MRL) mode. The predicted current blocks 2012A, 2012B, 2012C, ..., 2012N may be generated, for example, based on these multiple reference lines. The use of multiple reference lines may enhance the robustness of the derived intra prediction. The MRL mode may be used at the prediction stage of the current block without using the MRL mode during the intra mode derivation process.

The IPM leading to the predicted current block 2012 that may be the most similar to the current block 2002 may be selected, for example, to determine the intra coding mode for the current block. The similarity may need to be measured between a predicted current block and a block that resembles the current block 2002, for example, because the decoder does not have access to the current block 2002. In the BVIMD, a reference block pointed to by a block vector (BV) 2030 associated with the current block 2002 may be used to calculate the similarity for determining the intra coding mode of the current block 2002.

The BV 2030 associated with the current block 2002 may be a BV determined via the template matching prediction (e.g., TMP or IntraTMP) used/applied on the current block 2002. As described herein (e.g., with respect to FIG. 17B), the TMP/IntraTMP may generate various BVP lists, such as the merge list 1726, the sparse list 1714 or 1734, the refined list 1744 and so on. The BV 2030 used to determine the intra coding mode for the current block 2002 may be selected from one or more of these BVP lists. The TMP/IntraTMP may be used/applied to the current block 2002. The TMP/IntraTMP may be used/applied to the current block 2002, for example, based on the current template 2018 and/or reference templates of potential reference blocks. A set of BV candidates may be determined to include BV candidates in the BVP lists generated by using/applying the TMP/IntraTMP to the current block 2002, such as the merge list, the sparse list, and/or the refined list.

A partial process of the TMP/IntraTMP search may be used/applied to derive fewer BVP lists. A partial process of the TMP/IntraTMP search may be used/applied to derive fewer BVP lists, for example, to reduce the complexity of the BVIMD. The TMP/IntraTMP search may be used/applied to derive the sparse BVP candidates. The TMP/IntraTMP search may be used/applied to derive the merge BVP candidates, including or not including the ARBVP candidates. The TMP/IntraTMP search may be used/applied to derive the sparse list and the merge list, but not the refined list. Other partial implementations of the TMP/IntraTMP to obtain BVP candidates may be possible. The BV associated with the current block may be a BV derived from any type of BV-based process, such as IBC, inter prediction, and so on.

The derived BV candidates may be reordered. The derived BV candidates may be reordered, for example, based on their associated template matching costs. The BV candidate with the lowest template matching cost may be selected to identify the reference block for intra coding derivation. For example, as described herein with respect to FIG. 20, the BV 2030 may be selected to be the BV candidate having the lowest template matching cost in the set of BV candidates. The reference block 2024 pointed to by the BV 2030 may be used to replace the current block 2002 for derivation of the intra coding mode. Each of the predicted current blocks 2012A, 2012B, 2012C, ..., 2012N may be compared with the reference block 2004 to determine a similarity metric. The IPM whose predicted current block is most similar to the reference block 2004 may be selected as the intra coding mode of the current block 2002.

The similarity may be evaluated using cost metrics such as Sum of Absolute Differences (SAD), Sum of Absolute Transformed Differences (SATD), sum of squared error (SSE), or Hadamard Transform (HAD) cost. Equation. (23) shows an example of using the SAD metric for determining the intra coding mode, denoted as *m,* of the current block. The encoder and the decoder may independently calculate the SAD cost between the reference block (RB) pointed to by the selected block vector (BV) and the predicted coding block (CB) generated using the intra prediction mode *m.* ${argmin}_{m} SAD \left(RB, {{CB}^{˜}}_{m}\right) = {argmin}_{m} {\sum }_{i = 1}^{M} {\sum }_{j = 1}^{N} \left|RB\left(i, j\right)-{{CB}^{˜}}_{m}\left(i, j\right)\right|$ *RB(i,j)* may represent the pixel value at position *(i, j)* in the reference block. ${{CB}^{˜}}_{m}$ may denote the predicted pixel value at position *(i, j)* using the intra prediction mode *m. M* and *N* may be the dimensions of the block.

The intra coding mode *m* may be selected, for example, based on the criterion of minimizing the SAD cost. The mode *m* that yields the lowest SAD value may be chosen as the intra coding mode of the current block. This process may ensure prediction accuracy, for example, by selecting the mode that best approximates the reference block.

More than one BV candidate may be selected for the derivation of the intra coding mode of the current block. Multiple BV candidates with the lowest TM costs may be selected. The intra prediction mode with the lowest cost (highest similarity) derived from the respective RB may be selected, for example, for each of the multiple BV candidates. Equation. (24) may demonstrate the derivation of intra prediction mode *m* from different BVs (indexed by *k*) and its corresponding block, *RBₖ.* For each BV *k,* at least one prediction mode m may be selected. ${argmin}_{m} SAD \left({RB}_{k}, {{CB}^{˜}}_{m}\right) = {argmin}_{m} {\sum }_{i = 1}^{M} {\sum }_{j = 1}^{N} \left|{RB}_{k}\left(i, j\right)-{{CB}^{˜}}_{m}\left(i, j\right)\right|$ The selected multiple IPMs from the multiple BV candidates may be evaluated to determine the intra coding mode for the current block. For example, the multiple IPMs may be filtered to remove duplicates. The IPM among the multiple IPMs that has the lowest cost (highest similarity) may be selected as the intra coding mode of the current block, for example, if there are still more than one IPM.

The BV or multiple BVs used for deriving the intra coding mode of the current block may be determined. The BV or multiple BVs used for deriving the intra coding mode of the current block may be determined, for example, by selecting the BV(s) that minimize the difference between the reference block and the original current block. The index(es) corresponding to the selected BV(s) may be explicitly signaled in the bitstream.

The intra prediction using the intra prediction mode *m* may be performed through conventional methods, such as angular or non-angular modes. Alternatively or additionally, the intra prediction using the intra prediction mode *m* may use a neural network-based prediction mode that uses sequential matrix multiplications and LeakyReLUs (e.g., piecewise-linear functions), or a matrix-based intra prediction such as MIP or PDP (matrix-based position dependent intra prediction). For example, in MIP, a matrix of weights may be defined for a block shape and/or intra mode. These weights may be multiplied by the neighbour reference template to derive the prediction samples replacing conventional intra prediction as described in JVET-AH0209: EE2-2.13: Matrix based intra prediction replacing conventional intra modes*,* the content of which is incorporated by reference in its entirety.

BVIMD may need to be signaled in the bitstream so that the decoder can perform the same process to derive the intra coding mode, for example, if the BVIMD is used by the encoder to determine the intra coding mode of a block. The BVIMD may be signaled as an independent mode, similar to DIMD or TIMD. Alternatively or additionally, the BVIMD may be implemented as a sub-mode within another mode such as the DIMD. BVIMD may be signaled, for example, if the obicMode flag is set to false in DIMD mode.

The coder (e.g., encoder or decoder) may use/apply BVIMD, for example, if a condition for enabling the BVIMD is satisfied. The condition may be based on one or more of a size of the current block, a coding mode of the current block, a quantization parameter of the current block, a quantization parameter of a slice comprising the current block, or a type of a slice comprising the current block. The condition may include the size of the current block being greater than a predetermined value. The condition may include the width and height of the current block being different (or the same). The encoder may signal, in a bitstream, an indication of the condition for enabling the BVIMD. The decoder may obtain, from the bitstream, the indication of the condition for enabling the BVIMD. The indication may specify a maximum block size comprising a maximum block width or height. The indication may specify a minimum block size comprising a minimum block width or height. The indication may specify a maximum ratio or a minimum ratio between a maximum of a block width and a block height and a minimum of the block width and the block height.

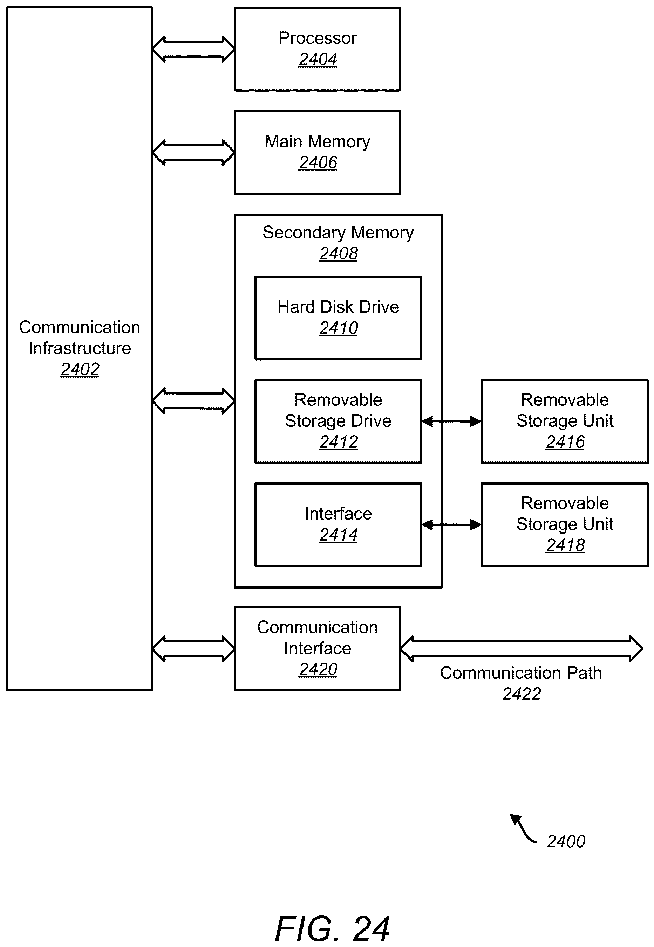

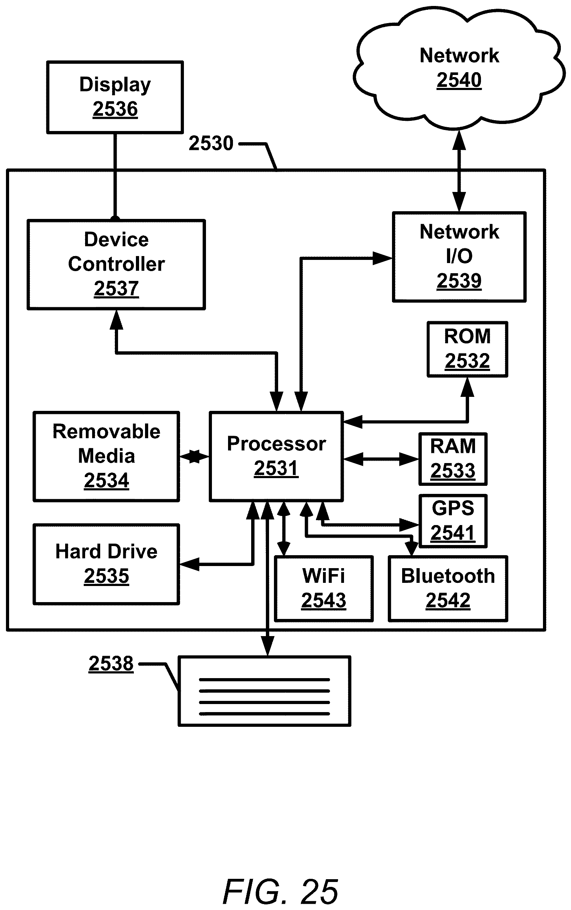

FIG. 21 shows an example method for BVIMD. More specifically, FIG. 21 shows a flowchart of an example method 2100 for BVIMD. One or more steps of the example method 2100 may be performed and/or implemented by an encoder (e.g., encoder 114 of FIG. 1, encoder 200 of FIG. 2), a decoder (e.g., decoder 120 in FIG. 1, decoder 300 in FIG. 3), an example computer system 2400 as described herein with respect to FIG. 24, and/or an example computing device 2530 as described herein with respect to FIG. 25.

At step 2102, a coder (e.g., an encoder and/or a decoder) may select at least one block vector (BV) that may be used to determine a reference block (e.g., reference block 2004 as shown in Fig. 20). As described herein, the BV(s) may be determined by using/applying the TMP/IntraTMP or a portion thereof on the current block (e.g., current block 2002 as shown in Fig. 20). The coder may select one BV (e.g., may select the BV with the lowest template matching cost). The coder may select multiple BVs (e.g., N BVs), for example, by selecting the N BVs having the lowest template matching costs.

At step 2104, the coder may generate a list of candidate IPMs. The list of candidate IPMs may include one or more IPMs from the most probable mode (MPM), non-MPM, and/or the secondary MPM. The list of candidate IPMs may include IPMs that may be determined, for example, if the DIMD process, the TIMD process, or both are performed. The list of candidate IPMs may include other IPMs.

At step 2106, the coder may reorder the list of candidate IPMs. The coder may reorder the list of candidate IPMs, for example, based on the similarities between the reference block and the predicted current block using the respective candidate IPMs, such as based on the cost metrics SAD, SATD, or HAD. A portion of the respective blocks may be used for the similarity calculation, for example, instead of using the entire reference block and/or the predicted current block. A down-sampled version of the reference block and a similarly down-sampled version of the predicted current block may be used to calculate the similarity. A cropped portion of the reference block and a similarly cropped portion of the predicted current block may be used to calculate the similarity. The reference block or the portion thereof used for calculating the similarity and the predicted current block or the portion thereof used for calculating the similarity may be referred to as block-shaped templates. The IPM leading to the highest similarity between the two block-shaped templates may be selected as an intra coding mode for the current block. Step 2102, step 2104, and/or step 2106 may be performed at both the encoder and decoder so that the same intra coding mode may be derived for the current block at the encoding process and decoding process.

The IPM leading to the highest similarity between the block-shaped templates may not be the best intra coding mode for the current block, for example, if multiple BVs are used. The coder may reorder the list of candidate IPMs and/or the BVs, for example, based on the similarities between the reference block and the predicted current block using the respective candidate IPMs and BVs based on the cost metrics. Each entry in the reordered list may include a BV and/or IPM pair. The encoder may select, at step 2108, the BV and IPM pair that may provide the most accurate prediction for the current block, for example, based on the current block. The selection may be indicated using the index of the selected IPM and BV pair in the reordered list.

At step 2110, the encoder may signal an indication of using the BVIMD for the current block in the bitstream as described herein. The decoder may obtain, from the bitstream, the indication. The intra coding mode for the current block may be determined as described herein. The encoder may signal, in the bitstream, the index for the BV and IPM pair, for example, if step 2108 is performed. The decoder may build the ordered list and/or identify the IPM from the list, for example, based on the index parsed from the bitstream.

A single IPM derived for the current block may not provide accurate prediction of the block. As a result, the prediction residuals may have large values and thus require more bits to represent leading to a higher bitrate. To solve this problem, more than one IPM may be used to generate the prediction block for the current block, for example, by combining multiple predicted blocks generated using respective IPMs. To do so, a BVIMD fusion mode may be employed to derive the multiple IPMs.

The BVIMD fusion mode can involve weighting intra predictions from different IPMs based on block-shaped template costs. The SAD cost in Eqn. (25) can be used as the weight function for IPM *p* in the fusion. $SAD \left(RB, {{CB}^{˜}}_{p}\right) = {\sum }_{i = 1}^{M} {\sum }_{j = 1}^{N} \left|RB\left(i, j\right)-{{CB}^{˜}}_{p}\left(i, j\right)\right|$ Each prediction block ${{CB}^{˜}}_{p}$ can be weighted by a fusion weight parameter (*Wₚ*), and the weighted blocks can be blended to generate the fused final prediction block ( $\hat{CB}$) over *n* IPMs as follows: $\hat{CB} = {\sum }_{i = 1}^{n} {W}_{i} ⋅ {{CB}^{˜}}_{i}$ ${W}_{p} = \frac{{\sum }_{i = 1}^{n} {SAD}_{i} - {SAD}_{p}}{\left(n-1\right) ∗ {\sum }_{i = 1}^{n} {SAD}_{i}}$

The multiple IPMs are determined based on one BV. A fused prediction can be calculated with two predictors as *p_{fusíon}* = *w*₀*p*₀ + *w*₁*p*₁: where *p*₀ represents the intra prediction using one derived IPM from the BV, and *p*₁ corresponds to another predictor from another derived IPM from the same BV. The weights *w*₀ and *w*₁ can be determined based on the block-shaped template costs discussed above. Alternatively, or additionally, fixed weights can be employed, such as *w*₀ = 3/4 and *w*₁ = 1/4, to simplify computation while maintaining effective prediction performance. The multiple IPMs may be derived from one BV by selecting the multiple IPMs determined based on the one BV that have the lower block-shaped template costs than non-selected candidate IPMs. Compared with the example shown in Eqn. (23), instead of selecting one IPM that minimizes the SAD cost as shown in Eqn. (23), multiple (e.g., *n*) IPMs can be selected. The multiple (e.g., *n*) IPMs can be selected, for example, by identifying the *n* IPMs having a lower SAD cost than the non-selected IPMs.

The multiple IPMs may be determined, for example, based on multiple BVs. A fused prediction can be calculated with two predictors as *p_{fusion} = w*₀*p*₀ + *w*₁*p*₁, where *p*₀ is the intra prediction from the first BV and *p*₁ is the prediction from the second BV. The weights *w*₀ and *w*₁ may be determined, for example, based on the block-shaped template costs described herein with respect to the fusion using predictions based on one BV. Alternatively or additionally, the weights may be set as fixed values such as *w*₀ = 3/4 and *w*₁ = 1/4. The multiple IPMs may be determined from the multiple BVs, for example, by deriving one or more IPMs for each BV based on the block-shaped template cost. The derived IPMs can be collected, filtered (e.g., for removing duplicates), and sorted (e.g., according to the block-shaped template cost value). The n IPMs having a lower template cost than other IPMs in the derived IPMs can be selected for fusion. The associated BVs from which the selected IPMs are derived can also be recorded.

While the above examples focus on deriving the fusion weights based on SAD costs, other types of costs may also be used, such as the SATD cost, SSE cost, and the HAD cost. The cost metric can be any cost determined based on the difference between the reference block and the predicted current block.

The derivation of the fusion weight parameters, denoted as *wₙ*, may be performed by solving a linear system obtained to determine a linear prediction equation between the template samples of the predictors using derived IPMs and the current block template samples using a Gaussian solver method used in convolutional cross-component model (CCCM). The template shape may be the same as that used in TIMD. For template samples of the predictors using different IPMs block, denoted as *tmpPredictorₙ*(*x, y*) , and the samples of the current block's template, denoted as *tmpCurrBlock*(*x, y*)*,* the linear equation is defined as follows: 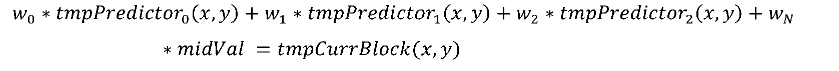 w0 * tmpPredictor0(x, y) + w1 * tmpPredictor1(x, y) + w2 * tmpPredictor2(x, y) + wN * midVal = tmpCurrBlock(x, y) where *midVal* is a global bias for all the samples. For samples using a bit-depth of 10-bits, *midVal =* 512 (2^{*b*-1}, *b = bitdepth*). This model derives the fused prediction block from the N fusion candidates as follows: $fusedBlock = {\sum }_{n = 0}^{N - 1} {w}_{n} ∗ {predBlock}_{n} + {w}_{N} ∗ midValue$ where *fusedBlock* represents samples of the final fused prediction block, and *predBlockₙ* represent the n-th of the N predictor blocks.

The fusion candidates (IPMs) may be selected based on the fusion weights. A threshold value of the cost metric can be determined and an IPM whose cost metric is below the threshold can be selected for fusion. In other words, the i-th predictor may be excluded from the fusion process. The i-th predictor may be excluded from the fusion process, for example, if the cost metric of the i-th predictor (or the corresponding IPM), *SAD*ᵢ, exceeds the threshold. The threshold can be determined by a scalar value *k* multiplied by the lowest template cost of the reference predictor, denoted as *SAD*₀. Accordingly, if *k* * *SAD*₀ *< SAD*ᵢ, the i-th predictor (or the corresponding IPM) is not selected.

The fusion mode may need to be signaled in the bitstream. the fusion mode may need to be signaled in the bitstream, for example, if the BVIMD fusion mode is utilized by the encoder to derive the intra mode for the current block. An indication (e.g., a flag) for the fusion mode of BVIMD may be explicitly signaled in the bitstream. Alternatively, or additionally, the signaling of the fusion mode can be made implicitly by enabling the fusion mode whenever the BVIMD mode is utilized.

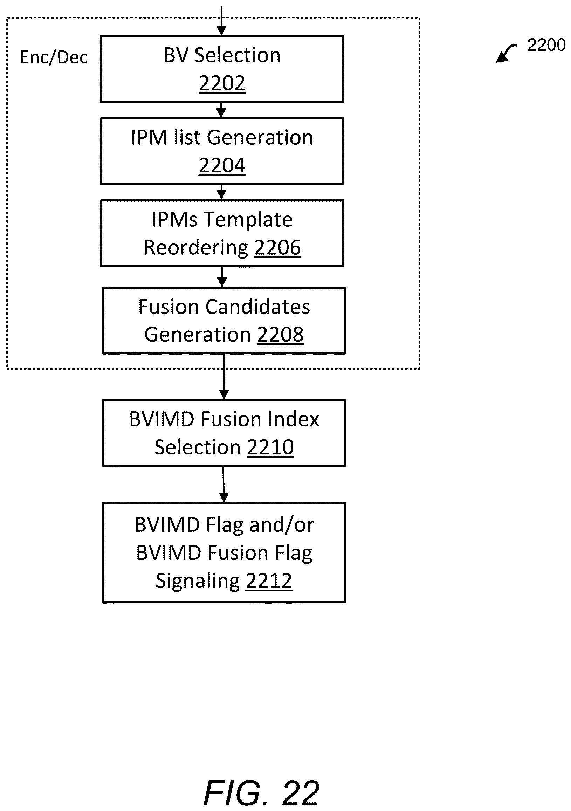

FIG. 22 shows an example method for a BVIMD fusion mode. More specifically, FIG. 22 shows a flowchart of an example method 2200 for a BVIMD fusion mode. One or more steps of the example method 2200may be performed and/or implemented by an encoder (e.g., encoder 114 of FIG. 1, encoder 200 of FIG. 2), a decoder (e.g., decoder 120 of FIG. 1, decoder 300 of FIG. 3), an example computer system 2400 as described herein with respect to FIG. 24, and/or an example computing device 2530 as described herein with respect to FIG. 25.

At step 2202, a coder (e.g., an encoder and/or a decoder) may select BV(s) that may be used to determine the reference block (e.g., reference block 2004 in FIG. 20). As described herein, the coder may determine the BV(s) by using/applying the TMP/IntraTMP, or a portion thereof, to the current block (e.g., current block 2002 in FIG. 20). The coder may select one BV. For example, the coder may select the BV with the lowest template matching cost. The coder may select multiple BVs (e.g., N BVs). For example, the coder may select the N BVs that may have the lowest template matching costs.

At step 2204, the coder may generate a list of candidate IPMs. The list of candidate IPMs may include one or more IPMs from the most probable mode (MPM), non-MPM, and/or the secondary MPM. The list of candidate IPMs may further include IPMs determined during the DIMD process, the TIMD process, or both. The list of candidate IPMs may further include other IPMs.

At step 2206, the coder may reorder the list of candidate IPMs. The coder may reorder the list of candidate IPMs, for example, based on the similarities between the reference block and the predicted current block using the respective candidate IPMs, such as according to the cost metrics (e.g., SAD, SATD, SSE, or HAD). A portion of the respective blocks may be used for the similarity calculation, for example, instead of using the entire reference block and/or the predicted current block. A down-sampled version of the reference block and/or a similarly down-sampled version of the predicted current block may be used to calculate the similarity. A cropped portion of the reference block and/or a similarly cropped portion of the predicted current block may be used to calculate the similarity. The reference block, or a portion thereof, used for calculating the similarity and/or the predicted current block, or a portion thereof, used for calculating the similarity may be referred to as block-shaped templates.

At step 2208, the coder may generate fusion candidates. The fusion candidates may comprise the candidate IPMs from which the predicted blocks of the current block may be generated for fusion. The fusion candidates may comprise the predicted blocks generated by using/applying the candidate IPMs to the reference block (s) pointed to by the one or more BVs determined at step 2202. The coder may select the fusion candidates, for example, by selecting the two or more IPMs from the list of candidate IPMs that may lead to the highest similarity (e.g., lowest costs) between the two block-shaped templates. The coder may select the fusion candidates, for example, based on the reference block pointed to by one BV. The coder may select the fusion candidates, for example, based on reference blocks pointed to by multiple BVs. Step 2202, step 2204, step 2206, and step 2208 may be performed at both the encoder and decoder so that the same intra coding mode may be derived for the current block at the encoding process and decoding process.

Multiple fusion prediction blocks may be generated using different sets of fusion candidates and an index may be used to identify an individual fusion prediction block and its associated set of fusion candidate. The BVIMD fusion prediction block for the first index can be derived from the two or more fusion candidate intra prediction modes (IPMs) that yield the highest similarities (i.e., the lowest costs) between the block-shaped templates. Similarly, the BVIMD fusion prediction block for the second index is generated using the next two or more fusion candidate IPMs that achieve the next highest similarities (lowest costs among the remaining fusion candidate IPMs) between the block-shaped templates. In such instances, at step 2210, the BVIMD fusion index may be selected by the encoder. The BVIMD fusion index can be set to a default index which always selects the first fusion prediction block. Additionally or alternatively, the encoder can select the optimal fusion prediction block that is determined through, for example, an RDO process.

At step 2212, the encoder may signal, in the bitstream, an indication that the BVIMD fusion mode is to be used for the current block. As described herein, the coder may signal, in the bitstream, the BVIMD fusion mode. The coder may signal, in the bitstream, the BVIMD fusion mode, for example, explicitly via an indication (e.g., a flag). The decoder may obtain, from the bitstream, the indication. The decoder may determine the intra coding mode for the current block as described herein. No additional indication other than the indication for the BVIMD mode may be added to the bitstream, for example, if the BVIMD fusion mode is signaled implicitly. The decoder may perform the BVIMD fusion mode to derive the intra coding mode of the current block. The decoder may perform the BVIMD fusion mode to derive the intra coding mode of the current block, for example, based on obtaining the indication for the BVIMD mode. The encoder may signal the fusion index in the bitstream, the fusion index, for example, if step 2210 is performed and the fusion index is not the default index. The decoder may obtain the fusion index to identify the right set of fusion candidates for decoding.

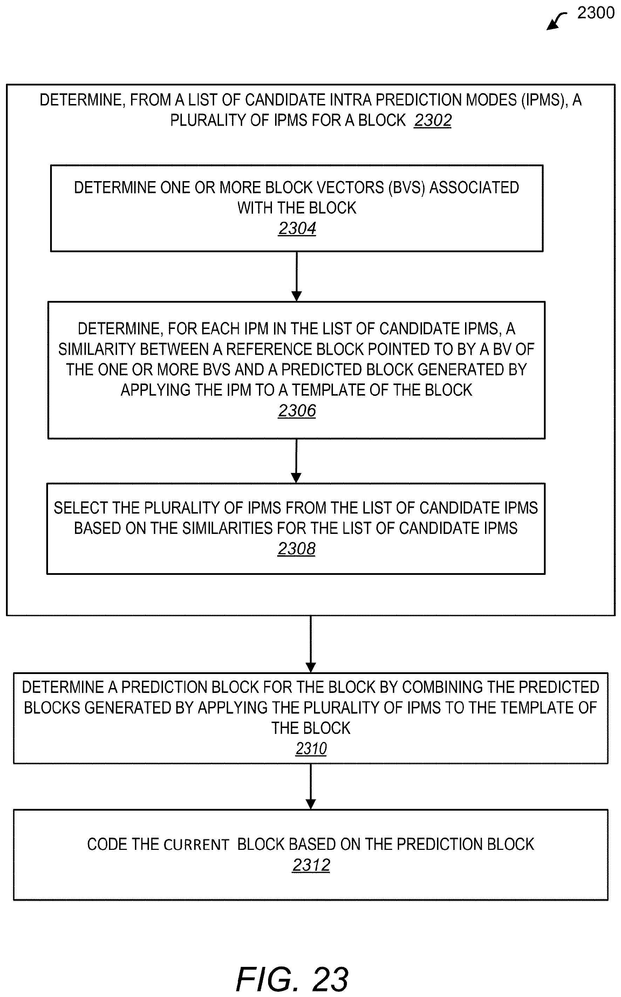

FIG. 23 shows an example method for coding a block. More specifically, FIG. 23 shows a flowchart of an example method 2300 for coding a block based on a BVIMD fusion mode. One or more steps of the example method 2300 may be performed and/or implemented by an encoder (e.g., encoder 114 of FIG. 1, encoder 200 of FIG. 2) a decoder (e.g., decoder 120 of FIG. 1, decoder 300 of FIG. 3), an example computer system 2400 as described herein with respect to FIG. 24, and/or an example computing device 2530 as described herein with respect to FIG. 25.

At step 2302, which includes step 2304, step 2306, and step 2308, a coder (e.g., an encoder or a decoder) may determine, from a list of candidate intra prediction modes (IPMs), a plurality of IPMs for a block. At step 2304, the coder may determine one or more block vectors (BVs) associated with the block. The coder may determine the one or more BVs, for example, based on using/applying a template matching prediction (TMP) on the block to determine a list of candidate BVs. The coder may determine the one or more BVs, for example, based on selecting the BV from the list of candidate BVs. The list of candidate BVs may include a merge BV predictor (BVP), a sparse BVP, and/or a refined BVP. The one or more BVs may have lower TMP costs than other BVs in the list of candidate BVs.

At step 2306, the coder may determine, for each IPM in the list of candidate IPMs, a similarity between a reference block pointed to by a BV of the one or more BVs and a predicted block generated by using/applying the IPM to a template of the block. The list of candidate IPMs may comprise an IPM from a list of most probable modes (MPMs) and/or an IPM from a list of non-MPMs. The list of candidate IPMs may comprise an IPM determined through template-based intra mode derivation (TIMD) and/or decoder-side intra mode derivation (DIMD).

The coder may determine the similarity between the reference block and the predicted block. The coder may determine the similarity between the reference block and the predicted block, for example, by a cost metric measuring a difference between the reference block and the predicted block. The cost metric may be a sum of absolute differences (SAD) cost, a sum of absolute transformed differences (SATD) cost, a sum of squared error (SSE), or a Hadamard transform (HAD) cost. The similarity between the reference block and the predicted block may be calculated based on a portion of the reference block and/or a portion of the block, for example, to reduce the computational complexity. The portion of the reference block may be generated by down-sampling the reference block, and the portion of the block may be generated by down-sampling the block. Additionally or alternatively, the portion of the reference block may be generated by cropping the reference block, and the portion of the block may be generated by cropping the block.

At step 2308, the coder may select the plurality of IPMs from the list of candidate IPMs. the coder may select the plurality of IPMs from the list of candidate IPMs, for example, based on the similarities for the list of candidate IPMs. The selected plurality of IPMs may have higher similarities than other IPMs in the list of candidate IPMs. The coder may determine that the IPM selected from the list of candidate IPMs is the intra coding mode for the block. The coder may determine a threshold cost value and/or may select the plurality of IPMs. The coder may determine a threshold cost value and/or may select the plurality of IPMs, for example, by including IPMs having a cost metric lower than the threshold cost value. The coder may determine a threshold cost value and/or may select the plurality of IPMs by including IPMs having a cost metric lower than the threshold cost value, for example, if the coder determines the similarity by a cost metric. The coder may determine the threshold cost value to be proportional to a lowest cost metric value among the list of candidate IPMs.

Step 2302 may be performed, for example, based on determining that a condition is satisfied. For example, the condition may be based on one or more of a size of the current block, a coding mode of the current block, a quantization parameter of the current block, and/or a quantization parameter of a slice comprising the current block.

At step 2310, the coder may determine a prediction block for the block. The coder may determine a prediction block for the block, for example, by combining the predicted blocks generated by using/applying the plurality of IPMs to the template of the block. The coder may determine a weight for each of the predicted blocks and/or may combine the predicted blocks, for example, based on the respective weights. The coder may determine the weight of a predicted block, for example, based on the similarity for an IPM used to generate the predicted block. The coder may determine the weight of a predicted block, for example, based on a Gaussian solver fusion model. The weight of a predicted block may be a predetermined value. A first weight of a first predicted block with a first similarity may be higher than a second weight of a second predicted block with a second similarity. For example, the first similarity may be higher than the second similarity.

At step 2312, the coder may code the block, for example, based on the prediction block. An encoder may encode the block, for example, by subtracting the prediction block from the block to determine a residual (e.g., residual block). The encoder may encode the residual and/or may signal the residual in the bitstream. A decoder may reconstruct the block, for example, based on a residual (e.g., residual block) obtained from a bitstream and/or the prediction block. The current block may be determined by adding the residual to the prediction block.

The encoder may signal, in a bitstream, an indication of a block vector-based intra mode derivation (BVIMD) fusion mode for the block. The indication may be generated, for example, based on the prediction block determined by combining the predicted blocks. The decoder may obtain, from a bitstream, the indication of the BVIMD fusion mode. The decoder may determine the plurality of IPMs, for example, based on the indication. The decoder may determine the plurality of IPMs, for example, based on obtaining, from a bitstream, an indication of a block vector-based intra mode derivation (BVIMD) fusion mode for the block.

Although BV-based intra mode derivation is described herein, a motion vector (MV) for the inter prediction may be used to derive the intra coding mode of a block. The MV may be obtained from a merge list, an AMVP, and so on that may be associated with the current block. The reference block (e.g., in a reference picture) pointed to by the MV may be used in place of the current block to determine the IPM in a similar way to the reference block pointed to by a BV as described herein. The signaling of the MV-based intra mode derivation may be performed so that decoder may be able to perform the same process to derive the intra mode. An indication of the MV-based mode derivation may be signaled. Additional information about the merge MV can be signaled, for example, if a merge MV is used in the mode derivation. The decoder may derive the intra coding mode for the current block using the MV and perform the intra prediction for the current block, for example, based on the signaled information.

Examples of the present disclosure may be implemented in hardware using analog and/or digital circuits, in software, through the execution of instructions by one or more general purpose or special-purpose processors, or as a combination of hardware and software. Consequently, features of the present disclosure may be implemented in the environment of a computer system or other processing system. An example of such a computer system 2400 is shown in FIG. 24. FIG. 24 shows an example computer system in which examples of the present disclosure may be implemented. For example, the example computer system 2400 shown in FIG. 24 may implement one or more of the methods described herein. For example, various devices and/or systems described herein (e.g., in FIGS. 1-23) may be implemented in the form of one or more computer systems 2400. Furthermore, each of the steps of the flowcharts depicted in this disclosure may be implemented on one or more computer systems 2400. If/when more than one computer system 2400 is used to implement features of the present disclosure, the computer systems 2400 may be interconnected by one or more networks to form a cluster of computer systems that may act as a single pool of seamless resources. The interconnected computer systems 2400 may form a "cloud" of computers.

The computer system 2400 may comprise one or more processors, such as a processor 2404. The processor 2404 may be a special purpose processor, a general purpose processor, a microprocessor, and/or a digital signal processor. The processor 2404 may be connected to a communication infrastructure 2402 (e.g., a bus or network). The computer system 2400 may also comprise a main memory 2606 (e.g., a random access memory (RAM)) and/or a secondary memory 2408.

The secondary memory 2408 may comprise a hard disk drive 2410 and/or a removable storage drive 2412 (e.g., a magnetic tape drive, an optical disk drive, and/or the like). The removable storage drive 2412 may read from and/or write to a removable storage unit 2416. The removable storage unit 2416 may comprise a magnetic tape, an optical disk, and/or the like. The removable storage unit 2416 may be read by and/or may be written to the removable storage drive 2412. The removable storage unit 2416 may comprise a computer usable storage medium having stored therein computer software and/or data.

The secondary memory 2408 may comprise other similar means for allowing computer programs or other instructions to be loaded into the computer system 2400. Such means may include a removable storage unit 2418 and/or an interface 2414. Examples of such means may comprise a program cartridge and/or a cartridge interface (such as in video game devices), a removable memory chip (such as an erasable programmable read-only memory (EPROM) or a programmable read-only memory (PROM)) and associated socket, a thumb drive and USB port, and/or other removable storage units 2418 and interfaces 2414 which may allow software and/or data to be transferred from the removable storage unit 2418 to the computer system 2400.

The computer system 2400 may also comprise a communications interface 2420. The communications interface 2420 may allow software and data to be transferred between the computer system 2400 and external devices. Examples of the communications interface 2420 may include a modem, a network interface (e.g., an Ethernet card), a communications port, etc. Software and/or data transferred via the communications interface 2420 may be in the form of signals which may be electronic, electromagnetic, optical, and/or other signals capable of being received by the communications interface 2420. The signals may be provided to the communications interface 2420 via a communications path 2422. The communications path 2422 may carry signals and may be implemented using wire or cable, fiber optics, a phone line, a cellular phone link, an RF link, and/or any other communications channel(s).

The computer system 2400 may also comprise one or more sensor(s) 2424. The sensor(s) 2424 may measure or detect one or more physical quantities and convert the measured or detected physical quantities into an electrical signal in digital and/or analog form. For example, the sensor(s) 2424 may include an eye tracking sensor to track the eye movement of a user. A display of a point cloud may be updated, for example, based on the eye movement of a user. The sensor(s) 2424 may include a head tracking sensor to track the head movement of a user. A display of a point cloud may be updated, for example, based on the head movement of a user. The sensor(s) 2424 may include a camera sensor for taking photographs and/or a 3D scanning device (e.g., a laser scanning device, a structured light scanning device, and/or a modulated light scanning device). The 3D scanning devices may determine geometry information by moving one or more laser heads, structured light, and/or modulated light cameras relative to the object or scene being scanned. The geometry information may be used to construct a point cloud.

A computer program medium and/or a computer readable medium may be used to refer to tangible storage media, such as removable storage units 2416 and 2418 or a hard disk installed in the hard disk drive 2410. The computer program products may be means for providing software to the computer system 2400. The computer programs (which may also be called computer control logic) may be stored in the main memory 2406 and/or the secondary memory 2408. The computer programs may be received via the communications interface 2420. Such computer programs, when executed, may enable the computer system 2400 to implement the present disclosure as discussed herein. In particular, the computer programs, when executed, may enable the processor 2404 to implement the processes of the present disclosure, such as any of the methods described herein. Accordingly, such computer programs may represent controllers of the computer system 2400.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 25 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2530 may include one or more processors 2531, which may execute instructions stored in the random-access memory (RAM) 2533, the removable media 2534 (such as a Universal Serial Bus (USB) drive, compact disk (CD) or digital versatile disk (DVD), or floppy disk drive), or any other desired storage medium. Instructions may also be stored in an attached (or internal) hard drive 2535. The computing device 2530 may also include a security processor (not shown), which may execute instructions of one or more computer programs to monitor the processes executing on the processor 2531 and any process that requests access to any hardware and/or software components of the computing device 2530 (e.g., ROM 2532, RAM 2533, the removable media 2534, the hard drive 2535, the device controller 2537, a network interface 2539, a GPS 2541, a Bluetooth interface 2542, a WiFi interface 2543, etc.). The computing device 2530 may include one or more output devices, such as the display 2536 (e.g., a screen, a display device, a monitor, a television, etc.), and may include one or more output device controllers 2537, such as a video processor. There may also be one or more user input devices 2527, such as a remote control, keyboard, mouse, touch screen, microphone, etc. The computing device 2530 may also include one or more network interfaces, such as a network interface 2539, which may be a wired interface, a wireless interface, or a combination of the two. The network interface 2539 may provide an interface for the computing device 2530 to communicate with a network 2540 (e.g., a RAN, or any other network). The network interface 2539 may include a modem (e.g., a cable modem), and the external network 2540 may include communication links, an external network, an in-home network, a provider's wireless, coaxial, fiber, or hybrid fiber/coaxial distribution system (e.g., a DOCSIS network), or any other desired network. Additionally, the computing device 2530 may include a location-detecting device, such as a global positioning system (GPS) microprocessor 2541, which may be configured to receive and process global positioning signals and determine, with possible assistance from an external server and antenna, a geographic position of the computing device 2530.

The example in FIG. 25 may be a hardware configuration, although the components shown may be implemented as software as well. Modifications may be made to add, remove, combine, divide, etc. components of the computing device 2530 as desired. Additionally, the components may be implemented using basic computing devices and components, and the same components (e.g., processor 2531, ROM storage 2532, display 2536, etc.) may be used to implement any of the other computing devices and components described herein. For example, the various components described herein may be implemented using computing devices having components such as a processor executing computer-executable instructions stored on a computer-readable medium, as shown in FIG. 25. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: determining, by a computing device, one or more block vectors (BVs) associated with a block of content.

Clause 2. The method of clause 1, further comprising, for each intra prediction mode (IPM) in a list of candidate IPMs, determining a similarity between a reference block associated with a BV of the one or more BVs and a predicted block generated by applying the IPM to a template of the block of content.

Clause 3. The method of any one of clauses 1 to 2, further comprising selecting a plurality of IPMs, from the list of candidate IPMs, based on the similarities associated with the list of candidate IPMs.

Clause 4. The method of any one of clauses 1 to 3, further comprising combining predicted blocks, generated by applying the plurality of IPMs to the block of content, to determine a prediction block for the block.

Clause 5. The method of any one of clauses 1 to 4, further comprising coding the block based on the prediction block.

Clause 6. The method of any one of clauses 1 to 5, further comprising receiving, from a bitstream, an indication of a fusion mode associated with the block, wherein the plurality of IPMs is determined based on the indication.

Clause 7. The method of any one of clauses 1 to 6, further comprising causing output of the coded block for display on a display device.

Clause 8. The method of any one of clauses 1 to 7, wherein the combining the predicted blocks further comprises: determining a respective weight for each of the predicted blocks.

Clause 9. The method of any one of clauses 1 to 8, wherein the combining the predicted blocks further comprises: combining the predicted blocks based on the respective weight.

Clause 10. The method of any one of clauses 1 to 9, wherein the plurality of IPMs have higher similarities than other IPMs in the list of candidate IPMs.

Clause 11. The method of any one of clauses 1 to 10, wherein the determining the similarity between the reference block and the predicted block comprises: determining a cost metric for measuring a difference between the reference block and the predicted block.

Clause 12. The method of any one of clauses 1 to 11, wherein the similarity between the reference block and the prediction block comprises a cost metric associated with the reference block and the prediction block, and wherein the cost metric comprises one of:
a sum of absolute differences (SAD) cost; a sum of absolute transformed differences (SATD) cost; a sum of squared error (SSE); or a Hadamard transform (HAD) cost.

Clause 13. The method of any one of clauses 1 to 12, wherein the list of candidate IPMs comprises an IPM from a list of most probable modes (MPMs) or an IPM from a list of non-MPMs.

Clause 14. The method of any one of clauses 1 to 13, wherein the list of candidate IPMs comprises an IPM determined through template-based intra mode derivation (TIMD) or decoder-side intra mode derivation (DIMD).

Clause 15. The method of any one of clauses 1 to 14, wherein the determining the one or more BVs comprises: applying a template matching prediction (TMP) on the block to determine a list of candidate BVs.

Clause 16. The method of any one of clauses 1 to 15, wherein the determining the one or more BVs comprises: selecting the BV from the list of candidate BVs.

Clause 17. The method of any one of clauses 1 to 16, wherein the similarity between the reference block and the predicted block is determined based on a portion of the reference block and a portion of the block.

Clause 18. The method of any one of clauses 1 to 17, wherein the portion of the reference block is based on down-sampling the reference block, and wherein the portion of the block is based on down-sampling the block.

Clause 19. The method of any one of clauses 1 to 18, further comprising determining that a condition is satisfied, and wherein the selecting the plurality of IPMs is performed based on the determining that the condition is satisfied.

Clause 20. A computing device comprising: one or more processors; and memory storing instructions that, when executed by the one or more processors, cause the computing device to perform the method of any one of clauses 1 to 19.

Clause 21. A system comprising: a first computing device configured to perform the method of any one of clauses 1 to 19; and a second computing device configured to encode or decode the block.

Clause 22. A computer-readable medium storing instructions that, when executed, cause performance of the method of any one of clauses 1 to 19.

Clause 23. A method comprising: receiving, by a computing device and from a bitstream, a residual associated with a block of content.

Clause 24. The method of clause 23, determining one or more block vectors (BVs) associated with the block of content.

Clause 25. The method of any one of clauses 23 to 24, further comprising, for each intra prediction mode (IPM) in a list of IPMs, determining a similarity between a reference block associated with a BV of the one or more BVs and a predicted block generated by applying the IPM to the block of content.

Clause 26. The method of any one of clauses 23 to 25, further comprising selecting a plurality of IPMs, from the list of IPMs, based on the determined similarities;

Clause 27. The method of any one of clauses 23 to 26, further comprising combining predicted blocks, generated by applying the plurality of IPMs to the block of content, to determine a prediction block for the block.

Clause 28. The method of any one of clauses 23 to 27, further comprising decoding the block based on the prediction block and the residual.

Clause 29. The method of any one of clauses 23 to 28, wherein the plurality of IPMs is determined, based on obtaining, from a bitstream, an indication of a block vector-based intra mode derivation (BVIMD) for the block.

Clause 30. The method of any one of clauses 23 to 29, wherein the determining the one or more BVs comprises: applying a template matching prediction (TMP) on the block to determine a list of candidate BVs.

Clause 31. The method of any one of clauses 23 to 30, wherein the determining the one or more BVs comprises: selecting the BV from the list of candidate BVs.

Clause 32. The method of any one of clauses 23 to 31, wherein the similarity between the reference block and the predicted block is determined based on a portion of the reference block and a portion of the block, and wherein the portion of the reference block is based on down-sampling the reference block.

Clause 33. The method of any one of clauses 23 to 32, wherein the portion of the block is based on down-sampling the block.

Clause 34. A computing device comprising: one or more processors; and memory storing instructions that, when executed by the one or more processors, cause the computing device to perform the method of any one of clauses 23 to 33.

Clause 35. A system comprising: a first computing device configured to perform the method of any one of clauses 23 to 33; and a second computing device configured to encode the block.

Clause 36. A computer-readable medium storing instructions that, when executed, cause performance of the method of any one of clauses 23 to 33.

Clause 37. A method comprising: determining, by a computing device, one or more block vectors (BVs) associated with a block of content.

Clause 38. The method of clause 37, further comprising, for each intra prediction mode (IPM) in a list of IPMs, determining a similarity between a reference block associated with a BV of the one or more BVs and a predicted block generated by applying the respective IPM to the block of content.

Clause 39. The method of any one of clauses 37 to 38, further comprising selecting a plurality of IPMs, from the list of IPMs, based on the determined similarities.

Clause 40. The method of any one of clauses 37 to 39, further comprising determining a prediction block associated with the block based on combining predicted blocks generated by applying the plurality of IPMs to the block of content.

Clause 41. The method of any one of clauses 37 to 40, further comprising determining, based on subtracting the prediction block from the block, a residual.

Clause 42. The method of any one of clauses 37 to 41, further comprising encoding, in a bitstream, the residual.

Clause 43. The method of any one of clauses 37 to 42, further comprising signaling, in the bitstream, an indication configured to indicate that a fusion mode is used for the block.

Clause 44. The method of any one of clauses 37 to 43, wherein the similarity between the reference block and the predicted block is determined by a cost metric configured to measure a difference between the reference block and the predicted block.

Clause 45. The method of any one of clauses 37 to 44, wherein the determining the one or more BVs comprises: applying a template matching prediction (TMP) on the block to determine a list of candidate BVs.

Clause 46. The method of any one of clauses 37 to 45, wherein the determining the one or more BVs comprises: selecting the BV from the list of candidate BVs.

Clause 47. The method of any one of clauses 37 to 46, wherein the similarity between the reference block and the predicted block is determined based on a portion of the reference block and a portion of the block.

Clause 48. The method of any one of clauses 37 to 47, wherein the portion of the reference block is based on down-sampling the reference block, and wherein the portion of the block is based on down-sampling the block.

Clause 49. A computing device comprising: one or more processors; and memory storing instructions that, when executed by the one or more processors, cause the computing device to perform the method of any one of clauses 37 to 48.

Clause 50. A system comprising: a first computing device configured to perform the method of any one of clauses 37 to 48; and a second computing device configured to decode the block.

Clause 51. A computer-readable medium storing instructions that, when executed, cause performance of the method of any one of clauses 37 to 48.

Clause 52. A method comprising: determining, from a list of candidate intra prediction modes (IPMs), a plurality of IPMs for a block.

Clause 53. The method of clause 52, further comprising determining one or more block vectors (BVs) associated with the block.

Clause 54. The method of any one of clauses 52 to 53, further comprising determining, for each IPM in the list of candidate IPMs, a similarity between a reference block pointed to by a BV of the one or more BVs and a predicted block generated by applying the IPM to a template of the block.

Clause 55. The method of any one of clauses 52 to 54, further comprising selecting the plurality of IPMs from the list of candidate IPMs based on the similarities for the list of candidate IPMs.

Clause 56. The method of any one of clauses 52 to 55, further comprising determining a prediction block for the block by combining the predicted blocks generated by applying the plurality of IPMs to the template of the block.

Clause 57. The method of any one of clauses 52 to 56, further comprising coding the block based on the prediction block.

Clause 58. The method of any one of clauses 52 to 57, wherein the combining predicted blocks generated based on the plurality of IPMs comprises: determining a weight for each of the predicted blocks.

Clause 59. The method of any one of clauses 52 to 58, wherein the combining predicted blocks generated based on the plurality of IPMs comprises: combining the predicted blocks according to the respective weights.

Clause 60. The method of any one of clauses 52 to 59, wherein the weight of a predicted block is determined based on the similarity for an IPM used to generate the predicted block.

Clause 61. The method of any one of clauses 52 to 60, wherein the weight of a predicted block is determined according to a Gaussian solver fusion model.

Clause 62. The method of any one of clauses 52 to 61, wherein the weight of a predicted block is a predetermined value.

Clause 63. The method of any one of clauses 52 to 62, wherein a first weight of a first predicted block with a first similarity is higher than a second weight of a second predicted block with a second similarity, wherein the first similarity is higher than the second similarity.

Clause 64. The method of any one of clauses 52 to 63, wherein the selected plurality of IPMs have higher similarities than other IPMs in the list of candidate IPMs.

Clause 65. The method of any one of clauses 52 to 64, wherein the similarity between the reference block and the predicted block is determined by a cost metric measuring a difference between the reference block and the predicted block.

Clause 66. The method of any one of clauses 52 to 65, wherein the selecting the plurality of IPMs from the list of candidate IPMs based on the similarities for the list of candidate IPMs comprises: determining a threshold cost value.

Clause 67. The method of any one of clauses 52 to 66, wherein the selecting the plurality of IPMs from the list of candidate IPMs based on the similarities for the list of candidate IPMs comprises: selecting the plurality of IPMs by including IPMs having a cost metric lower than the threshold cost value.

Clause 68. The method of any one of clauses 52 to 67, wherein the threshold cost value is determined to be proportional to a lowest cost metric value among the list of candidate IPMs.

Clause 69. The method of any one of clauses 52 to 68, wherein the cost metric is a sum of absolute differences (SAD) cost, a sum of absolute transformed differences (SATD) cost, a sum of squared error (SSE), or a Hadamard transform (HAD) cost.

Clause 70. The method of any one of clauses 52 to 69, wherein the list of candidate IPMs comprises an IPM from a list of most probable modes (MPMs) or an IPM from a list of non-MPMs.

Clause 71. The method of any one of clauses 52 to 70, wherein the list of candidate IPMs comprises an IPM determined through template-based intra mode derivation (TIMD) or decoder-side intra mode derivation (DIMD).

Clause 72. The method of any one of clauses 52 to 71, wherein the determining the one or more BVs comprises: applying a template matching prediction (TMP) on the block to determine a list of candidate BVs.

Clause 73. The method of any one of clauses 52 to 72, wherein the determining the one or more BVs comprises: selecting the BV from the list of candidate BVs.

Clause 74. The method of any one of clauses 52 to 73, wherein the list of candidate BVs comprises a merge BV predictor (BVP), a sparse BVP, or a refined BVP.

Clause 75. The method of any one of clauses 52 to 74, wherein the one or more BVs have lower TMP costs than other BVs in the list of candidate BVs.

Clause 76. The method of any one of clauses 52 to 75, wherein the similarity between the reference block and the predicted block is calculated based on a portion of the reference block and a portion of the block.

Clause 77. The method of any one of clauses 52 to 76, wherein the portion of the reference block is generated by down-sampling the reference block, and the portion of the block is generated by down-sampling the block.

Clause 78. The method of any one of clauses 52 to 77, wherein the portion of the reference block is generated by cropping the reference block, and the portion of the block is generated by cropping the block.

Clause 79. The method of any one of clauses 52 to 78, further comprising: determining that a condition is satisfied, and wherein the determining the plurality of IPMs is performed based on determining that the condition is satisfied.

Clause 80. The method of any one of clauses 52 to 79, wherein the condition is based on one or more of a size of the current block, a coding mode of the current block, a quantization parameter of the current block, or a quantization parameter of a slice comprising the current block.

Clause 81. The method of any one of clauses 52 to 80, further comprising: signaling, in a bitstream, an indication of a block vector-based intra mode derivation (BVIMD) fusion mode for the block.

Clause 82. The method of any one of clauses 52 to 81, wherein the indication is generated based on the prediction block determined based on combining the predicted blocks.

Clause 83. The method of any one of clauses 52 to 82, further comprising: obtaining, from a bitstream, an indication of a block vector-based intra mode derivation (BVIMD) fusion mode for the block.

Clause 84. The method of any one of clauses 52 to 83, wherein the determining the plurality of IPMs is performed based on the indication.

Clause 85. The method of any one of clauses 52 to 84, wherein the determining the plurality of IPMs is performed based on obtaining, from a bitstream, an indication of a block vector-based intra mode derivation (BVIMD) for the block.

Clause 86. A computing device comprising: one or more processors; and memory storing instructions that, when executed by the one or more processors, cause the computing device to perform the method of any one of clauses 52 to 85.

Clause 87. A system comprising: a first computing device configured to perform the method of any one of clauses 52 to 85; and a second computing device configured to encode or decode the block.

Clause 88. A computer-readable medium storing instructions that, when executed, cause performance of the method of any one of clauses 52 to 80.

A computing device may perform a method comprising multiple operations. The computing device may comprise an encoder or a decoder. The computing device may determine one or more block vectors (BVs) associated with a block of content. The computing device may determine, for each intra prediction mode (IPM) in a list of candidate IPMs, a similarity between a reference block associated with a BV of the one or more BVs and a predicted block generated by using/applying the IPM to a template of the block of content. The computing device may select a plurality of IPMs, from the list of candidate IPMs, for example, based on the similarities associated with the list of candidate IPMs. The computing device may combine predicted blocks, generated by using/applying the plurality of IPMs to the block of content, to determine a prediction block for the block. The computing device may code (e.g., encode or decode) the block, for example, based on the prediction block. The computing device (e.g., the decoder) may receive, from a bitstream, an indication of a fusion mode associated with the block. For example, the plurality of IPMs may be determined based on the indication. The computing device may cause output of the coded block for display on a display device.

The computing device may combine the predicted blocks, for example, based on determining a respective weight for each of the predicted blocks. The computing device may combine the predicted blocks, for example, based on combining the predicted blocks based on the respective weight. For example, the plurality of IPMs may have higher similarities than other IPMs in the list of candidate IPMs. The computing device may determine the similarity between the reference block and the predicted block comprises, for example, based on determining a cost metric for measuring a difference between the reference block and the predicted block. The similarity between the reference block and the prediction block may comprise a cost metric associated with the reference block and the prediction block. The cost metric may comprise one of: a sum of absolute differences (SAD) cost; a sum of absolute transformed differences (SATD) cost; a sum of squared error (SSE); or a Hadamard transform (HAD) cost. The list of candidate IPMs may comprise an IPM from a list of most probable modes (MPMs) or an IPM from a list of non-MPMs. The list of candidate IPMs may comprise an IPM determined through template-based intra mode derivation (TIMD) or decoder-side intra mode derivation (DIMD). The computing device may determine the one or more BVs comprises, for example, based on using/applying a template matching prediction (TMP) on the block to determine a list of candidate BVs. The computing device may determine the one or more BVs comprises, for example, based on selecting the BV from the list of candidate BVs. The similarity between the reference block and the predicted block may be determined, for example, based on a portion of the reference block and a portion of the block. The portion of the reference block may be based on down-sampling the reference block. The portion of the block may be based on down-sampling the block. The computing device may determine that a condition is satisfied. The computing device may select the plurality of IPMs, for example, if the computing device determines that the condition is satisfied. The computing device may comprise one or more processors and memory, storing instructions that, when executed by the one or more processors, perform the method described herein. A system may comprise the computing device configured to perform the described method, additional operations, and/or include additional elements; and a second computing device configured to encode or decode the block. A computer-readable medium may store instructions that, when executed, cause performance of the described method, additional operations, and/or include additional elements.

A computing device may perform a method comprising multiple operations. The computing device may comprise a decoder. The computing device may receive a residual associated with a block of content, for example, from a bitstream. The computing device may determine one or more block vectors (BVs) associated with the block of content. The computing device may determine, for each intra prediction mode (IPM) in a list of IPMs, a similarity between a reference block associated with a BV of the one or more BVs and a predicted block generated by using/applying the IPM to the block of content. The computing device may select a plurality of IPMs, from the list of IPMs, for example, based on the determined similarities. The computing device may combine predicted blocks, generated by using/applying the plurality of IPMs to the block of content, to determine a prediction block for the block. The computing device may decode the block, for example, based on the prediction block and the residual. The computing device may determine the plurality of IPMs, for example, based on obtaining, from a bitstream, an indication of a block vector-based intra mode derivation (BVIMD) for the block. The computing device may determine the one or more BVs, for example, based on using/applying a template matching prediction (TMP) on the block to determine a list of candidate BVs. The computing device may determine the one or more BVs, for example, based on selecting the BV from the list of candidate BVs. The similarity between the reference block and the predicted block may be determined, for example, based on a portion of the reference block and a portion of the block. The portion of the reference block may be based on down-sampling the reference block. The portion of the block may be based on down-sampling the block. The computing device may comprise one or more processors and memory, storing instructions that, when executed by the one or more processors, perform the method described herein. A system may comprise the computing device configured to perform the described method, additional operations, and/or include additional elements; and a second computing device configured to encode the block. A computer-readable medium may store instructions that, when executed, cause performance of the described method, additional operations, and/or include additional elements.

A computing device may perform a method comprising multiple operations. The computing device may comprise an encoder. The computing device may determine one or more block vectors (BVs) associated with a block of content. The computing device may determine, for each intra prediction mode (IPM) in a list of IPMs, a similarity between a reference block associated with a BV of the one or more BVs and a predicted block generated by using/applying the respective IPM to the block of content. The computing device may select a plurality of IPMs, from the list of IPMs, based on the determined similarities. The computing device may determine a prediction block associated with the block, for example, based on combining predicted blocks generated by applying the plurality of IPMs to the block of content. The computing device may determine a residual, for example, based on subtracting the prediction block from the block. The computing device may encode, in a bitstream, the residual. The computing device may signal, in the bitstream, an indication configured to indicate that a fusion mode is used for the block. The similarity between the reference block and the predicted block may be determined by a cost metric configured to measure a difference between the reference block and the predicted block. The computing device may determine the one or more BVs comprises, for example, based on using/applying a template matching prediction (TMP) on the block to determine a list of candidate BVs. The computing device may determine the one or more BVs comprises, for example, based on selecting the BV from the list of candidate BVs. The similarity between the reference block and the predicted block may be determined, for example, based on a portion of the reference block and a portion of the block. The portion of the reference block may be based on down-sampling the reference block. The portion of the block may be based on down-sampling the block. The computing device may comprise one or more processors and memory, storing instructions that, when executed by the one or more processors, perform the method described herein. A system may comprise the computing device configured to perform the described method, additional operations, and/or include additional elements; and a second computing device configured to decode the block. A computer-readable medium may store instructions that, when executed, cause performance of the described method, additional operations, and/or include additional elements.

A computing device may perform a method comprising multiple operations. The computing device may comprise an encoder or a decoder. The computing device may determine, from a list of candidate intra prediction modes (IPMs), a plurality of IPMs for a block. The computing device may determine one or more block vectors (BVs) associated with the block. The computing device may determine, for each IPM in the list of candidate IPMs, a similarity between a reference block pointed to by a BV of the one or more BVs and a predicted block generated by using/applying the IPM to a template of the block. The computing device may select the plurality of IPMs from the list of candidate IPMs, for example, based on the similarities for the list of candidate IPMs. The computing device may determine a prediction block for the block by combining the predicted blocks generated by using/applying the plurality of IPMs to the template of the block. The computing device may code the block based on the prediction block. The computing device may combine predicted blocks generated based on the plurality of IPMs, for example, based on determining a weight for each of the predicted blocks. The computing device may combine predicted blocks generated based on the plurality of IPMs, for example, based on combining the predicted blocks according to the respective weights. The computing device may determine the weight of a predicted block, for example, based on the similarity for an IPM used to generate the predicted block. The computing device may determine the weight of a predicted block, for example, based on a Gaussian solver fusion model. The weight of a predicted block may be a predetermined value. A first weight of a first predicted block with a first similarity may be higher than a second weight of a second predicted block with a second similarity. The first similarity may be higher than the second similarity. The selected plurality of IPMs may have higher similarities than other IPMs in the list of candidate IPMs. The similarity between the reference block and the predicted block may be determined by a cost metric measuring a difference between the reference block and the predicted block. The computing device may determine a threshold cost value. The computing device may select the plurality of IPMs by including IPMs having a cost metric lower than the threshold cost value. The threshold cost value may be determined to be proportional to a lowest cost metric value among the list of candidate IPMs. The cost metric may be a sum of absolute differences (SAD) cost, a sum of absolute transformed differences (SATD) cost, a sum of squared error (SSE), or a Hadamard transform (HAD) cost. The list of candidate IPMs may comprise an IPM from a list of most probable modes (MPMs) or an IPM from a list of non-MPMs. The list of candidate IPMs may comprise an IPM determined through template-based intra mode derivation (TIMD) or decoder-side intra mode derivation (DIMD). The computing device may determine the one or more BVs comprises, for example, based on using/applying a template matching prediction (TMP) on the block to determine a list of candidate BVs. The computing device may determine the one or more BVs, for example, based on selecting the BV from the list of candidate BVs. The list of candidate BVs may comprise a merge BV predictor (BVP), a sparse BVP, or a refined BVP. The one or more BVs may have lower TMP costs than other BVs in the list of candidate BVs. The similarity between the reference block and the predicted block may be calculated based on a portion of the reference block and a portion of the block. The portion of the reference block may be generated by down-sampling the reference block. The portion of the block may be generated by down-sampling the block. The portion of the reference block may be generated by cropping the reference block. The portion of the block may be generated by cropping the block. The computing device may determine that a condition is satisfied. The computing device may determine the plurality of IPMs, for example, if the computing device determines that the condition is satisfied. The condition may be based on one or more of a size of the current block, a coding mode of the current block, a quantization parameter of the current block, or a quantization parameter of a slice comprising the current block. The computing device may signal, in a bitstream, an indication of a block vector-based intra mode derivation (BVIMD) fusion mode for the block. The indication may be generated based on the prediction block determined based on combining the predicted blocks. The computing device may obtain, from a bitstream, an indication of a block vector-based intra mode derivation (BVIMD) fusion mode for the block. The computing device may determine the plurality of IPMs, for example, based on the indication. The computing device may determine the plurality of IPMs, for example, based on obtaining, from a bitstream, an indication of a block vector-based intra mode derivation (BVIMD) for the block. The computing device may comprise one or more processors and memory, storing instructions that, when executed by the one or more processors, perform the method described herein. A system may comprise the computing device configured to perform the described method, additional operations, and/or include additional elements; and a second computing device configured to encode or decode the block. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
determining, by a computing device, one or more block vectors (BVs) associated with a block of content;
for each intra prediction mode (IPM) in a list of candidate IPMs:
determining a similarity between a reference block associated with a BV of the one or more BVs and a predicted block generated by applying the IPM to the block of content;
selecting a plurality of IPMs, from the list of candidate IPMs, based on the similarities associated with the list of candidate IPMs;
combining predicted blocks, generated by applying the plurality of IPMs to the block of content, to determine a prediction block for the block; and
coding the block based on the prediction block.

2. The method of claim 1, further comprising:
receiving, from a bitstream, an indication of a fusion mode associated with the block, wherein the plurality of IPMs is determined based on the indication.

3. The method of any one of claims 1 to 2, further comprising:
causing output of the coded block for display on a display device.

4. The method of any one of claims 1 to 3, wherein the combining the predicted blocks further comprises:
determining a respective weight for each of the predicted blocks; and
combining the predicted blocks based on the respective weight.

5. The method of any one of claims any one of claims 1 to 4, wherein the plurality of IPMs have higher similarities than other IPMs in the list of candidate IPMs.

6. The method of any one of claims 1 to 5, wherein the determining the similarity between the reference block and the predicted block comprises:
determining a cost metric for measuring a difference between the reference block and the predicted block.

7. The method of any one of claims 1 to 6, wherein the similarity between the reference block and the prediction block comprises a cost metric associated with the reference block and the prediction block, and wherein the cost metric comprises one of:
a sum of absolute differences (SAD) cost;
a sum of absolute transformed differences (SATD) cost;
a sum of squared error (SSE); or
a Hadamard transform (HAD) cost.

8. The method of any one of claims 1 to 7, wherein the list of candidate IPMs comprises:
an IPM from a list of most probable modes (MPMs); or
an IPM from a list of non-MPMs.

9. The method of any one of claims 1 to 8, wherein the list of candidate IPMs comprises an IPM determined through template-based intra mode derivation (TIMD) or decoder-side intra mode derivation (DIMD).

10. The method of any one of claims 1 to 9, wherein the determining the one or more BVs comprises:
applying a template matching prediction (TMP) on the block to determine a list of candidate BVs; and
selecting the BV from the list of candidate BVs.

11. The method of any one of claims 1 to 10, wherein the similarity between the reference block and the predicted block is determined based on a portion of the reference block and a portion of the block, and wherein the portion of the reference block is based on down-sampling the reference block, and wherein the portion of the block is based on down-sampling the block.

12. The method of any one of claims 1 to 11, further comprising:
determining that a condition is satisfied, and wherein the selecting the plurality of IPMs is performed based on the determining that the condition is satisfied.

13. A computing device comprising:
one or more processors; and
memory storing instructions that, when executed, cause the computing device to perform the method of any one of claims 1-12.

14. A system comprising:
a first computing device configured to perform the method of any one of claims 1-12; and
a second computing device configured to encode or decode the block.

15. A computer-readable medium storing instructions that, when executed, cause performance of the method of any one of claims 1-12.
